# EUROPEAN PATENT APPLICATION

(11) **EP 4 822 570 A1**
(43) Date of publication of application: **14.10.2026**
(21) Application number: 25226551.7
(22) Date of filing: 22.12.2025
(51) Int. Cl.: G06F 21/57, G06F 21/62

(54) **SYSTEM AND METHOD FOR AI OBSERVABILITY, PRIVACY-PRESERVING DISTRIBUTED TRACING, AND COMPLIANCE MONITORING**

(30) Priority: 11.04.2025 US 202519177272
(71) Applicant: UiPath, Inc., New York NY 10017 (US)
(72) Inventor: MAR, Joseph, New York, 10017 (US); Florescu, Dan, New York, 10017 (US); FLORENTINO, Scott, New York, 10017 (US)
(74) Representative: Ungria López, Javier

(57) **Abstract**

A computer-implemented system and method for AI observability, distributed tracing, and privacy-preserving monitoring in Al-driven environments. The system assigns a unique trace identifier to Al-generated requests, enabling seamless tracking across multiple AI processing components. Al logs are enriched with structured metadata, including model execution parameters, inference confidence scores, and processing timestamps, to facilitate trace-to-log correlation. A federated trace management system ensures trace data is distributed across multiple storage locations while enforcing jurisdiction-based compliance regulations. To enhance privacy, the system applies privacy-preserving transformations, such as redaction, tokenization, and homomorphic encryption, preventing exposure of personally identifiable information (Pll) in trace logs. The invention enables scalable Al observability with minimal performance overhead by implementing dynamic trace segmentation policies, selective sampling techniques, and cryptographic trace linking.

## Description

### FIELD

The present invention relates to the field of Al observability, distributed tracing, and privacy-preserving monitoring in Al-driven systems. More specifically, the invention provides methods and systems for tracking, analyzing, and correlating Al-generated traces and logs while ensuring data privacy, regulatory compliance, and secure access control. As Al agents operate in complex, multi-cloud, and edge computing environments, traditional observability tools struggle to capture the non-deterministic decision-making processes, dynamic execution paths, and large-scale data flows inherent to Al models. The aspects of the invention address these challenges by introducing context-aware trace correlation, federated trace storage, structured metadata tagging, and machine learning-based observability analysis. Additionally, aspects of the invention integrate privacy-enhancing techniques such as data redaction, homomorphic encryption, differential privacy, and role-based access control (RBAC) to prevent unauthorized access to Al trace logs. By improving Al traceability, decision transparency, and compliance with regulations such as GDPR, HIPAA, and CCPA, the invention provides a scalable and secure framework for monitoring Al behavior, debugging Al-driven workflows, and ensuring Al accountability in enterprise, healthcare, finance, and government applications.

### BACKGROUND

Al agents, also known as intelligent agents, are advanced digital tools designed to function autonomously by following high-level goals rather than specific step-by-step instructions. These agents leverage technologies, such as generative Al and large language models (LLMs), to interpret natural language, make real-time decisions, and take immediate actions. Their ability to adapt to changing circumstances makes them particularly valuable in dynamic environments where flexibility is essential.

A key aspect of Al agents is their capability to process and analyze vast amounts of data through various components. The first of these components is the sensor, which serves as the agent's means of perceiving the world. Sensors collect both structured data, such as numerical values and dates, and unstructured data, including text and images. These inputs may come from multiple sources, such as knowledge bases, APIs, or real-time monitoring systems, ensuring that the Al agent has access to comprehensive information.

Once the data is gathered, the reasoning engine acts as the core intelligence of the Al agent. This component employs machine learning algorithms to process the collected information, recognize patterns, generate actionable insights, and make predictions. The reasoning engine functions much like the human brain, enabling the agent to make informed decisions based on the data it receives, improving its ability to respond intelligently to various tasks and challenges.

After processing the information and determining an appropriate course of action, the Al agent utilizes actuators to execute its decisions. Actuators function as the "hands" of the Al agent, carrying out tasks that range from sending personalized messages and updating dashboards to processing transactions across multiple platforms. In many cases, robotic process automation (RPA) tools serve as actuators, allowing Al agents to interact seamlessly with existing digital systems and perform their assigned functions efficiently.

In modern enterprises, Al agents operate within an agentic ecosystem where they collaborate with both human employees and robotic systems. Al agents are particularly well-suited for complex, goal-oriented tasks that require adaptability and decision-making, while software robots excel at handling repetitive, structured processes. This division of labor enables businesses to optimize productivity by allowing Al agents to focus on high-level cognitive tasks while delegating routine work to automated systems.

The implementation of Al agents provides numerous advantages for businesses seeking to enhance efficiency and productivity. By autonomously managing complex and decision-intensive tasks, these agents free up human employees to concentrate on strategic planning, creative problem-solving, and fostering customer relationships. The automation of labor-intensive processes ensures that employees can dedicate their time to activities that require human ingenuity and critical thinking.

Beyond improving operational efficiency, Al agents also enhance customer experiences by enabling highly personalized and responsive interactions. These agents can infer customer intent, anticipate needs, and deliver tailored solutions in real time. Their ability to operate continuously ensures that customers receive consistent and high-quality support, regardless of the time or volume of inquiries. As a result, businesses can strengthen customer satisfaction and engagement through intelligent automation.

Unlike commercially available system provided by Datadog, Splunk, Google Chronicle, AWS X-Ray, embodiments of the present invention introduces Al-specific observability solutions tailored for non-deterministic AI workflows.

For example, OpenSearch provides a distributed tracing solution that aggregates telemetry data from microservices using tools like OpenTelemetry and Data Prepper. However, OpenSearch primarily focuses on conventional trace collection, visualization, and root cause analysis within typical microservice-based systems. It lacks tailored support for Al-driven or agentic workflows, especially those requiring real-time Al-specific trace segmentation or compliance with stringent data privacy regulations. Moreover, OpenSearch does not natively offer federated observability or Al-based trace-log correlation across isolated domains.

In contrast, aspects of the present invention addresses these limitations by introducing Al-native observability mechanisms, including dynamic trace segmentation for non-deterministic Al workflows and federated trace correlation. Embodiments of the invention integrates privacy-preserving techniques-such as differential privacy and selective encryption-into the observability pipeline, ensuring compliance with regulations like GDPR and HIPAA. Additionally, it applies machine learning models to enhance trace alignment, anomaly detection, and policy-based data governance, capabilities that extend beyond OpenSearch's current feature set.

Similarly, Microsoft Purview's Copilot auditing solution focuses on generating audit logs for Al-driven user activities, such as tracking interactions with Copilot services within Microsoft 365. While this approach provides visibility into user and admin actions, it is primarily limited to logging access metadata (e.g., timestamps, user IDs, and resource details) without offering deeper technical observability into how Al workflows function internally across distributed systems. Additionally, it does not provide mechanisms for trace-to-log correlation, Al workflow segmentation, or compliance-aware telemetry at the infrastructure level.

In contrast, the present invention delivers a holistic Al observability framework that captures and analyzes telemetry data from within Al workflows themselves, not just surface-level audit logs. The invention enables federated trace segmentation, Al-specific log correlation, and real-time anomaly detection, all while embedding regulatory compliance (e.g., GDPR, HIPAA) directly into observability pipelines. Unlike Purview's Copilot auditing, which is focused on enterprise governance and user activity logging, this invention provides deeper technical introspection into distributed AI systems across multi-tenant environments.

Further, LangSmith's tracing solution focuses on logging custom traces for large language model (LLM) workflows within a single application context. While it offers useful tools such as decorators and wrappers for capturing prompts, token usage, and cost estimates, it is primarily aimed at model-specific observability and developer debugging workflows. LangSmith lacks a broader observability framework for distributed or federated Al systems and does not address compliance enforcement or privacy-preserving telemetry in multi-tenant environments.

By contrast, the present invention enables distributed, federated observability across complex Al-driven infrastructures. It provides real-time Al-specific trace segmentation, trace-log correlation, and built-in privacy controls such as selective encryption and regulatory compliance enforcement (e.g., GDPR, HIPAA). Unlike LangSmith's focus on individual model traces, the present invention delivers end-to-end visibility into entire AI workflows operating across varied systems and organizational boundaries.

In addition, Salesforce's LogAl is an open-source tool designed for general-purpose log analytics, offering capabilities such as anomaly detection, clustering, and summarization using machine learning techniques. While LogAl is effective at analyzing logs and detecting operational issues, it does not provide dedicated observability for AI workflows, lacks trace-to-log correlation across distributed Al systems, and does not embed privacy-preserving measures or compliance enforcement for sensitive telemetry data.

In contrast, the present invention focuses on observability specifically tailored to Al systems, incorporating real-time trace segmentation, federated trace correlation, and Al-specific telemetry extraction. Unlike LogAl's general log analytics approach, this invention introduces privacy-aware observability that enforces compliance (e.g., GDPR, HIPAA) and supports multi-tenant, federated environments common to Al-driven infrastructures.

MLflow's tracing schema is primarily designed to track experiment-level metadata and execution hierarchies within isolated machine learning workflows. While it captures structured span data and integrates with OpenTelemetry, it lacks advanced features for cross-system observability, such as federated trace correlation or dynamic trace segmentation suited to complex Al-driven environments. Additionally, it does not incorporate privacy-preserving mechanisms or compliance-aware telemetry needed for regulated industries.

The present invention goes beyond MLflow's schema by introducing a federated observability framework tailored to distributed Al workflows. It provides Al-specific trace-log correlation, compliance enforcement (e.g., GDPR, HIPAA), and privacy-preserving telemetry techniques. Unlike MLflow's model, which focuses on enhancing experiment tracking within a localized ML lifecycle, the invention enables secure, real-time observability across multi-tenant, federated AI infrastructures.

US 2025/0068535 A1 (Mo et al.), which is hereby incorporated in its entirety, discloses a system and method for generating synthetic observability data using conditional variational autoencoders (CVAEs) to model associations between traces and logs, it primarily focuses on creating synthetic datasets to simulate distributed system behavior. However, Mo et al. is limited to data generation for testing and Al model training purposes and does not address critical operational observability challenges encountered in real-time Al-driven workflows. Specifically, Mo et al. fails to provide mechanisms for federated trace-log correlation across isolated environments, nor does it address compliance requirements such as GDPR or HIPAA during live observability operations. Moreover, Mo et al.'s system does not provide fine-grained privacy controls, such as selective encryption or federated anomaly detection, which are essential in regulated enterprise environments.

U.S. Patent No. 11,966,827 to Maas et al. (Maas et al.), which is hereby incorporated in its entirety, discloses systems and methods for using machine learning to predict data characteristics based on distributed trace logs in order to optimize data handling decisions in a computing environment. While Maas et al. focuses on leveraging distributed tracing data to forecast attributes such as interarrival times, file lifetimes, and access frequencies to improve data storage, caching, and retrieval decisions, it does not address privacy, security, or regulatory compliance requirements for the trace data. Further, Maas et al. lacks disclosure of mechanisms for observability in Al-specific workflows, such as those involving complex, non-deterministic agentic Al models or federated tracing architectures spanning across multi-tenant environments.

Accordingly, while existing solutions such as OpenSearch, Microsoft Purview's Copilot audit logs, LangSmith, LogAl, MLflow, and prior art like Mo et al. and Maas et al. each address certain aspects of distributed tracing, log analytics, or data handling, they fall short of providing an end-to-end observability solution tailored to the unique challenges of Al-driven workflows. The present invention introduces a novel and integrated observability framework that unifies Al-specific trace segmentation, federated trace correlation, real-time anomaly detection, and privacy-preserving telemetry enforcement within distributed AI environments. This enables secure, compliant, and transparent monitoring across multi-tenant Al infrastructures, filling critical gaps left unaddressed by conventional platforms and prior art.

### SUMMARY

The invention addresses several critical technical challenges in Al observability, distributed tracing, and privacy-preserving monitoring. Al-driven systems introduce complexities that traditional observability tools struggle to handle, making it difficult to track Al decisions, correlate logs with traces, and maintain compliance with privacy regulations. One major technical problem is the lack of effective correlation between trace data and log data in Al systems. Al agents operate using non-deterministic workflows, meaning the same input may yield different outputs based on learned behaviors, real-time data, and probabilistic decision-making. Unlike traditional microservices, where tracing follows predictable request-response interactions, Al-driven decision paths are dynamic, making it difficult to correlate trace spans with relevant log entries. Existing tracing tools such as OpenTelemetry do not inherently support Al-specific observability needs, making it difficult to track and interpret AI model decisions.

Another challenge arises from the significant overhead and scalability issues in Al observability. AI models generate an overwhelming volume of logs and trace data, including inputs, feature transformations, inference results, and feedback loops. Capturing every AI decision in real time can cause latency, increase storage costs, and degrade system performance. Traditional tracing methods are not optimized for Al workflows, leading to excessive data collection and inefficient storage. Additionally, Al observability introduces significant privacy and compliance risks. AI agents often process sensitive user data, such as personal identifiers, medical records, and financial transactions, requiring mechanisms to log Al decisions while preserving privacy. Existing observability solutions do not provide built-in privacy protections, exposing trace logs to regulatory risks under GDPR, HIPAA, and CCPA. Storing full trace logs, including Al input parameters, model decisions, and user interactions, increases the risk of data breaches and unauthorized access.

Another technical problem is trace misalignment and fragmentation in federated Al architectures. AI systems are often deployed in multi-cloud, hybrid, and edge environments, making it difficult to track requests and logs across different infrastructures. Distributed AI workflows often involve federated learning and remote model execution, where tracing data is stored in different locations, leading to trace fragmentation and data inconsistency. Traditional tracing architectures rely on centralized logging, which does not work well for federated Al models requiring jurisdictional data separation.

To solve these challenges, embodiments of the invention utilize an Al-specific observability framework that enhances distributed tracing, log correlation, privacy protection, and compliance enforcement. Embodiments of the invention introduce a context-aware correlation mechanism that assigns consistent trace IDs across Al-generated logs. Structured metadata tagging is applied to every Al-generated log entry, enabling automated trace-to-log correlation. Machine learning-based log analysis may be used to detect hidden relationships between trace data and logs, even when explicit correlations are not available. This approach allows Al decision paths to be traced more effectively, reducing errors in debugging and improving Al transparency.

To manage observability overhead and scalability, embodiments of the system uses smart sampling techniques to reduce unnecessary data collection. Instead of capturing every Al request, the system dynamically adjusts trace granularity based on Al model confidence scores, error rates, or compliance triggers. AI decision-making workflows are instrumented with lightweight telemetry hooks, ensuring that tracing provides meaningful insights without excessive computational costs. Additionally, some embodiments of the invention incorporate privacy-preserving Al observability through data redaction, anonymization, and encryption. Privacy-aware trace processing ensures that Al trace logs are automatically sanitized to remove personally identifiable information and sensitive attributes. Instead of logging full user data, the system replaces sensitive values with pseudonyms, masked identifiers, or hashed representations. For example, homomorphic encryption may be applied to trace logs, allowing AI observability data to be analyzed without exposing raw sensitive information. In addition, in some instances, differential privacy techniques introduce mathematical noise into Al observability metrics, preventing re-identification attacks.

In some embodiments, the system implements a trace segmentation model where Al traces are distributed across multiple secure storage locations based on compliance requirements. Federated trace linking mechanisms allow Al observability data to be reconstructed across cloud, on-premise, and edge AI deployments without centralizing sensitive logs. The system uses cryptographic identifiers and partial trace linking to ensure that trace data remains distributed yet traceable when needed. This decentralized approach ensures compliance with jurisdictional data regulations while maintaining observability.

For compliance and security, embodiments of the invention integrate role-based access control with fine-grained permissions to ensure that Al trace logs are only accessible to authorized personnel. Zero-trust security principles are applied, where every trace request may be authenticated and verified before access is granted. The system also creates regulatory audit logs separately from standard Al traces, capturing Al decision records, access logs, and compliance-specific events without exposing raw trace data. Automated compliance reporting ensures that observability practices align with GDPR, HIPAA, and CCPA regulations while maintaining AI traceability.

Embodiments of the invention provide a robust and scalable solution for Al observability by addressing critical challenges in trace-to-log correlation, scalability, privacy compliance, and federated Al tracing. Unlike existing observability tools, which struggle with Al decision complexity, privacy risks, and trace misalignment, the proposed system enhances traceability, reduces observability overhead, ensures privacy compliance, and improves AI transparency. These technical solutions create a comprehensive framework for monitoring Al-driven decision-making across multi-cloud, hybrid, and edge computing environments while maintaining privacy, security, and regulatory compliance.

### BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:
FIG. 1 is an architectural diagram illustrating a hyper-automation system configured to perform agentic automation and orchestration according to one or more embodiments.
FIG. 2 illustrates some of the combined capabilities of an artificial intelligence (AI) agent and a robotic process automation (RPA) robot according to one or more embodiments.
FIG. 3 illustrates pools of Al agents, RPA robots, agentic orchestration processes (AOPs), and applications according to one or more embodiments.
FIG. 4 illustrates an example AI agent service interface according to one or more embodiments.
FIG. 5 illustrates an example AOP development interface according to one or more embodiments.
FIG. 6 illustrates an example RPA development interface according to one or more embodiments.
FIG. 7 illustrates an end-to-end Al agent, RPA robot, and AOP development and deployment system according to one or more embodiments.
FIG. 8 is an architectural diagram illustrating an agentic automation and RPA system according to one or more embodiments.
FIG. 9 is an architectural diagram illustrating a deployed RPA system according to one or more embodiments.
FIG. 10 is an architectural diagram illustrating the relationship between a designer, activities, and drivers according to one or more embodiments.
FIG. 11 is an architectural diagram illustrating a computing system according to one or more embodiments.
FIG. 12A illustrates an example of a neural network according to one or more embodiments.
FIG. 12B illustrates an example of a neuron according to one or more embodiments.
FIG. 13 is an architectural diagram illustrating a reference architecture for a generative Al model according to one or more embodiments.
FIG. 14 is a flowchart illustrating a process for training Al/ML model(s) according to one or more embodiments.
FIG. 15 illustrates method, which defines a structured approach for Al observability and privacy-preserving distributed tracing.
FIG. 16 illustrates a structured method for Al observability, distributed tracing, and compliance monitoring.
FIG. 17 illustrates a structured method for Al observability, privacy-preserving distributed tracing, and compliance monitoring.
FIG. 18 illustrates method for Al trace playback and reproducibility, providing a structured approach for reconstructing and analyzing Al-generated decisions to facilitate debugging, compliance verification, and performance monitoring.
FIG. 19 illustrates the processing and analysis method for unstructured AI trace data within an observability system.
FIG. 20 illustrates a method for context grounding in an Al observability and distributed tracing system.
FIG. 21 illustrates a method for segmenting Al-generated trace data and securely distributing the trace segments across a federated tracing infrastructure while enforcing cryptographic linkage and privacy-preserving policies.
FIG. 22 illustrates a method for detecting patterns between Al-generated trace data and log data to improve trace-to-log correlation, enhance anomaly detection accuracy, and facilitate AI workflow debugging and compliance auditing

Unless otherwise indicated, similar reference characters denote corresponding features consistently throughout the attached drawings.

### DETAILED DESCRIPTION OF THE EMBODIMENTS

The disclosure herein pertains to agentic automation, and more specifically, to guardrails for AI models and agentic automation.

The invention addresses several critical technical challenges in Al observability, distributed tracing, and privacy-preserving monitoring. Al-driven systems introduce complexities that traditional observability tools struggle to handle, making it difficult to track Al decisions, correlate logs with traces, and maintain compliance with privacy regulations. One major technical problem is the lack of effective correlation between trace data and log data in Al systems. Al agents operate using non-deterministic workflows, meaning the same input may yield different outputs based on learned behaviors, real-time data, and probabilistic decision-making. Unlike traditional microservices, where tracing follows predictable request-response interactions, Al-driven decision paths are dynamic, making it difficult to correlate trace spans with relevant log entries. Existing tracing tools such as OpenTelemetry do not inherently support Al-specific observability needs, making it difficult to track and interpret Al model decisions.

Another challenge arises from the significant overhead and scalability issues in Al observability. AI models generate an overwhelming volume of logs and trace data, including inputs, feature transformations, inference results, and feedback loops. Capturing every Al decision in real time can cause latency, increase storage costs, and degrade system performance. Traditional tracing methods are not optimized for Al workflows, leading to excessive data collection and inefficient storage. Additionally, Al observability introduces significant privacy and compliance risks. AI agents often process sensitive user data, such as personal identifiers, medical records, and financial transactions, requiring mechanisms to log Al decisions while preserving privacy. Existing observability solutions do not provide built-in privacy protections, exposing trace logs to regulatory risks under GDPR, HIPAA, and CCPA. Storing full trace logs, including Al input parameters, model decisions, and user interactions, increases the risk of data breaches and unauthorized access.

Another technical problem is trace misalignment and fragmentation in federated Al architectures. Al systems are often deployed in multi-cloud, hybrid, and edge environments, making it difficult to track requests and logs across different infrastructures. Distributed Al workflows often involve federated learning and remote model execution, where tracing data is stored in different locations, leading to trace fragmentation and data inconsistency. Traditional tracing architectures rely on centralized logging, which does not work well for federated Al models requiring jurisdictional data separation.

To solve these challenges, embodiments of the invention utilize an Al-specific observability framework that enhances distributed tracing, log correlation, privacy protection, and compliance enforcement. Embodiments of the invention introduce a context-aware correlation mechanism that assigns consistent trace IDs across Al-generated logs. Structured metadata tagging is applied to every Al-generated log entry, enabling automated trace-to-log correlation. Machine learning-based log analysis may be used to detect hidden relationships between trace data and logs, even when explicit correlations are not available. This approach allows Al decision paths to be traced more effectively, reducing errors in debugging and improving AI transparency.

To manage observability overhead and scalability, embodiments of the system uses smart sampling techniques to reduce unnecessary data collection. Instead of capturing every Al request, the system dynamically adjusts trace granularity based on Al model confidence scores, error rates, or compliance triggers. AI decision-making workflows are instrumented with lightweight telemetry hooks, ensuring that tracing provides meaningful insights without excessive computational costs. Additionally, some embodiments of the invention incorporate privacy-preserving Al observability through data redaction, anonymization, and encryption. Privacy-aware trace processing ensures that Al trace logs are automatically sanitized to remove personally identifiable information and sensitive attributes. Instead of logging full user data, the system replaces sensitive values with pseudonyms, masked identifiers, or hashed representations. For example, homomorphic encryption may be applied to trace logs, allowing Al observability data to be analyzed without exposing raw sensitive information. In addition, in some instances, differential privacy techniques introduce mathematical noise into Al observability metrics, preventing re-identification attacks.

In some embodiments, the system implements a trace segmentation model where Al traces are distributed across multiple secure storage locations based on compliance requirements. Federated trace linking mechanisms allow Al observability data to be reconstructed across cloud, on-premise, and edge AI deployments without centralizing sensitive logs. The system uses cryptographic identifiers and partial trace linking to ensure that trace data remains distributed yet traceable when needed. This decentralized approach ensures compliance with jurisdictional data regulations while maintaining observability.

For compliance and security, embodiments of the invention integrate role-based access control with fine-grained permissions to ensure that Al trace logs are only accessible to authorized personnel. Zero-trust security principles are applied, where every trace request may be authenticated and verified before access is granted. The system also creates regulatory audit logs separately from standard Al traces, capturing Al decision records, access logs, and compliance-specific events without exposing raw trace data. Automated compliance reporting ensures that observability practices align with GDPR, HIPAA, and CCPA regulations while maintaining AI traceability.

Embodiments of the invention provide a robust and scalable solution for Al observability by addressing critical challenges in trace-to-log correlation, scalability, privacy compliance, and federated Al tracing. Unlike existing observability tools, which struggle with Al decision complexity, privacy risks, and trace misalignment, the proposed system enhances traceability, reduces observability overhead, ensures privacy compliance, and improves AI transparency. These technical solutions create a comprehensive framework for monitoring Al-driven decision-making across multi-cloud, hybrid, and edge computing environments while maintaining privacy, security, and regulatory compliance.

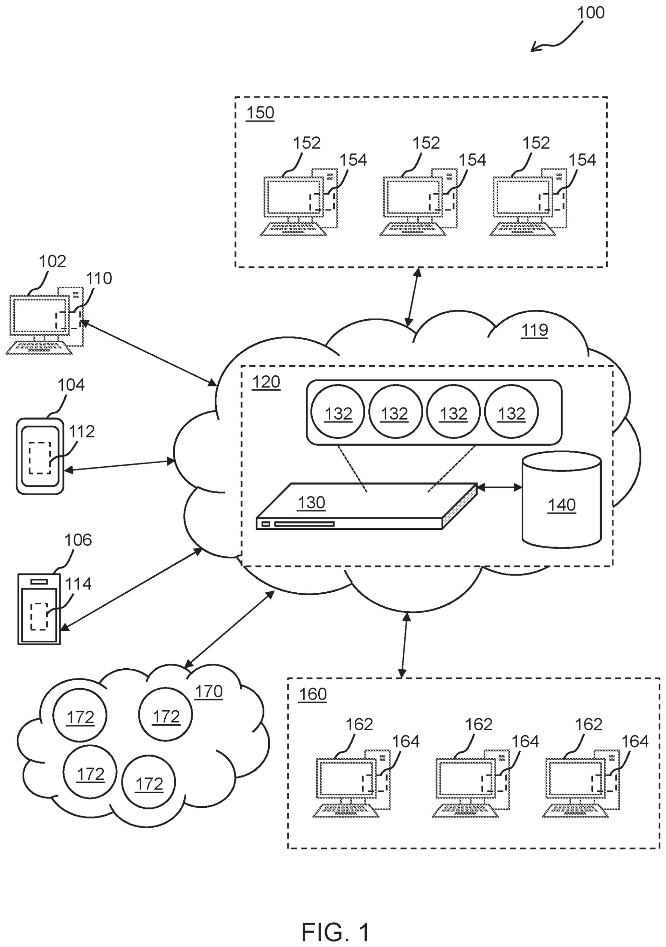

FIG. 1 is an architectural diagram illustrating a hyper-automation system 100 configured to perform agentic automation and orchestration, according to one or more embodiments. "Hyper-automation," as used herein, refers to automation systems that bring together components of process automation, agentic automation, integration tools, and technologies that amplify the ability to automate work. Examples of the components include, but are not limited to, artificial intelligence (AI) agents, agentic orchestration processes (AOPs), and robotic process automation (RPA) robots.

Generally, as used herein, "Al agents" are Al-enhanced probabilistic automations that act independently, act dynamically, make decisions, execute actions, and act adaptively. In some instances, the Al agents operate accordingly due to their use of large language models (LLMs) or other Al models, which are typically probabilistic in nature themselves. According to one or more embodiments, and as described herein, the one or more Al agents can implement context grounding techniques (e.g., retrieval-augmented generation (RAG), extraction, and semantic storage), advanced agentic searching (semantic search and retrieval, hybrid search, and broad search with re-ranking), tethering (including automatic tethering) and query decomposition.

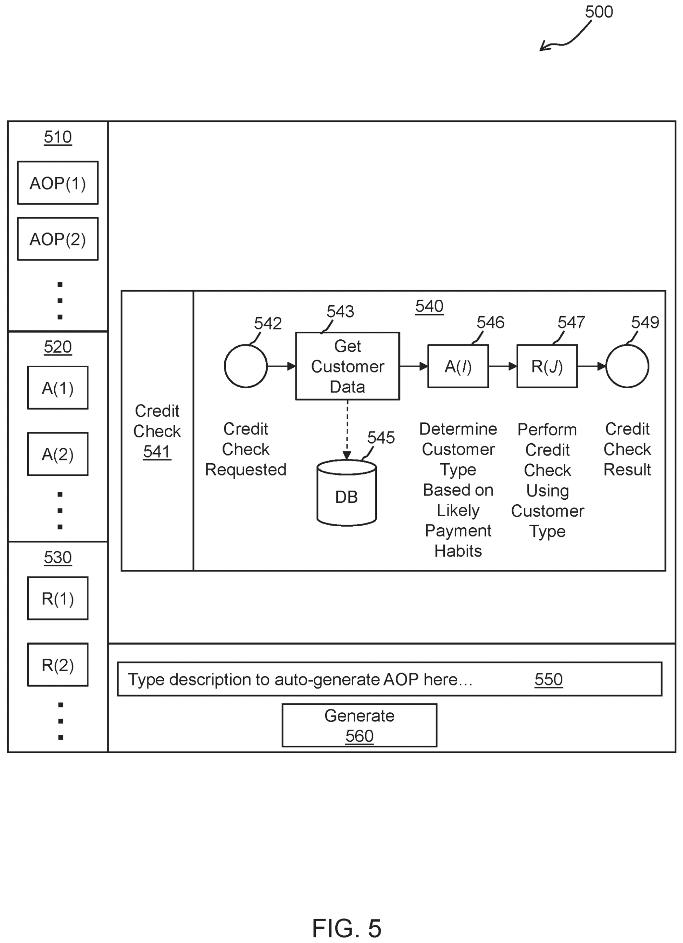

Generally, as used herein, "AOPs" are automations that combine probabilistic and deterministic methods to be both dynamic and predictable. In some instances, AOPs are automations that allow users to describe overall business processes. A user is, but not limited to, any person accessing a system executing an automation (e.g., a developer, an engineer, a customer, etc.). AOPs may be created using an interface that allows the creation of business flowcharts that are described in Business Process Model and Notation (BPMN), which is an Extensible Markup Language (XML) description of the business process (see FIG. 5 for example).

Generally, as used herein, "RPA robots" are rules-based deterministic automations that act predictably and make deterministic decisions.

For instance, one or more RPAs may be used at the core of a hyper-automation system in some embodiments, and in certain embodiments, automation capabilities may be expanded with Al / machine learning (ML), process mining, analytics, agentic automation, and/or other advanced tools. As the hyper-automation system learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

In such embodiments, AI agents "coexist" in tandem with RPA robots that execute RPAs and AOPs. As noted herein, Al agents are automations, enhanced with Al skills, that can act independently and dynamically make decisions, execute actions, and adapt their performance. The Al agents can dynamically leverage the tools available via these RPA robots to perform document processing (see, for example, U.S. Patent Application Publication No. 2021/0097274), user interface (UI) automation (see, for example, U.S. Patent Nos. 10,654,166, 10,990,876, 11,080,548, 11,507,259, 11,733,668, and 11,748,069), semantic copy-and-paste between a source and a target (see, for example, U.S. Patent No. 12,124,806 and U.S. Patent Application Publication Nos. 2023/0107316, 2023/0415338, and 2024/0220581), etc. Al agents can dynamically select these tools and execute them in the form of a pipeline.

Generally, agentic automation is a probabilistic automation performed by one or more Al agents. Agentic automation expands the automation potential of organizations by placing focus not just on individual tasks, but on entire end-to-end processes. Teams of RPA robots and/or AOPs, directed by Al agents, may enable a single employee to achieve the work of many. Agentic automation, via Al agents and/or AOPs, gives managers the space to mentor, doctors more time to care for patients, developers the ability to fine-tune their work, engineers the freedom to innovate, and customers seamless and personalized experiences.

Various technical effects, benefits, and advantages may be achieved via agentic automation. Agentic automation improves memory usage by requiring less storage for data and increases processor efficiency by reducing the number of calls and actions. Agentic automation also potentially provides the ability to process gigabytes, terabytes, petabytes, or more, of data that would not be possible by human-implemented processes, whether mental or by hand. Agentic automation also potentially enables fewer triggers and models to be used via dynamic decision making. Whereas conventional software automations alone may require one hundred (100) actions in an example scenario, agentic automation in the same example scenario may be reduced the required actions substantially (e.g., to fifteen (15) actions). Agentic automation may also employ context grounding to tether the Al agent to a desired context that "constrains" the LLM or AI Model to a pertinent context, thereby improving the efficiency of the LLM or AI Model.

Al agents may have agentic memory that evolves and remembers user interactions, feedback, corrections, and solutions (e.g., dynamic and/or direct user inputs from human-in-the-loop operations). As used herein, human-in-the-loop operations or "human-in-the-loop" can include Al agents and RPA robots working cooperatively with users to receive the dynamic and/or direct user inputs. As the agentic memory grows, the Al agent can become increasingly autonomous, reducing the need for dynamic and/or direct user inputs and improving efficiency. Al agents may also learn to be more efficient based on the agentic memory if more efficient solutions are contained therein or derived therefrom. For instance, Al agents may periodically process the agentic memory to analyze patterns to achieve greater autonomy.

As used herein, "agentic memory" is a dynamic caching (i.e., storing) system for managing escalations and tool calls. By way of example operation, when the Al agent encounters a problem while running, the Al agent can prompt or otherwise request from a user interaction(s) or feedback about overcoming the problem, store/cache the interaction(s) or feedback, and learn from this interaction or feedback to reduce the need for repeated user input. According to one or more technical effects, benefits, and advantages, agentic memory provides enhanced efficiency by storing solutions to common problems and minimizing potentially costly tool calls. The cooperative operations of the Al agents and the agentic memory potentially "bend the curve" so user interaction is required less and less as the Al agent continually learns via the agentic memory.

Generally, agentic orchestration is implemented by a conductor application to implement one or more AOPs and/or Al agents to orchestrate Al agents (e.g., UiPath Agents^{™}), third-party agents, RPA robots (e.g., UiPath Robots^{™}), AOPs, and users (e.g., if user interaction is required or requested) executing a workflow. Agentic orchestration enables the agentic automation, modeling, and monitoring of complex business processes from start to finish. Agentic orchestration also provides the unique ability to orchestrate RPA robots, Al agents, AOPs, third party agents, and users across end-to-end workflows. Agentic orchestration is beneficial for the successful scaling of agentic automations.

Al agents for agentic automation are Al model-based, as discussed here, enabling the Al agents to work independently of users and implement these agentic automations. Al agents are also goal-oriented, using context to make probabilistic decisions. Further, Al agents are well-suited for ad hoc tasks that require high adaptability. AI agents learn how work is done and improve over time. Al agents can use and choose various tools for accomplishing tasks, gathering context, and taking actions (often through RPA robots used by the Al agents as tools). In some embodiments, Al agents can build workflows and generate automations for RPA robots and/or other Al agents to execute, such as by leveraging UiPath Autopilot^{™} for developers or another application that helps developers expedite the creation and testing of agentic automations. For instance, Al agents may utilize the designer application via an application programming interfaces (API) to generate another Al agent or an RPA robot to execute a portion of a workflow, as well as trigger human-in-the-loop operations to escalate issues with the workflow. If correct, the workflow may then the Al agents can be deployed. Al agents may also have varying degrees of autonomy, which is governed by the agentic orchestration.

The Al agent, by executing an "agentic loop," generates a dynamic plan to achieve goals per instructions using the provided tools and context. Once the dynamic plan is generated, the Al agent utilizes an efficient execution path for the dynamic plan. If the dynamic plan has two or more steps that can be executed in parallel, the Al agent executes the two or more steps in parallel based on the available resources. After each step is completed, the Al agent retrieves the output from the step and regenerates the next step or steps. Thus, the agentic loop continues until the goals are achieved. Executing the steps of the dynamic plan in parallel and using the ecosystem tools and context grounding are advanced capabilities for the agentic orchestration.

As noted herein, RPA robots are rules-based automations that act predictably and make deterministic decisions. RPA robots are highly reliable, efficient, and well-suited for routine tasks. RPA robots, along with Al agents, may use human-in-the-loop operations for exception management. According to one or more embodiments, Al agents are more flexible, more abstract, and more self-willed than RPA robots and AOPs. Further, RPA robots are more stable, more concrete, and more governable than Al agents and AOPs. Furthermore, AOPs processes range between the respective flexibility/stability, abstract/concrete, and self-willed/governable qualities of Al agents and RPA robots.

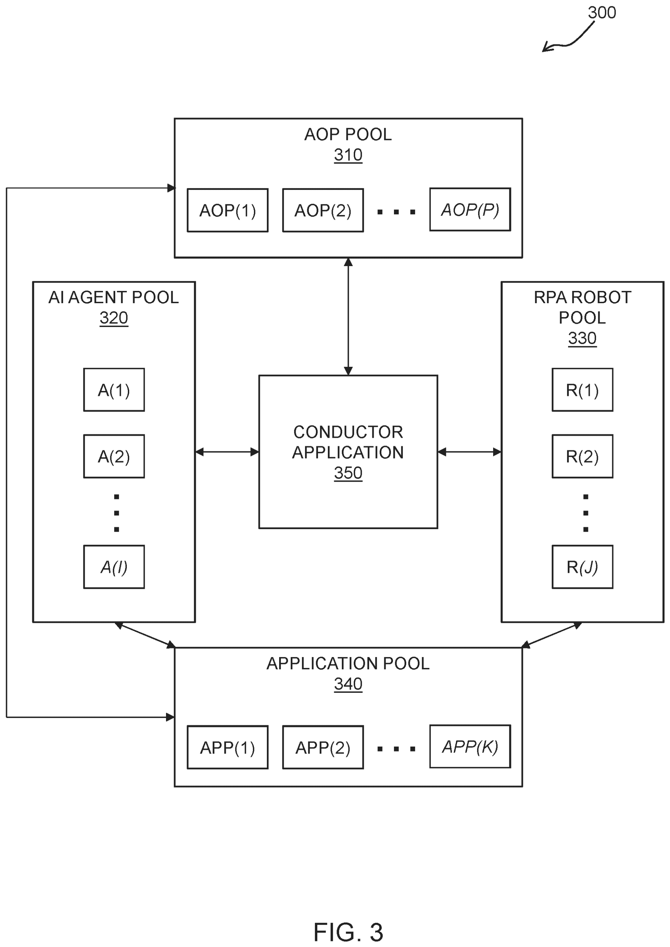

As described further herein with respect to FIG. 3, Al agents, AOPs, and RPA robots can potentially find and use one another as tools to accomplish a task. Al agents, AOPs, and RPA robots may also be able to access and use various applications (e.g., via application programming interfaces (APIs)). Tools may be manually configured for an automation by a developer and/or the Al agents and RPA robots may discover and use tools at runtime.

According to some embodiments, Al agents, AOPs, and RPA robots may work cooperatively with users (e.g., human-in-the-loop), enabling Al agents, AOPs, and RPA robots to make faster, more consistent, and more informed decisions. Further the use of Al agents, AOPs, and RPA robots enables users to accomplish more, as Al agents, AOPs, and RPA robots may take on additional repetitive, mundane, and ad hoc tasks at a scale that is not possible for humans to operate. Users may make the decisions when Al agents, AOPs, or RPA robots encounter an exception. Users may thus be elevated to, and focused on, being supervisors, decision makers, and organizational leaders.

Al models provide Al agents with the ability to reason, plan, create, and make autonomous decisions. Al models can also be used by RPA robots for task-specific activities, such as processing a document or analyzing data. Al models may be enhanced with business-specific content and context (e.g., from a collection of context repositories for an enterprise), improving accuracy and results of the Al models. Al models can be applied individually or concurrently, depending on the complexity of the task. AI model selection can come from the RPA vendor's model library, third-party models, and bring-your-own-model (BYOM) options (see, for example, U.S. Patent Nos. 11,738,453 and 11,748,479).

Hyper-automation system 100 includes user computing systems, such as desktop computer 102, tablet 104, and smart phone 106. However, any desired user computing system may be used without deviating from the scope of the disclosure including, but not limited to, smart watches, laptop computers, servers, Internet-of-Things (IoT) devices, etc. Also, while three user computing systems are shown in FIG. 1, any suitable number of user computing systems may be used without deviating from the scope of the disclosure. For instance, in some embodiments, dozens, hundreds, thousands, or millions of user computing systems may be used. The user computing systems may be actively used by a user or run automatically, by Al agents, AOPs, and/or RPA robots, without much or any user input.

As disclosed herein, there are three types of automations in some embodiments: (1) agentic automations that are implemented by respective Al agents; (2) RPAs that are implemented by respective RPA robots; and (3) composite automations that are achieved by a combination of Al agent(s) and RPA robot(s) to accomplish a more complex overall task. Automations 110, 112, 114 may include, but are not limited to, those executed by RPA robots and/or Al agents, whether individually or to achieve a larger composite automation. Other processes may also be implemented, such as listeners. These processes may be standalone applications, subprocesses of another application, part of an operating system, any other suitable software and/or hardware, or any combination of these without deviating from the scope of the disclosure. Indeed, in some embodiments, the logic of the process(es) is implemented partially or completely via physical hardware.

Each user computing system 102, 104, 106 has respective automations 110, 112, 114 running thereon, such as those implemented by RPA robots, Al agents, AOPs, etc. In some embodiments, automations 110, 112, 114 can be stored remotely (e.g., within a core hyper-automation system 120 including a server 130 alongside one or more Al/ML models 132, or within a database 140 of the core hyper-automation system 120, and accessed via a network 119) and loaded by RPA robots and/or Al agents to implement automations 110, 112, 114.

Database 140 may store structured and/or unstructured data, although the former is typically required for RPAs. RPA automations may exist as a script (e.g., Extensible Markup Language (XML), Extensible Application Markup Language (XAML), etc.) or be compiled into machine readable code (e.g., as a digital link library). In the case of Al agents, agentic automations may be generated based on plain text descriptions of a desired goal, for example.

Listeners monitor and record data pertaining to user interactions with respective computing systems and/or operations of unattended computing systems and send the data to the core hyper-automation system 120 via the network 119 (e.g., a local area network (LAN), a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from the listeners may be sent periodically as part of a heartbeat message. In some embodiments, the data may be sent to the core hyper-automation system 120 once a predetermined amount of data has been collected, after a predetermined time period has elapsed, or both. One or more servers, such as server 130, receive and store data from the listeners in a database, such as database 140.

In the case of automations 110, 112, 114 being RPAs, automations 110, 112, 114 may execute the logic developed in workflows during design time. The workflows may include a set of steps, defined herein as "activities," that are executed in a sequence or some other logical flow. Each activity may include an action, such as clicking a button, reading a file, writing to a log panel, etc. In some embodiments, workflows may be nested or embedded.

Long-running workflows for RPA in some embodiments are master projects that support service orchestration, human-in-the-loop, and long-running transactions in unattended environments. See, for example, U.S. Patent No. 10,860,905, which is hereby incorporated by reference in its entirety. Human-in-the-loop comes into play when certain processes require user inputs (e.g., dynamic and/or direct user inputs) to handle exceptions, approvals, or validation before proceeding to the next step in the activity. In this situation, the process execution is suspended, freeing up the RPA robots until the human-in-the-loop portion of the task is completed.

A long-running workflow may support workflow fragmentation via persistence activities and may be combined with invoke process and non-user interaction activities, orchestrating human-in-the-loop operations with RPA robot tasks. In some embodiments, multiple or many computing systems may participate in executing the logic of a long-running workflow. The long-running workflow may run in a session to facilitate speedy execution. In some embodiments, long-running workflows may orchestrate background processes that may contain activities performing API calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

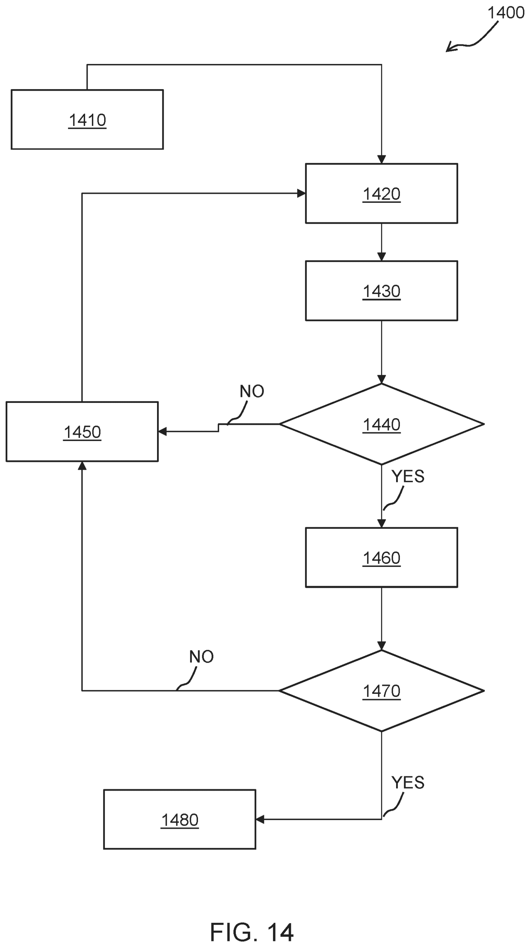

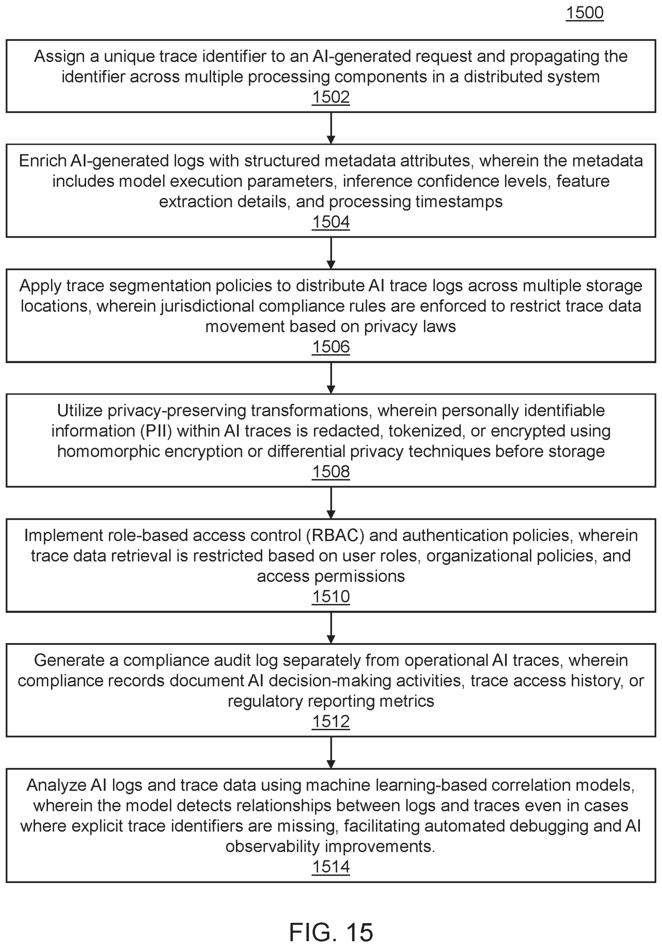

One or more of the automations 110, 112, 114 are in communication with the core hyper-automation system 120. In some embodiments, the core hyper-automation system 120 can run an AI trust layer on one or more servers, such as the server 130, for governance of automations 110, 112, 114. The AI trust layer, as described and shown in FIGS. 14 and 15, is configured to provide trust, transparency, and control of the operations of the one or more agentic automations, according to one or more embodiments.

In some embodiments, the core hyper-automation system 120 may run a conductor application on one or more servers, such as server 130. While one server 130 is shown for illustration purposes, multiple or many servers that are proximate to one another or in a distributed architecture may be employed without deviating from the scope of the invention. For instance, one or more servers may be provided for conductor functionality, AI/ML model serving, authentication, governance, and or any other suitable functionality without deviating from the scope of the invention. In some embodiments, the core hyper-automation system 120 may incorporate or be part of a public cloud architecture, a private cloud architecture, a hybrid cloud architecture, etc. In certain embodiments, the core hyper-automation system 120 may host multiple software-based servers on one or more computing systems, such as server 130. In some embodiments, one or more servers of the core hyper-automation system 120, such as server 130, may be implemented via one or more virtual machines (VMs).

In some embodiments, one or more of the automations 110, 112, 114 may call the one or more Al/ML models 132 deployed on or accessible by the core hyper-automation system 120 and trained to accomplish various tasks. For instance, Al/ML models 132 may include models trained to look for various application versions, perform computer vision (CV), perform optical character recognition (OCR), generate user interface (UI) descriptors, offer suggestions for next activities or sequences of activities in workflows, perform semantic matching, perform natural language processing (NLP), generate or modify code and/or workflows, etc. AI/ML models may be trained using labeled data that includes, but is not limited to, elements from data sources (e.g., web pages, forms, scanned documents, application interfaces, screens, etc.), previously created workflows, screenshots of various application screens for various versions with their corresponding UI elements, libraries of UI objects, etc. Al/ML models 132 may be trained to achieve a desired confidence threshold while not being overfit to a given set of training data. Generally, UI elements, UI descriptors, applications, and application screens can be considered to be UI objects.

AI/ML models 132 may be trained for any suitable purpose without deviating from the scope of the invention, as will be discussed in more detail later herein. Two or more of Al/ML models 132 may be chained in some embodiments (e.g., in series, in parallel, or a combination thereof) such that they collectively provide collaborative output(s). AI/ML models 132 may perform or assist with CV, OCR, document processing and/or understanding, semantic learning and/or analysis, analytical predictions, process discovery, task mining, testing, automatic workflow generation, sequence extraction, clustering detection, audio-to-text translation, NLP, semantic matching, any combination thereof, etc. However, any desired number and/or type(s) of AI/ML models may be used without deviating from the scope of the invention. Using multiple AI/ML models may allow the system to develop a global picture of what is happening on a given computing system, for example. For instance, one AI/ML model could perform OCR, another could detect buttons, another could compare sequences, etc. Patterns may be determined individually by an Al/ML model or collectively by multiple Al/ML models. In certain embodiments, one or more Al/ML models are deployed locally on at least one of the computing systems 102, 104, 106.

In some embodiments, multiple AI/ML models 132 may be used. Each AI/ML model 132 is an algorithm (or model) that runs on the data, and the Al/ML model itself may be a deep learning neural network (DLNN) of trained artificial "neurons" that are trained on training data, for example. In some embodiments, Al/ML models 132 may have multiple layers that perform various functions, such as statistical modeling (e.g., hidden Markov models (HMMs)), and utilize deep learning techniques (e.g., long short term memory (LSTM) deep learning, encoding of previous hidden states, etc.) to perform the desired functionality.

Hyper-automation system 100 may provide four main groups of functionality in some embodiments: (1) discovery; (2) building automations; (3) management; and (4) engagement. Automations (e.g., run on a user computing system, a server, etc.) may be run by RPA robots, AOPs, or Al agents, for example, in some embodiments, and may provide any of the functionality described herein. By way of example, RPA robots can include attended robots, unattended robots, and/or test robots. Attended robots work with users to assist with tasks (e.g., via UiPath Assistant^{™}). Unattended robots work independently of users and may run in the background, potentially without user knowledge. Test robots run test cases against applications or workflows. Test robots may be run on multiple computing systems in parallel in some embodiments.

The discovery functionality may discover and provide automatic recommendations for different opportunities for automation of business processes. Such functionality may be implemented by one or more servers, such as server 130. The discovery functionality may include providing an automation hub, process mining, task mining, and/or task capture in some embodiments. The automation hub (e.g., UiPath Automation Hub^{™}) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud^{™} and/or UiPath Al Center^{™}) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from user computing systems 102, 104, 106 by listeners, for example, and processed by servers, such as server 130. One or more AI/ML models 132 may be employed for this purpose in some embodiments. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud^{™} and/or UiPath Al Center^{™}) identifies and aggregates workflows (e.g., employee workflows), and then applies AI to expose patterns and variations in day-to-day tasks, scoring such tasks for ease of automation and potential savings (e.g., time and/or cost savings). One or more Al/ML models 132 may be employed to uncover recurring task patterns in the data. Repetitive tasks that are ripe for automation may then be identified. This information may initially be provided by listeners and analyzed on servers of the core hyper-automation system 120, such as server 130, in some embodiments. The findings from task mining (e.g., XAML process data) may be exported to process documents or to a designer application such as UiPath Studio^{™} to create and deploy automations more rapidly. Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud^{™} and/or UiPath Al Center^{™}) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word^{®} documents, XAML files, and the like. Build-ready workflows may be exported directly to a designer application in some embodiments, such as UiPath Studio^{™}. Task capture may simplify the requirements gathering process for both subject matter experts explaining a process and Center of Excellence (CoE) members providing production-grade automations.

Building automations may be accomplished via a designer application (e.g., UiPath Studio^{™}, UiPath StudioX^{™}, or UiPath Studio Web^{™}). For instance, developers of an RPA development facility 150 may use designer applications 154 of computing systems 152 to build and test agentic automations, RPAs, AOPs, and/or composite automations for various applications and environments, such as web, mobile, SAP^{®}, and virtualized desktops. Developers may also build AOPs. For instance, developers may create automations to be executed by RPA robots, Al agents, AOPs, a combination thereof, etc. API integration may be provided for various applications, technologies, and platforms. Predefined activities, drag-and-drop modeling, and a workflow recorder, may make automation easier with minimal coding. Document understanding functionality may be provided via drag-and-drop Al skills for data extraction and interpretation that call one or more AI/ML models 132. Such automations may process virtually any document type and format, including tables, checkboxes, signatures, and handwriting. When data is validated or exceptions are handled, this information may be used to retrain the respective Al/ML models, improving their accuracy over time.

Designer application 152 may be designed to call one or more of trained Al/ML models 132 on server 130 and/or generative Al models 172 in a cloud environment via network 170 (e.g., a local area network (LAN), a mobile communications network, a satellite communications network, the Internet, any combination thereof, etc.) to assist with the automation development process. In some embodiments, one or more of the Al/ML models may be packaged with designer application 152 or otherwise stored locally on computing system 150.

In some embodiments, the designer application 152 and one or more of Al/ML models 132 may be configured to use an object repository stored in database 140. See, for example, U.S. Patent No. 11,748,069, which is hereby incorporated by reference in its entirety. Generally, the object repository is a storage mechanism used by automations for images, text, semantic data, taxonomical associations, ontological associations, UI objects, etc. For example, the object repository may include libraries of UI objects that can be used to develop workflows via the designer application 152. The object repository may be used to add UI descriptors to activities in the workflows of the designer application 152 for UI automations. In some embodiments, one or more of the AI/ML models 132 may generate new UI descriptors and add them to the object repository in database 140.

Once automations are completed in the designer application 152, they may be published on the server 130, pushed out to the computing systems 102, 104, 106, etc. For example, as new UI descriptors are created and/or existing UI descriptors are modified, a global repository of UI object libraries may be built that is sharable and collaborative for all automations. Regarding object repositories, taxonomies and ontologies may be used. A taxonomy is a hierarchical structure of subcategories. An ontology is a formal representation of a domain of knowledge, including concepts, properties, and relationships therebetween. In an ontology, the relationships between categories are not necessarily hierarchical, and the ontological relationship may span multiple screens of an application.

An integration service may allow developers to seamlessly combine UI automation with API automation, for example. Automations, such as any of the types described herein, may be built that require APIs or traverse both API and non-API applications and systems. A repository (e.g., UiPath Object Repository^{™}) or marketplace (e.g., UiPath Marketplace^{™}) for pre-built automation templates and solutions may be provided to allow developers to automate a wide variety of processes more quickly. Thus, when building automations, hyper-automation system 100 may provide user interfaces, development environments, API integration, pre-built and/or custom-built AI/ML models, development templates, integrated development environments (IDEs), and advanced Al capabilities. Hyper-automation system 100 enables development, deployment, management, configuration, monitoring, debugging, and maintenance of RPA robots, AOPs, and Al agents in some embodiments, which may provide automations for hyper-automation system 100.

In some embodiments, components of hyper-automation system 100, such as designer application(s) and/or an external rules engine, provide support for managing and enforcing governance policies for controlling various functionality provided by hyper-automation system 100. Governance is the ability for organizations to put policies in place to prevent users from developing automations (e.g., RPA robots, AOPs, and/or Al agents) capable of taking actions that may harm the organization, such as violating the E.U. General Data Protection Regulation (GDPR), the U.S. Health Insurance Portability and Accountability Act (HIPAA), third party application terms of service, etc. Since developers may otherwise create automations that violate privacy laws, terms of service, etc. while performing their automations, some embodiments implement access control and governance restrictions at the robot and/or robot design application level. This may provide an added level of security and compliance into to the automation process development pipeline in some embodiments by preventing developers from taking dependencies on unapproved software libraries that may either introduce security risks or work in a way that violates policies, regulations, privacy laws, and/or privacy policies. See, for example, U.S. Patent No. 11,733,668, which is hereby incorporated by reference in its entirety.

The management functionality may provide management, deployment, and optimization of automations across an organization. The management functionality may include orchestration, test management, Al functionality, and/or insights in some embodiments. Management functionality of hyper-automation system 100 may also act as an integration point with third-party solutions and applications for automation applications and/or RPA robots. The management capabilities of hyper-automation system 100 may include, but are not limited to, facilitating provisioning, deployment, configuration, queuing, monitoring, logging, and interconnectivity of RPA robots, AOPs, and/or Al agents, among other things.

A conductor application, such as UiPath Orchestrator^{™} (which may be provided as part of the UiPath Automation Cloud^{™} in some embodiments, or on premises, in VMs, in a private or public cloud, in a Linux^{™} VM, or as a cloud native single container suite via UiPath Automation Suite^{™}), provides orchestration capabilities to deploy, monitor, optimize, scale, and ensure security of RPA robots, AOPs, and/or Al agent deployments. A test suite (e.g., UiPath Test Suite^{™}) may provide test management to monitor the quality of deployed automations. The test suite may facilitate test planning and execution, meeting of requirements, and defect traceability. The test suite may include comprehensive test reporting.

Analytics software (e.g., UiPath Insights^{™}) may track, measure, and manage the performance of deployed automations. The analytics software may align automation operations with specific key performance indicators (KPIs) and strategic outcomes for an organization. The analytics software may present results in a dashboard format for better understanding by users.

A data service (e.g., UiPath Data Service^{™}) may be stored in database 140, for example, and bring data into a single, scalable, secure place with a drag-and-drop storage interface. Some embodiments may provide low-code or no-code data modeling and storage to automations while ensuring seamless access, enterprise-grade security, and scalability of the data. AI functionality may be provided by an AI center (e.g., UiPath Al Center^{™}), which facilitates incorporation of Al/ML models into automations. Pre-built AI/ML models, model templates, and various deployment options may make such functionality accessible even to those who are not data scientists. Deployed automations (e.g., RPA robots, AOPs, and Al agents) may call AI/ML models from the Al center, such as AI/ML models 132. Performance of the AI/ML models may be monitored and be trained and improved using user-validated data, such as that provided by data review center 160. Users, as reviewers, may provide labeled data to the core hyper-automation system 120 via a review application 152 on computing systems 154. For instance, reviewers may validate that predictions by Al/ML models 132 and/or generative Al models 172 are accurate or provide corrections otherwise. Users, as reviewers, may also provide dynamic and/or direct user inputs (e.g., within the scope of human-in-the-loop operations) to Al agents, and the dynamic and/or direct user inputs (e.g., responses and corrections provided by the reviewers) may be used to train LLM(s) used by Al agents to be more accurate. In other words, the dynamic and/or direct user inputs may be saved as training data for retraining AI/ML models 132 and/or generative Al models 172 and may be stored in a database such as database 140, for example. The AI center may then schedule and execute training jobs to train the new versions of the Al/ML models using the training data. Both positive and negative examples may be stored and used for retraining of AI/ML models 132 and/or generative Al models 172.

The engagement functionality engages automations and users as one team for seamless collaboration on desired processes. Low-code applications may be built (e.g., via UiPath Apps^{™}) to connect browser tabs and legacy software, even that lacking APIs in some embodiments. Applications may be created quickly using a web browser through a rich library of drag-and-drop controls, for instance. An application can be connected to a single automation or multiple automations.

An action center (e.g., UiPath Action Center^{™})provides a straightforward and efficient mechanism to hand off processes from automations to users, and vice versa. Users may provide approvals or escalations, make exceptions, etc. The automation may then perform the automatic functionality of a given workflow.

A local assistant may be provided as a launchpad for users to launch automations (e.g., UiPath Autopilot^{™}). Such an assistant may also provide semantic cut-and-paste functionality (e.g., UiPath Clipboard AI^{™}). See, for example, U.S. Patent No. 12,124,806 and U.S. Patent Application Publication Nos. 2023/0107316, 2023/0415338, and 2024/0220581. This functionality may be provided in a tray provided by an operating system, for example, and may allow users to interact with RPA robots, AOPs, and Al agents and automation-powered applications on their computing systems. An interface may list automations approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

End-to-end measurement and government of an automation program at any scale may be provided by hyper-automation system 100 in some embodiments. Per the above, analytics may be employed to understand the performance of automations (e.g., via UiPath Insights^{™}). Data modeling and analytics using any combination of available business metrics and operational insights may be used for various automated processes. Custom-designed and pre-built dashboards allow data to be visualized across desired metrics, new analytical insights to be discovered, performance indicators to be tracked, ROI to be discovered for automations, telemetry monitoring to be performed on user computing systems, errors and anomalies to be detected, and automations to be debugged. An automation management console (e.g., UiPath Automation Ops^{™}) may be provided to manage automations throughout the automation lifecycle. An organization may govern how automations are built, what users can do with them, and which automations users can access.

Hyper-automation system 100 provides an iterative platform in some embodiments. Processes can be discovered, automations can be built, tested, and deployed, performance may be measured, use of the automations may readily be provided to users, feedback may be obtained, AI/ML models may be trained and retrained, and the process may repeat itself. This facilitates a more robust and effective suite of automations.

In some embodiments, per the above, generative Al models 172 are used. For instance, Al agents make use of generative Al models. Generative Al models 172 can generate various types of content, such as text, imagery, audio, and synthetic data. Various types of generative Al models may be used, including, but not limited to, LLMs, generative adversarial networks (GANs), diffusion models, flow-based models, variational autoencoders (VAEs), transformers, etc. In the case of LLMs, for example, NLP models such as word2vec, BERT, GPT-3, ChatGPT, etc. may be used in some embodiments to facilitate semantic understanding and provide more accurate and human-like answers. These models may be part of AI/ML models 132 hosted on server 130. For instance, the generative Al models 172 may be trained on a large corpus of textual information to perform semantic understanding, to understand the nature of what is present on a screen from text, to automatically generate code, and the like. Al agents may use such generative Al models 172. In certain embodiments, generative Al models 172 provided by an existing cloud ML service provider, such as OpenAI^{®}, Google^{®}, Amazon^{®}, Microsoft^{®}, IBM^{®}, Nvidia^{®}, Meta^{®}, etc., may be employed and trained to provide such functionality. In generative Al embodiments where generative Al model(s) 172 are remotely hosted, server 130 can be configured to integrate with third-party APIs, which allow server 130 to send a request to generative Al model(s) 172 including the requisite input information and receive a response in return (e.g., the semantic matches of fields between application versions, a classification of the type of the application on the screen, responses to natural language queries from users, etc.). Such embodiments may provide a more advanced and sophisticated user experience, as well as provide access to state-of-the-art NLP and other ML capabilities that these companies offer.

One aspect of generative Al models 172 in some embodiments is the use of transfer learning. In transfer learning, a pretrained generative Al mode, such as an LLM, is fine-tuned on a specific task or domain. This allows the LLM to leverage the knowledge already learned during its initial training and adapt it to a specific application. In the case of LLMs, the pretraining phase involves training an LLM on a large corpus of text, typically consisting of billions of words. During this phase, the LLM learns the relationships between words and phrases, which enables the LLM to generate coherent and human-like responses to text-based inputs. The output of this pretraining phase is an LLM that has a high level of understanding of the underlying patterns in natural language.

In the fine-tuning phase, the pretrained LLM is adapted to a specific task or domain by training the LLM on a smaller dataset that is specific to the task. For instance, in some embodiments, the LLM may be trained to analyze a certain type or multiple types of data sources to improve its accuracy with respect to their content. This data may include, but is not limited to, prompt tuning or instruction tuning, where the model is specifically trained to better understand and follow certain types of instructions or prompts, improving its ability to perform specific tasks when given appropriate instructions. Such information may be provided as part of the training data, and the LLM may learn to focus on these areas and more accurately identify data elements therein. Fine-tuning allows the LLM to learn the nuances of the task or domain, such as the specific vocabulary and syntax used in that domain, without requiring as much data as would be necessary to train an LLM from scratch. By leveraging the knowledge learned in the pretraining phase, the fine-tuned LLM can achieve state-of-the-art performance on specific tasks with a relatively small amount of training data.

LLMs may use a vector database. Vector databases index, store, and provide access to structured or unstructured data (e.g., text, images, time series data, etc.) alongside the vector embeddings thereof. Data such as text may be tokenized, where single letters, words, or sequences of words are parsed from the text into tokens. These tokens are then "embedded" into vector embeddings, which are the numerical representations of this data. Vector databases enable LLMs to find and retrieve similar objects quickly and at scale in production environments, which is not possible via manual processes.

Al and ML allow unstructured data to be numerically represented without losing the semantic meaning thereof in vector embeddings. A vector embedding is a long list of numbers, each describing a feature of the data object that the vector embedding represents. Similar objects are grouped together in the vector space. In other words, the more similar the objects are, the closer that the vector embeddings representing the objects will be to one another. Similar objects may be found using a vector search, similarity search, or semantic search and retrieval. The distance between the vector embeddings may be calculated using various techniques including, but not limited to, squared Euclidean or L2-squared distance, Manhattan or L1 distance, cosine similarity, dot product, Hamming distance, etc. It may be beneficial to select the same metric that is used to train the AI/ML model.

Vector indexing may be used to organize vector embeddings so data can be retrieved efficiently. Calculating the distance between a vector embedding and all other vector embeddings in the vector database using the k-Nearest Neighbors (kNN) algorithm can be computationally expensive if there are a large number of data points since the required calculations increase linearly (O(n)) with the dimensionality and the number of data points. It is more efficient to find similar objects using an approximate nearest neighbor (ANN) approach. The distances between the vector embeddings are pre-calculated, and similar vectors are organized and stored close to one another (e.g., in clusters or a graph) similar objects can be found faster. This process is called "vector indexing." ANN algorithms that may be used in some embodiments include, but are not limited to, clustering-based indexing, proximity graph-based indexing, tree-based indexing, hash-based indexing, compression-based indexing, etc.

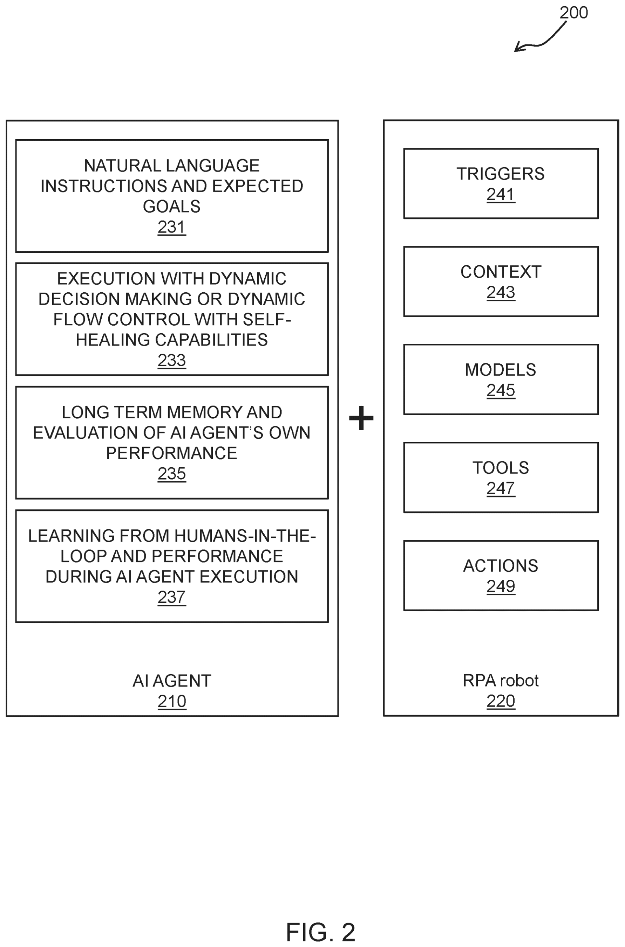

FIG. 2 illustrates some of the combined capabilities 200 of an Al agent 210 and an RPA robot 220, according to one or more embodiments. Al agent 210 is configured to process natural language instructions and achieve expected goals 231 therefrom, execute with dynamic decision making or dynamic flow control with self-healing capabilities 233, store information in long term memory and evaluate its own execution performance 235, and learn from humans-in-the-loop and self-performance during execution 237. RPA robot 220 can be leveraged by Al agent 210 to respond to triggers 241 (e.g., from a conductor application such as UiPath Orchestrator^{™}), to respond based on context 243 (i.e., RPA robot 220 can retrieve information from the context to execute deterministic steps, such as updating a document based on the retrieved information from the context; alternatively, agent 210 can use the retrieved context to update a dynamic plan and execute the next steps complete the goals as per the instructions), to leverage models 245 (e.g., CV models, document processing models, speech-to-text models, OCR models, Al models, etc.), leverage tools 247 (e.g., utilize tools available in the RPA ecosystem, such as complete automations, workflows within automations, integration service connector calls for 3^{rd} party and 1^{st} party services, RPA designer application activities, LLM calls, automations, etc.), and perform actions 249 that an RPA robot 220 can take (i.e., use the RPA robot 220 as a tool) based on input from the Al agent 210. Al agent 210 can also take actions 249 to update its memory, update the plan to accomplish its goals per instructions, self-evaluate and learn from the actions, self-heal when it encounters roadblocks, and escalate to users when it needs help.

As discussed above, agentic automation achieves various technical effects, benefits, and advantages. Agentic automation improves memory usage by requiring less storage for data and increases processor efficiency by reducing the number of calls and actions. Agentic automation provides the ability to process gigabytes, terabytes, petabytes, or more, of data that would not be possible by human-implemented processes, whether mental or by hand. Agentic automation enables fewer triggers and models to be used via dynamic decision making. For instance, and as discussed herein, whereas conventional software automations alone may require one hundred (100) actions in an example scenario, agentic automation in the same example scenario may reduce the required actions substantially (e.g., to fifteen (15) actions). Agentic automation may also employ context grounding to tether the Al agent 210 to a desired context that "constrains" the LLM to a pertinent context, thereby improving the efficiency of the LLM.

As used herein, "context grounding" refers to a methodology to improve models, such as LLMs, by integrating enterprise-specific information with pretrained knowledge, enabling accurate responses to specialized or recent queries. In some embodiments, context grounding uses external data to augment the LLM response and get a response that the LLM does not know about innately and answer queries on top of the context provided. By way of example, because unique industry terminology and complex document structures can pose challenges in ensuring effective retrieval and semantic matching, context grounding solves challenges by providing precise chunking of documents to ensure relevant information (e.g., from the unique industry terminology and complex document structures) can be passed to an LLM without noise. By way of an additional example, context grounding provides enhanced extraction and search techniques tailored to diverse industries and applications (e.g., tailored to the unique industry terminology and complex document structures) that improves the LLM response.

FIG. 3 depicts a diagraph 300 of AOPs, Al agents, RPA robots, and applications, according to one or more embodiments.

AOP pool 310 includes AOPs 1, 2, ..., *P* that implement business processes. Per the above, the AOPs may be implemented as BPMN, which is executed by an AOP execution engine, such as Temporal^{®}. AOPs can utilize Al agents and/or RPA robots to execute parts of the business process.

Al agent pool 320 includes Al agents 1, 2, ... , *I* that have been trained to perform various tasks, such as investigating claims, seeking resolution with employees, summarizing policies and technical specifications, etc. RPA robot pool 330 includes RPA robots 1, 2, ... , *J* that execute various automations, such as UI automations, semantic matching automations, form filling automations, etc.

Application pool 340 includes applications 1, 2, ... , *K* that the Al agents and/or RPA robots can interact with. For instance, the applications may include CRM applications, invoicing applications, payroll applications, banking applications, web applications, legacy system applications, word processing applications, spreadsheet applications, email applications, etc. The Al agents, RPA robots, and applications may be on a single computing system or on multiple or many computing systems. AOPs are typically in the cloud or otherwise server side, and may be on the same computing system(s) as conductor application 350 in some embodiments.

The AOPs can trigger or call the Al agents and RPA robots via conductor application 350. The Al agents and RPA robots can also trigger or call one another via conductor application. For instance, to call an RPA robot, the Al agent may make a "Start Job" call in conductor application 350. It should be noted that the RPA robots are deployed as automations that are controlled by conductor application 350. The Al agents, AOPs and RPA robots can also trigger or call certain applications. For instance, via information gleaned from human-in-the-loop operations, the Al agents may dynamically learn which RPA robots, other Al agents, and/or applications to trigger or call to achieve a task. For instance, an Al agent may learn to trigger an RPA robot via conductor application 350 to fill out and submit a web form. The Al agent may also learn to open Microsoft Excel^{®} and enter the form information into appropriate tabs, open and update a payroll application, etc. The Al agent may further learn to call or trigger an email resolution Al agent via conductor application 350 that reaches out to a customer service representative of a bank if an issue occurs. The technical effects, benefits, and advantages may be similar to those discussed above with respect to FIGS. 1 and 2 in some embodiments.

In order for Al agents, AOPs, and RPA robots to find one another, the Al agents may belong to a tenant. The designer application may call the conductor to get the list of available RPAs. There are three ways for getting the capabilities of automations in some embodiments: (1) the user provides a description of what the automation does while creating the workflow in the designer application; (2) Al agents and ML techniques are used to generate a summary of what a given workflow does; or (3) the developer can describe what the automation does in the designer application. The conductor application may also have lists of what applications are available to given Al agents and RPA robots. In other words, descriptions of available Al agents, RPA robots, and/or applications are derived from or assigned by Al agents, ML techniques, or users.

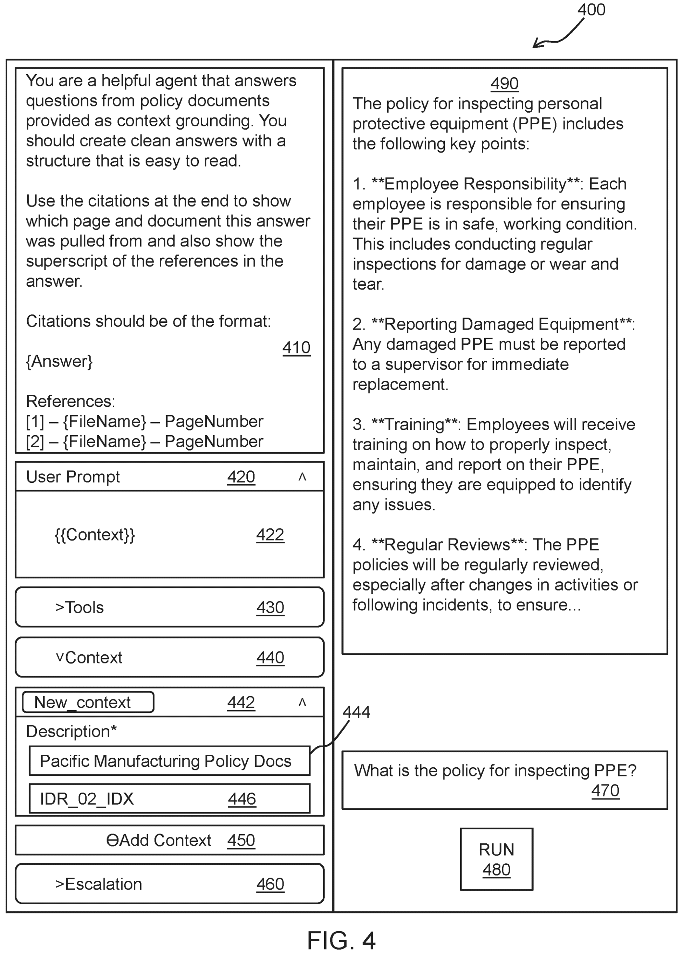

FIG. 4 illustrates an example agent service interface 400, according to one or more embodiments. As shown in FIG. 4, the agent answers questions regarding policy documents that are provided within context grounding. An agent instructions pane 410 includes a natural language description entered by a user of what the Al agent is intended to do. A user prompt 420 allows the developer to enter content for a user prompt in a content field 422, if desired. A tools dropdown 430 allows the developer to select tools that the Al agent will utilize, such as using APIs for applications, calling RPA robots to execute RPAs, etc.

A context dropdown 440 allows the developer to configure the context grounding for the Al agent. A context configuration pane 442 allows the developer to provide a description via description field 444 and an Elastic Common Schema (ECS) index via ECS index field 446 for specific policy documents that have information regarding contracts, stipulation and what to do, etc. in this example. The developer can also add context 450 to further supplement the context grounding. User escalation options can be configured via an escalation dropdown 460. A query field 470 allows the user to provide a query that the Al agent will respond to. The Al agent runs the query when the user clicks run button 480. The results during Al agent execution are then shown in execution pane 490 as the Al agent retrieves and outputs them.

FIG. 5 illustrates an example AOP development interface 500, according to one or more embodiments. AOP development interface 500 includes AOPs 510, Al agents 520, and RPA robots 530 that the user can select when developing a business process. These can be selected and dragged to a canvas 540 by an Al agent, an AOP, or a developer to develop the AOP. In this example, a credit check 541 is implemented upon a credit check request 542 by getting customer data 543 from a database 545. Next, an Al agent 546 is called to determine a customer type (e.g., highly likely to pay, likely to miss payments, frequently between jobs, etc.) by analyzing the customer data of the database 545. The type is then provided to an RPA robot 547 that takes this information into account when performing a credit check and producing the credit check result 549. Alternatively, the Al agent, the AOP, or the developer can provide a description of a business process into a field 550 and select a generate button 560. This description is provided to an LLM, which attempts to understand the business process and automatically create the AOP. The Al agent, the AOP, or the developer can then edit the AOP.

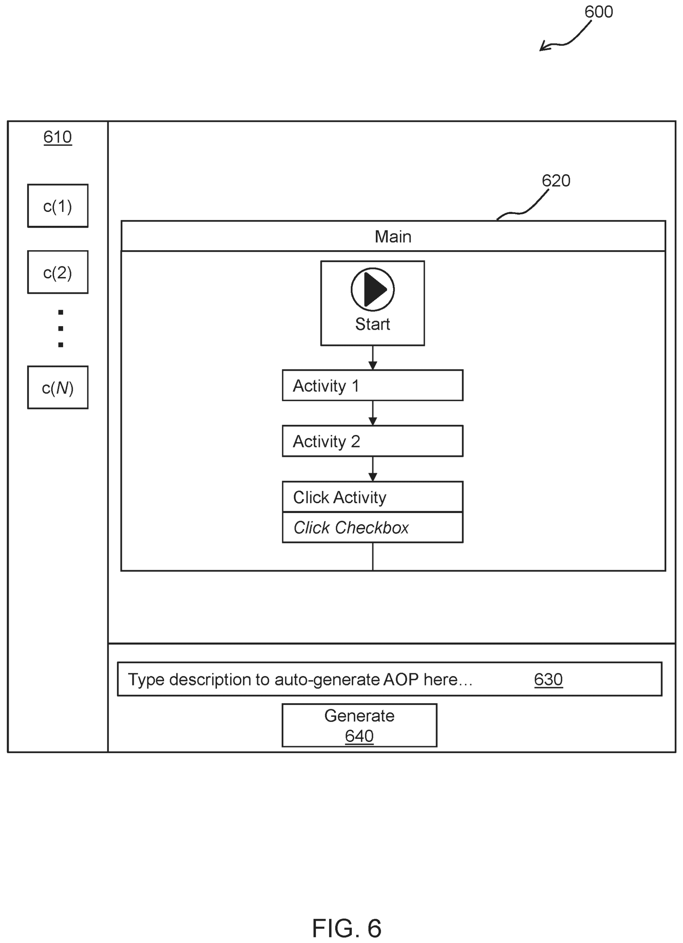

FIG. 6 illustrates an example RPA development interface 600, according to one or more embodiments. RPA development interface 600 includes component 610 that an Al agent, a AOP, or a developer can select when developing a workflow for an RPA robot. The Al agent, the AOP, or the developer can be selected and dragged to a canvas 620. Alternatively, the Al agent, the AOP, or the developer can provide a description of a workflow into a field 630 and select a generate button 640. This description is provided to an LLM, which attempts to understand the workflow and automatically create the RPA robot. The Al agent, the AOP, or the developer can then edit the workflow for the RPA robot. It should be noted that the functionality shown and described with respect to FIGS. 4, 5, and 6 may be provided in a single designer application in some embodiments.

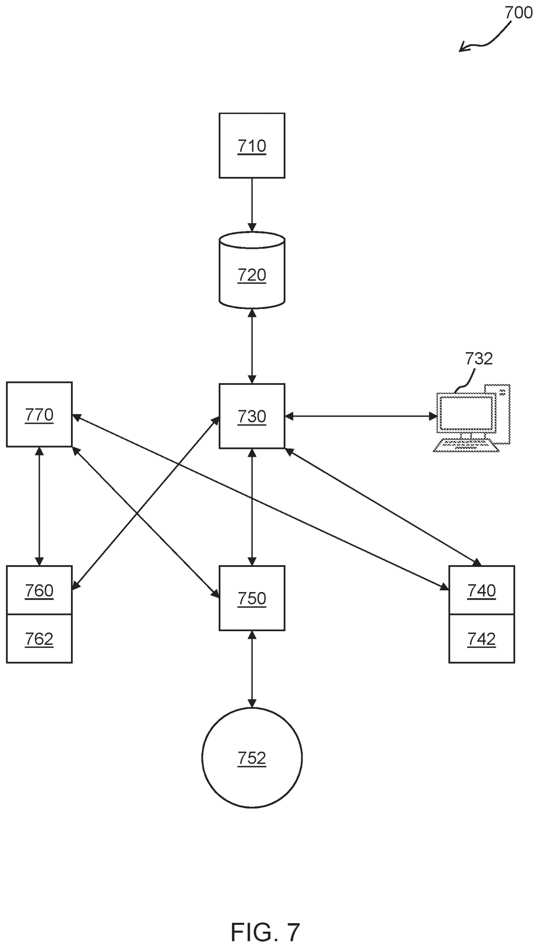

FIG. 7 illustrates an end-to-end Al agent, RPA robot, and AOP development and deployment system 700, according to one or more embodiments. A designer application 710 allows Al agents, AOPs, and developers to design workflows for subsequent automations (e.g., AOPs, Al agents, and/or RPA robots). Once these subsequent AOPs, Al agents, and/or RPA robots have been tested and validated, the validated and tested AOPs, Al agents, and/or RPA robots are packaged and published to an automation database 720.

A conductor application 730 manages deployments of these packaged and published automations. When software process 732 requests that an automation be run, conductor application 730 sends a start job command to AOP engine 740, which selects and starts the automation from AOPs 742. When executing AOPs 742, steps may be encountered that are implemented by Al agents 750 and/or RPA robots 760. In some cases, AOP engine 740 suspends the executing AOPs 742 and sends a request to conductor application 730 to send a start job request to an appropriate Al agent 750 or RPA robot 760 to execute the step.

In the case of an Al agent being requested, conductor application 730 sends the start job request to the appropriate Al agent 750. This request may include natural language text or other information provided by AOP engine 740 to conductor application 730. Al agent 750 then performs the step by executing an LLM 752 to assist in carrying out the task. Al agent 750 then sends information pertinent to the task (e.g., requested information, an indication that the step was completed, an indication that the step failed, etc.) to conductor 730, which provides this information to AOP engine 740. AOP engine 740 then resumes its operation.

In the case of an RPA robot being requested, conductor application 730 sends the start job request to the appropriate RPA robot 760. RPA robot 760 then executes a requested RPA 762. RPA robot 760 then sends information pertinent to the task (e.g., requested information, an indication that the step was completed, an indication that the step failed, etc.) to conductor application 730, which provides this information to AOP engine 740. The AOP engine 740 then resumes operation.

According to one or more embodiments, user action may be required by an AOP 742, an Al agent 750, or an RPA 762. In this case, the AOP engine 740, the Al agent 750, or the RPA robot 760 contacts a user 770 for a human-in-the-loop operation that contributes to the automation. After the user 770 provides the user action, the AOP engine 740, the Al agent 750, or the RPA robot 760 resumes the automation.

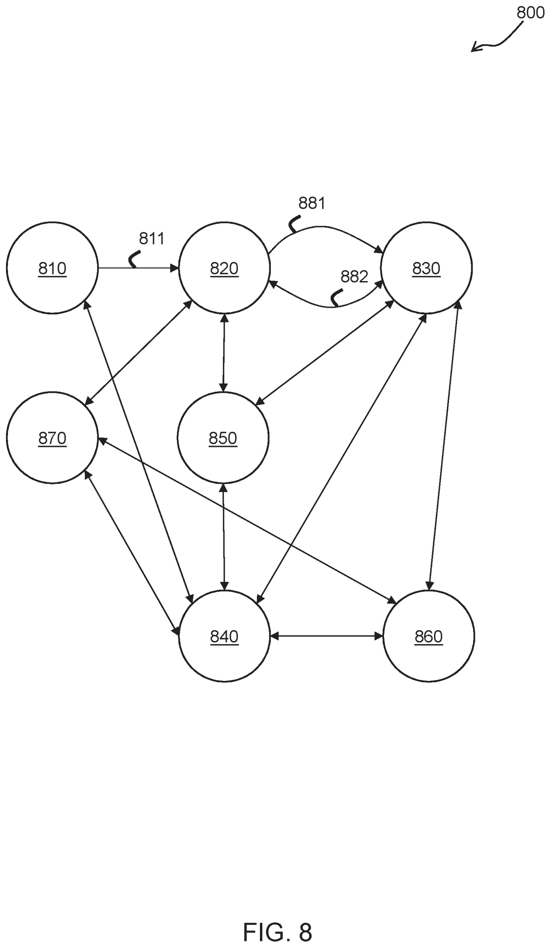

FIG. 8 is an architectural diagram illustrating an agentic automation and RPA system 800, according to one or more embodiments. In some embodiments, agentic automation and RPA system 800 is part of hyper-automation system 100 of FIG. 1. Agentic automation and RPA system 800 includes a designer 810 that allows an Al agent, a AOP, or a developer to design automations (e.g., workflows, natural language instructions for Al agents and AOPs, context grounding, tool configurations, RPA robots, AOPs, Al agents etc.). The designer 810 may provide a solution for application integration, as well as automating third-party applications, administrative Information Technology (IT) tasks, and business IT processes. The designer 810 may facilitate development of an automation project, which is a graphical representation of a business process. The designer 810 facilitates the development and deployment (as represented by arrow 811) of automations. The designer 810 may be an application that runs on a user's desktop, an application that runs remotely in a VM, a web application, etc.

The automation project enables automation of rule-based processes by giving an Al agent, a AOP, or a developer control of am execution order and a relationship between a custom set of steps developed in a workflow, i.e., "activities," as described herein. One commercial example of an embodiment of designer 810 is UiPath Studio^{™}. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable for more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once automation is developed in the designer 810, execution of business processes is orchestrated by the conductor 820, which orchestrates one or more robots 830, one or more Al agents 850, and/or one or more AOPs 870 that execute the workflows developed in the designer 810. One commercial example of an embodiment of the conductor 820 is UiPath Orchestrator^{™}. The conductor 820 facilitates management of the creation, monitoring, and deployment of resources in an environment. Conductor 820 may act as an integration point with third-party solutions and applications. Per the above, in some embodiments, the conductor 820 may be part of the core hyper-automation system 120 of FIG. 1.

It should be noted that RPA robots 830 may operate independently for deterministic processes. Al agents 850 and AOPs 870 can also operate independently (e.g., for non-deterministic processes), or utilize RPA robot(s) 830 or other Al agents 850 as tools to accomplish part of their agentic automations. Al agents 850 can drive composite automations that utilize both RPA robots 830 and Al agents 850, or vice versa, and AOPs 870 may include such composite automations.

The conductor 820 may manage a fleet of RPA robots 830 and Al agents 850, connecting and executing (as represented by arrow 881) RPA robots 830 and Al agents 850 from a centralized point (e.g., as requested by an AOP engine that is implementing an AOP). Types of RPA robots 830 that may be managed include, but are not limited to, attended robots, unattended robots, development robots (similar to unattended robots, but used for development and testing purposes), and nonproduction robots (similar to attended robots, but used for development and testing purposes). Attended robots are triggered by user events and operate alongside a user on the same computing system. Attended robots may be used with conductor 820 for a centralized process deployment and logging medium. Attended robots may help the user accomplish various tasks and may be triggered by user events. In some embodiments, processes cannot be started from conductor 820 on this type of robot and/or they cannot run under a locked screen. In certain embodiments, attended robots can only be started from a robot tray or from a command prompt. Attended robots should run under user supervision in some embodiments.

Unattended robots run unattended in virtual environments and can automate many processes. Unattended robots may be responsible for remote execution, monitoring, scheduling, and providing support for work queues. Debugging for all robot types may be run in the designer 810 in some embodiments. Both attended and unattended robots may automate various systems and applications including, but not limited to, mainframes, web applications, VMs, enterprise applications (e.g., those produced by SAP^{®}, Salesforce^{®}, Oracle^{®}, etc.), and computing system applications (e.g., desktop and laptop applications, mobile device applications, wearable computer applications, etc.).

The conductor 820 may have various capabilities (as represented by arrow 882) including, but not limited to, provisioning, deployment, configuration, queueing, monitoring, logging, and/or providing interconnectivity. Provisioning may include creating and maintenance of connections between RPA robots 830, Al agents 850, and/or AOPs 870 and conductor 820 (e.g., a web application). Deployment may include assuring the correct delivery of package versions to assigned RPA robots 830, Al agents 850, and/or AOPs 870 for execution. Configuration may include maintenance and delivery of RPA robot and Al agent environments and process configurations. Queueing may include providing management of queues and queue items. Monitoring may include keeping track of robot and Al agent identification data and maintaining user permissions. Logging may include storing and indexing logs to a database (e.g., a structured query language (SQL) database or a "not only" SQL (NoSQL) database) and/or another storage mechanism (e.g., ElasticSearch^{®}, which provides the ability to store and quickly query large datasets). Conductor 820 may provide interconnectivity by acting as the centralized point of communication for third-party solutions and/or applications.

The RPA robots 830 are execution agents that implement workflows built in the designer 810. One commercial example of some embodiments of RPA robots 830 is UiPath Robots^{™}. In some embodiments, the RPA robots 830 install the Microsoft Windows^{®} Service Control Manager (SCM)-managed service by default. As a result, such RPA robots 830 can open interactive Windows^{®} sessions under the local system account, and have the rights of a Windows^{®} service.

In some embodiments, the RPA robots 830 can be installed in a user mode. For such RPA robots 830, this means they have the same rights as the user under which a given RPA robot 830 has been installed. This feature may also be available for high density (HD) robots, which ensure full utilization of each machine at its maximum potential. In some embodiments, any type of the RPA robot 830 may be configured in an HD environment.

The RPA robots 830 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows^{®} sessions and act as a proxy between the conductor 820 and the execution hosts (i.e., the computing systems on which the RPA robots 830 are executed). These services are trusted with and manage the credentials for RPA robots 830. A console application is launched by the SCM under the local system.

User mode robot services in some embodiments manage and monitor Windows^{®} sessions and act as a proxy between conductor 820 and the execution hosts. User mode robot services may be trusted with and manage the credentials for RPA robots 830. A Windows^{®}application may automatically be launched if the SCM-managed robot service is not installed.

Executors may run given jobs under a Windows^{®}session (i.e., they may execute workflows. Executors may be aware of per-monitor dots per inch (DPI) settings. The Al agents 850 may be Windows^{®} Presentation Foundation (WPF) applications that display the available jobs in the system tray window. Note that these agents differ from the Al agents 850. The Al agents 850 may be a client of the service and may request to start or stop jobs and change settings. The command line is a client of the service. The command line is a console application that can request to start jobs and wait for their output.

Having components of the RPA robots 830 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from the designer 810 may also be independent of browser zoom level in some embodiments. For applications that are DPI-unaware or intentionally marked as unaware, DPI may be disabled in some embodiments.

The agentic automation and RPA system 800 in this embodiment is part of a hyper-automation system, such as hyper-automation system 100 of FIG. 1. Developers may use the designer 810 to build and test RPAs, AOPs, and Al agents that utilize Al/ML models deployed in core hyper-automation system 840 (e.g., as part of an Al center thereof). Such RPA robots may send input for execution of the AI/ML model(s) and receive output therefrom via core hyper-automation system 840.

One or more of the RPA robots 830 may be listeners, as described above. These listeners may provide information to core hyper-automation system 840 regarding what users are doing when they use their computing systems. This information may then be used by core hyper-automation system for process mining, task mining, task capture, etc.

An assistant/chatbot (of the conductor 820) may be provided on user computing systems to allow users to launch local RPA robots. The assistant/chatbot may be located in a system tray, for example. Chatbots may have a user interface so users can see text in the chatbot. Alternatively, chatbots may lack a user interface and run in the background, listening using the computing system's microphone for user speech.

In some embodiments, data labeling may be performed by a user of the computing system on which an RPA robot or Al agent is executing or on another computing system that the robot or Al agent provides information to. For instance, if a robot calls an Al/ML model that performs CV on images for VM users, but the Al/ML model does not correctly identify a button on the screen, the user may draw a rectangle around the misidentified or non-identified component and potentially provide text with a correct identification. This information may be provided to core hyper-automation system 540 and then used later for training a new version of the AI/ML model.

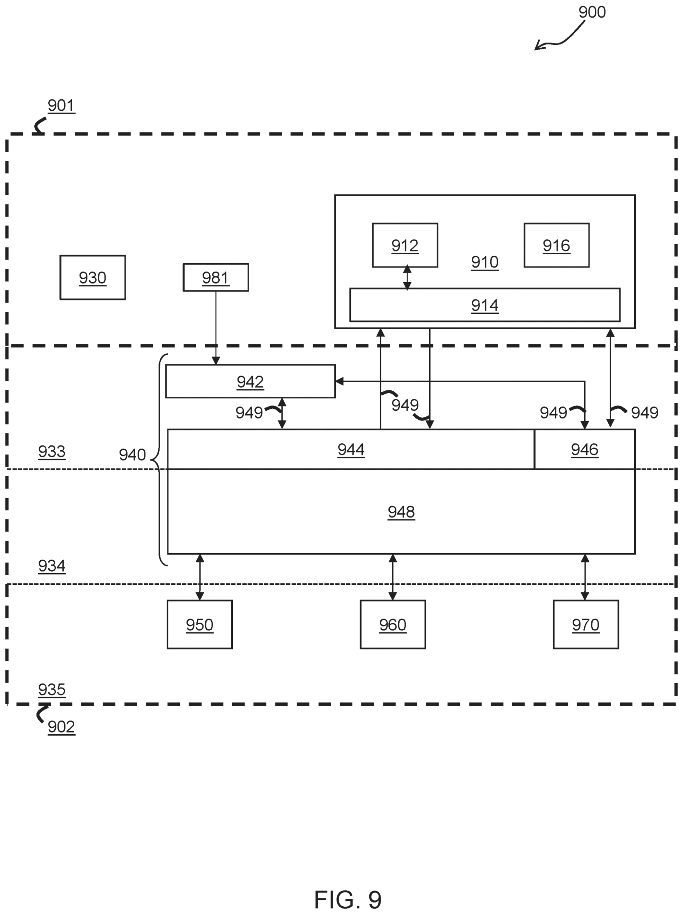

FIG. 9 is an architectural diagram illustrating a deployed RPA system 900, according to one or more embodiments. In some embodiments, RPA system 900 may be a part of agentic automation and RPA system 800 of FIG. 8 and/or hyper-automation system 100 of FIG. 1. It should be noted that the architecture of deployed RPA system 900 may not be used in some embodiments. Deployed RPA system 900 may be a cloud-based system, an on-premises system, a desktop-based system that offers enterprise level, user level, or device level automation solutions for automation of different computing processes, etc.

It should be noted that a client side 901, a server side 902, or both, may include any desired number of computing systems without deviating from the scope of the invention. On the client side 901, a robot application 910 includes executors 912, an execution agent 914, and a designer 916. However, in some embodiments, the designer 916 may not be running on the same computing system as executors 912 and execution agent 914. Executors 912 are running processes. Several business projects may run simultaneously. Execution agent 914 (e.g., a Windows^{®} service) is the single point of contact for all executors 912 in this embodiment. Execution agent 914 is also responsible for sending the status of the robot (e.g., periodically sending a "heartbeat" message indicating that the robot is still functioning) and downloading the required version of the package to be executed.

A listener 930 monitors and records data pertaining to user interactions with an attended computing system and/or operations of an unattended computing system on which listener 930 resides. The listener 930 may be an RPA robot, a AOP, an Al agent, part of an operating system, a downloadable application for the respective computing system, or any other software and/or hardware without deviating from the scope of the invention. Indeed, in some embodiments, the logic of the listener is implemented partially or completely via physical hardware.

On the server side 902, a presentation layer 933, a service layer 934, and a persistence layer 935 are provide, as well as a conductor 940. Further, the presentation layer 933 includes a web application 942, Open Data Protocol (oData) Representative State Transfer (REST) Application Programming Interface (API) endpoints 944, and notification and monitoring 946 and the service layer 934 includes an API implementation / business logic 948). Thus, as shown in FIG. 9, the conductor 940 includes the web application 942, the oData REST API endpoints 944, the notification and monitoring 946, and the API implementation / business logic 948. The persistence layer 935 includes a database server 950, a AI/ML server 960, and an indexer server 970.

The communication between execution agent 914 and conductor 940 is always initiated by execution agent 914 in some embodiments. In the notification scenario, execution agent 914 may open a WebSocket channel that is later used by conductor 940 to send commands to the RPA robot (e.g., start, stop, etc.). It should be noted that, while not shown here in order to reduce clutter in FIG. 9, Al agents can also interact with the conductor 940, as discussed above with respect to FIGS. 1 and 8, for example. The conductor 940 may orchestrate the operations of the Al agents, AOPs, and RPA robots.

All messages in this embodiment are logged into the conductor 940, which processes them further via the database server 950, the Al/ML server 960, the indexer server 970, or any combination thereof. As discussed herein, and with respect to FIG. 8, executors 912 may be robot components.

In some embodiments, an RPA robot represents an association between a machine name and a username. The robot may manage multiple executors at the same time. On computing systems that support multiple interactive sessions running simultaneously (e.g., Windows^{®} Server 2012), multiple RPA robots may be running at the same time, each in a separate Windows^{®} session using a unique username.

The conductor 940 may also facilitate interaction between the Al agents and AI/ML models via AI/ML server 960, which may store and/or facilitate access to generative Al models (e.g., the generative Al models 172 of FIG. 1).

In some embodiments, most actions that a user performs in the interface of conductor 940 (e.g., via a browser 981) are performed by calling various APIs. Such actions may include, but are not limited to, starting jobs on robots, adding/removing data in queues, scheduling jobs to run unattended, etc. without deviating from the scope of the invention. The web application 942 is the visual layer of the server platform. In this embodiment, the web application 942 uses Hypertext Markup Language (HTML) and JavaScript (JS). However, any desired markup languages, script languages, or any other formats may be used without deviating from the scope of the invention. The user interacts with web pages from web application 942 via the browser 941 in this embodiment in order to perform various actions to control the conductor 940. For instance, the user may create RPA robot groups, assign packages to the RPA robots, analyze logs per RPA robot and/or per process, start and stop RPA robots, etc.

In addition to web application 942, the conductor 940 also includes service layer that exposes the oData REST API endpoints 944. However, other endpoints may be included without deviating from the scope of the invention. The REST API is consumed by both the web application 942 and the execution agent 914. Execution agent 914 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 940. Queueing REST endpoints may be responsible for queues and queue item management, such as adding data to a queue, obtaining a transaction from the queue, setting the status of a transaction, etc.

Monitoring REST endpoints may monitor web application 942 and execution agent 914. Notification and monitoring API 946 may be REST endpoints that are used for registering execution agent 914, delivering configuration settings to execution agent 914, and for sending/receiving notifications from the server and execution agent 914. Notification and monitoring API 946 may also use WebSocket communication in some embodiments. As shown in FIG. 9, one or more activities/actions described herein are represented by arrows 949.

The APIs in the service layer 934 may be accessed through configuration of an appropriate API access path in some embodiments, e.g., based on whether conductor 940 and an overall hyper-automation system have an on-premises deployment type or a cloud-based deployment type. APIs for conductor 940 may provide custom methods for querying stats about various entities registered in conductor 940. Each logical resource may be an oData entity in some embodiments. In such an entity, components such as the robot, process, queue, etc., may have properties, relationships, and operations. APIs of conductor 940 may be consumed by web application 942 and/or execution agents 914 in two ways in some embodiments: (1) by getting the API access information from conductor 940; or (2) by registering an external application to use the oAuth flow.

The persistence layer 935 includes a trio of servers in this embodiment - database server 950 (e.g., a SQL server), Al/ML server 960 (e.g., a server providing Al/ML model serving services, such as Al center functionality) and the indexer server 970. Database server 950 in this embodiment stores the configurations of the robots and Al agents, robot and Al agent groups, AOPs, associated processes, users, roles, schedules, etc. This information is managed through the web application 942 in some embodiments. Database server 950 may manage queues and queue items. In some embodiments, database server 950 may store messages logged by the robots and Al agents (in addition to or in lieu of indexer server 970). Database server 950 may also store process mining, task mining, and/or task capture-related data, received from the listener 930 installed on the client side, for example. While no arrow is shown between the listener 930 and the database 950, it should be understood that the listener 930 is able to communicate with the database 950, and vice versa in some embodiments. This data may be stored in the form of PDDs, images, XAML files, etc. It should be noted that structured and/or unstructured data may be stored. Listener 930 may be configured to intercept user actions, processes, tasks, and performance metrics on the respective computing system on which the listener 930 resides. For example, the listener 930 may record user actions (e.g., clicks, typed characters, locations, applications, active elements, times, etc.) on its respective computing system and then convert these into a suitable format to be provided to and stored in database server 950.

AI/ML server 960 facilitates incorporation of Al/ML models into automations. Pre-built AI/ML models, model templates, and various deployment options may make such functionality accessible even to those who are not data scientists. Deployed automations (e.g., RPA robots and/or Al agents) may call AI/ML models from the AI/ML server 960. Performance of the AI/ML models may be monitored and be trained and improved using user-validated data. The Al/ML server 960 may schedule and execute training jobs to train new versions of the AI/ML models. AI/ML model server may also store and/or access generative Al models.

The AI/ML server 960 may store data pertaining to Al/ML models and ML packages for configuring various ML skills for a user at development time. An ML skill, as used herein, is a pre-built and trained ML model for a process, which may be used by an automation, for example. The Al/ML server 960 may also store data pertaining to document understanding technologies and frameworks, algorithms and software packages for various AI/ML capabilities including, but not limited to, intent analysis, NLP, speech analysis, different types of AI/ML models, etc.

The indexer server 970, which is optional in some embodiments, stores and indexes the information logged by the robots. In certain embodiments, the indexer server 970 may be disabled through configuration settings. In some embodiments, the indexer server 970 uses ElasticSearch^{®}, which is an open source project full-text search engine. Messages logged by robots (e.g., using activities like log message or write line) may be sent through the logging REST endpoint(s) to the indexer server 970, where they are indexed for future utilization.

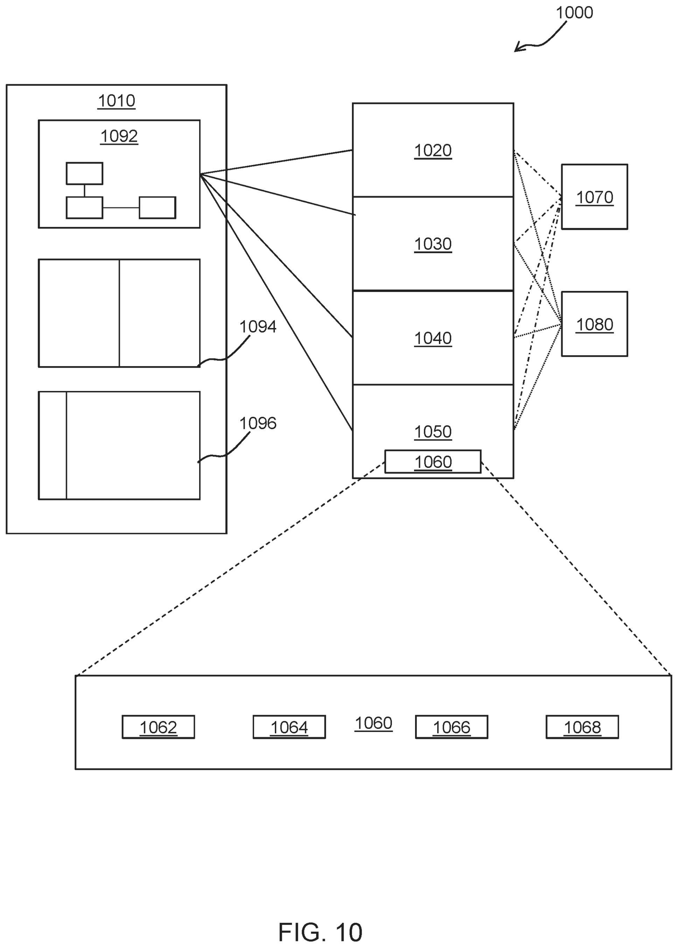

FIG. 10 is an architectural diagram illustrating the relationship 1000 between a designer 1010, activities 1020, 1030, 1040, 1050, drivers 1060, APIs 1070, and Al/ML models 1080, according to one or more embodiments. Per the above, an Al agent, an AOP, or a developer uses the designer 1010 to develop workflows for automations (e.g., workflows executed by RPA robots, Al agents, and AOPs).

The Al agent, the AOP, or the developer can design and configure workflows 1092, design and configure agentic automations 1094 for Al agents (e.g., providing natural language descriptions, context grounding, tools, etc. for Al agents), and design and configure AOPs 1096 (see also FIGS. 4B, 5, and 6). The various types of activities may be displayed to the developer in some embodiments. The designer 1010 may be local to the user's computing system or remote thereto (e.g., accessed via VM or a local web browser interacting with a remote web server). Workflows for RPA robots may include user-defined activities 1020, API-driven activities 1030, Al/ML activities 1040, and/or UI automation activities 1050. User-defined activities 1020 and API-driven activities 1040 interact with applications via their APIs. User-defined activities 1020 and/or Al/ML activities 1040 may call one or more AI/ML models 1080 in some embodiments, which may be located locally to the computing system on which the robot is operating and/or remotely thereto.

Some embodiments are able to identify non-textual visual components in an image, which is called CV herein. However, it should be noted that in some embodiments, CV incorporates OCR. CV may be performed at least in part by Al/ML model(s) 1080. Some CV activities pertaining to such components may include, but are not limited to, extracting of text from segmented label data using OCR, fuzzy text matching, cropping of segmented label data using ML, comparison of extracted text in label data with ground truth data, etc. In some embodiments, there may be hundreds or even thousands of activities that may be implemented in user-defined activities 1020. However, any number and/or type of activities may be used without deviating from the scope of the invention.

UI automation activities 1050 are a subset of special, lower-level activities that are written in lower-level code and facilitate interactions with the screen. UI automation activities 1050 facilitate these interactions via drivers 1060 that allow the robot to interact with the desired software. For instance, drivers 1060 may include operating system (OS) drivers 1062, browser drivers 1064, VM drivers 1066, enterprise application drivers 1068, etc. One or more of Al/ML models 1080 may be used by UI automation activities 1050 in order to perform interactions with the computing system in some embodiments. In certain embodiments, AI/ML models 1080 may augment drivers 1060 or replace them completely. Indeed, in certain embodiments, drivers 1060 are not included.

Drivers 1060 may interact with the OS at a low level looking for hooks, monitoring for keys, etc. via OS drivers 1062. Drivers 1060 may facilitate integration with Chrome^{®}, IE^{®}, Citrix^{®}, SAP^{®}, etc. For instance, the "click" activity performs the same role in these different applications via drivers 1060.

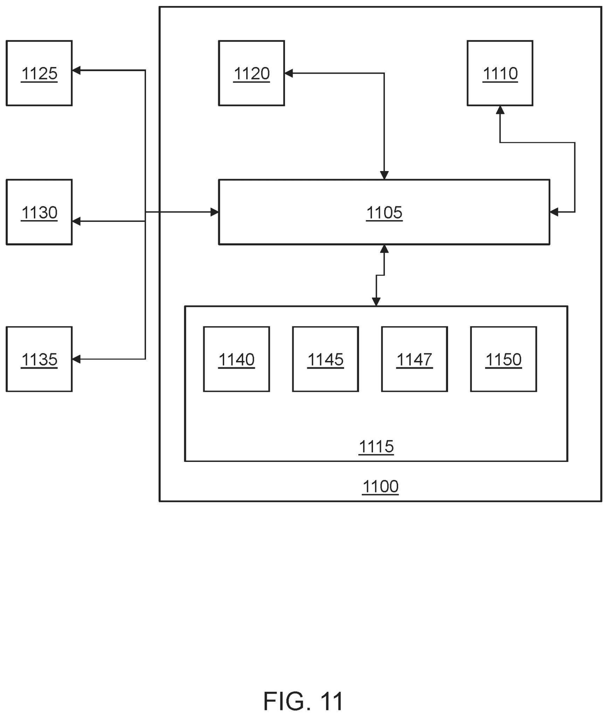

FIG. 11 is an architectural diagram illustrating a computing system 1100, according to one or more embodiments. In some embodiments, computing system 1100 may be one or more of the computing systems depicted and/or described herein. In some embodiments, computing system 1100 may be one or more of the computing systems depicted and/or described herein. In certain embodiments, computing system 1100 may be part of a hyper-automation system, such as that shown in FIGS. 1 and 8. Computing system 1100 includes a bus 1105 or other communication mechanism for communicating information, and processor(s) 1110 coupled to bus 1105 for processing information. Processor(s) 1110 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 1110 may also have multiple processing cores, and at least some of the cores may be configured to perform specific functions. Multi-parallel processing may be used in some embodiments. In certain embodiments, at least one of processor(s) 1110 may be a neuromorphic circuit that includes processing elements that mimic biological neurons. In some embodiments, neuromorphic circuits may not require the typical components of a Von Neumann computing architecture.

Computing system 1100 further includes a memory 1115 for storing information and instructions to be executed by processor(s) 1110. Memory 1115 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 1110 and may include volatile media, non-volatile media, or both. The media may also be removable, non-removable, or both. Computing system 1100 includes a communication device 1120, such as a transceiver, to provide access to a communications network via a wireless and/or wired connection. In some embodiments, communication device 1120 may include one or more antennas that are singular, arrayed, phased, switched, beamforming, beamsteering, a combination thereof, and or any other antenna configuration without deviating from the scope of the invention.

Processor(s) 1110 are further coupled via bus 1105 to a display 1125. Any suitable display device and haptic I/O may be used without deviating from the scope of the invention. A keyboard 1130 and a cursor control device 1135, such as a computer mouse, a touchpad, etc., are further coupled to bus 1105 to enable a user to interface with computing system 1100. However, in certain embodiments, a physical keyboard and mouse may not be present, and the user may interact with the device solely through display 1125 and/or a touchpad (not shown). Any type and combination of input devices may be used as a matter of design choice. In certain embodiments, no physical input device and/or display is present. For instance, the user may interact with computing system 1100 remotely via another computing system in communication therewith, or computing system 1100 may operate autonomously.

Memory 1115 stores software modules that provide functionality when executed by processor(s) 1110. The modules include an operating system 1140 for computing system 1100.

The modules further include a trace module 1145 that is configured to perform all or part of the processes described herein or derivatives thereof.

The modules further include an agentic memory module 1147 that is configured to perform all or part of the processes described herein or derivatives thereof including, but not limited, to execute agentic memory storing context grounding and other results for automations. By way of example, the agentic memory module 1147 is configured to dynamic cache (i.e., storing) escalations, tool calls, user interaction(s) or feedback, context grounding, etc. to provide enhanced efficiency and minimizing calls.

Computing system 1100 may include one or more additional functional modules 1150 that include additional functionality. By way of example, the one or more additional functional modules 1150 can include an extraction and searching module configured to execute advanced agentic extraction and searching for context grounding within automations.

One skilled in the art will appreciate that a "computing system" could be embodied as a server, an embedded computing system, a personal computer, a console, a personal digital assistant (PDA), a mobile phone, a tablet computing device, a smart watch, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a LAN, a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit including custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

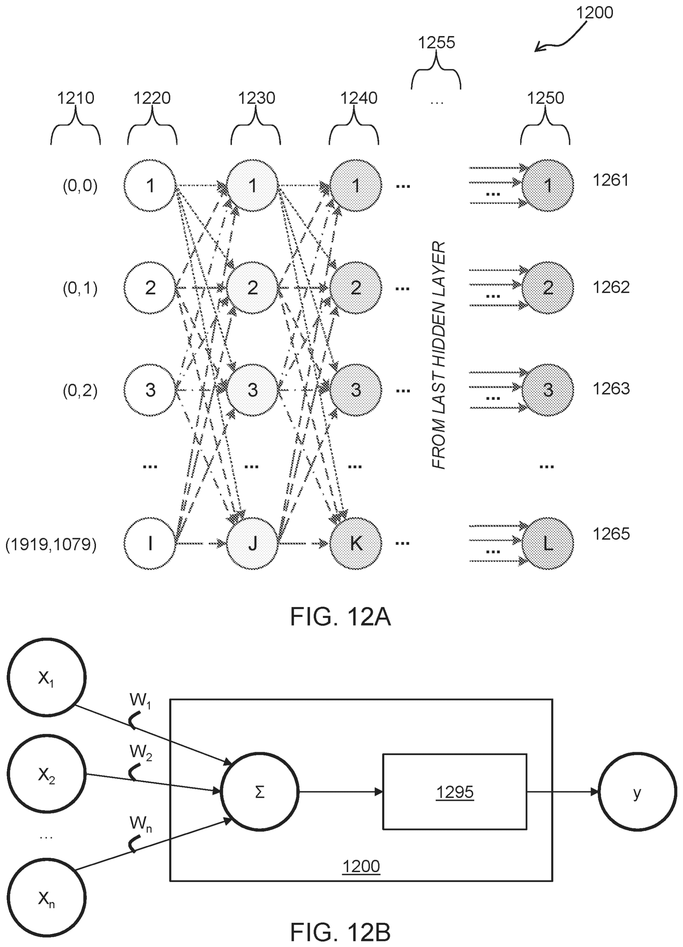

Various types of AI/ML models may be trained and deployed without deviating from the scope of the invention. For instance, FIG. 12A illustrates an example of a neural network 1200 that has been trained to receive inputs (as represented by column 1210) for input "neurons" 1 to I of an input layer (as represented by column 1220), according to one or more embodiments. The neural network 1200 includes a number of hidden layers (as represented by column 1230 and 1240). Both DLNNs and shallow learning neural networks (SLNNs) usually have multiple layers, although SLNNs may only have one or two layers in some cases, and normally fewer than DLNNs. Typically, the neural network architecture includes an input layer, multiple intermediate layers (e.g., the hidden layers), and an output layer (as represented by column 1250), as is the case in neural network 1200.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 12A, diverse industries and applications, unique industry terminology, complex document structures, and enterprise-specific information with pretrained knowledge, etc. are provided as the input layer and fed as inputs to the J neurons of hidden layer 1. Various other inputs are possible, including, but not limited to, computing system state information, published automations, business rules, information regarding what workflows and/or tasks pertain to, initial definitions of automations, process automation documents, etc. While all of these inputs are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the invention.

Hidden layer 2 (1240) receives inputs from hidden layer 1 (1230), hidden layer 3 receives inputs from hidden layer 2 (1240), and so on for all hidden layers until the last hidden layer (as represented by the ellipses 1255) provides its outputs as inputs for the output layer. While multiple suggestions are shown here as output, in some embodiments, only a single output suggestion is provided. In certain embodiments, the suggestions are ranked based on confidence scores. In this embodiment, the outputs can include accurate responses to specialized or recent queries.

It should be noted that numbers of neurons I, J, K, and L are not necessarily equal. Thus, any desired number of layers may be used for a given layer of neural network 1200 without deviating from the scope of the invention. Indeed, in certain embodiments, the types of neurons in a given layer may not all be the same.

Neural network 1200 is trained to assign confidence score(s) to appropriate outputs. In order to reduce predictions that are inaccurate, only those results with a confidence score that meets or exceeds a confidence threshold may be provided in some embodiments. For instance, if the confidence threshold is 80%, outputs with confidence scores exceeding this amount may be used and the rest may be ignored. According to one or more embodiments, the output layer 1250 indicates that two text fields (as represented by outputs 1261 and 1262), a text label (as represented by output 1263), and a submit button (as represented by output 1265) were found. Neural network 1200 may provide the locations, dimensions, images, and/or confidence scores for these elements without deviating from the scope of the one or more embodiments herein, which can be used subsequently by an RPA robot or another automation that uses this output for a given purpose.

Neural networks are probabilistic constructs that typically have confidence score(s). This may be a score learned by the AI/ML model based on how often a similar input was correctly identified during training. Some common types of confidence scores include a decimal number between 0 and 1 (which can be interpreted as a confidence percentage as well), a number between negative ∞ and positive ∞, a set of expressions (e.g., "low," "medium," and "high"), etc. Various post-processing calibration techniques may also be employed in an attempt to obtain a more accurate confidence score, such as temperature scaling, batch normalization, weight decay, negative log likelihood (NLL), etc.

"Neurons" in a neural network are implemented algorithmically as mathematical functions that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

An example of a neuron 1295 is shown in FIG. 12B. Inputs *x*₁, *x*₂, ... , *xₙ* from a preceding layer are assigned respective weights *w*₁, *w*₂, ... , *wₙ.* Thus, the collective input from preceding neuron 1 is *w*₁*x*₁. These weighted inputs are used for the neuron's summation function modified by a bias, such as: ${\sum }_{i = 1}^{m} \left({w}_{i}{x}_{i}\right) + bias$ (1)

This summation is compared against an activation function *f*(*x*) to determine whether the neuron "fires". For instance, *f*(*x*) may be given by: $f \left(x\right) = \left\{\begin{matrix}1 if \sum wx + bias \geq 0 \\ 0 if \sum wx + bias < 0\end{matrix}\right.$ (2)

The output *y* of neuron 1295 may thus be given by: $y = f \left(x\right) {\sum }_{i = 1}^{m} \left({w}_{i}{x}_{i}\right) + bias$ (3)

In this case, neuron 1295 is a single-layer perceptron. However, any suitable neuron type or combination of neuron types may be used without deviating from the scope of the invention. It should also be noted that the ranges of values of the weights and/or the output value(s) of the activation function may differ in some embodiments without deviating from the scope of the invention.

A goal, or "reward function," is often employed. A reward function explores intermediate transitions and steps with both short-term and long-term rewards to guide the search of a state space and attempt to achieve a goal (e.g., finding the most accurate answers to user inquiries based on associated metrics). During training, various labeled data is fed through neural network 1200. Successful identifications strengthen weights for inputs to neurons, whereas unsuccessful identifications weaken them. A cost function, such as mean square error (MSE) or gradient descent may be used to punish predictions that are slightly wrong much less than predictions that are very wrong. If the performance of the Al/ML model is not improving after a certain number of training iterations, a data scientist may modify the reward function, provide corrections of incorrect predictions, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input *x* is processed through a series of *N* nonlinear activity functions *fᵢ* between each layer *i* = 1, ... , *N* of the network, with the output at a given layer first multiplied by a synaptic matrix *Wᵢ*, and with a bias vector *bᵢ* added. The network output *o*, given by $o = {f}_{N} \left({W}_{N}{f}_{N - 1}\left({W}_{N - 1}{f}_{N - 2}\left(…{f}_{1}\left({W}_{1}x+{b}_{1}\right)…\right)+{b}_{N - 1}\right)+{b}_{N}\right)$ (4)

In some embodiments, o is compared with a target output *t*, resulting in an error $E = \frac{1}{2} {\left‖o-t\right‖}^{2}$, which is desired to be minimized.

Optimization in the form of a gradient descent procedure may be used to minimize the error by modifying the synaptic weights *Wᵢ* for each layer. The gradient descent procedure requires the computation of the output o given an input *x* corresponding to a known target output *t*, and producing an error *o*-- *t.* This global error is then propagated backwards giving local errors for weight updates with computations similar to, but not exactly the same as, those used for forward propagation. In particular, the backpropagation step typically requires an activity function of the form ${p}_{j} \left({n}_{j}\right) = {f}_{j}^{′} \left({n}_{j}\right)$, where *nⱼ* is the network activity at layer *j* (i.e., *nⱼ = Wⱼo*_{*j-*1} *+ bⱼ*) where *oⱼ = fⱼ*(*nⱼ*) and the apostrophe ' denotes the derivative of the activity function *f*.

The weight updates may be computed via the formulae: ${d}_{j} = \left\{\begin{matrix}\left(o-t\right) ∘ {p}_{j} \left({n}_{j}\right) , & j = N \\ {W}_{j + 1}^{T} {d}_{j + 1} ∘ {p}_{j} \left({n}_{j}\right) , & j < N\end{matrix}\right.$ (5) $\frac{\partial E}{\partial {W}_{j + 1}} = {d}_{j + 1} {\left({o}_{j}\right)}^{T}$ (6) $\frac{\partial E}{\partial {b}_{j + 1}} = {d}_{j + 1}$ (7) ${W}_{j}^{new} = {W}_{j}^{old} - η \frac{\partial E}{\partial {W}_{j}}$ (8) ${b}_{j}^{new} = {b}_{j}^{old} - η \frac{\partial E}{\partial {b}_{j}}$ (9)
where ∘ denotes a Hadamard product (i.e., the element-wise product of two vectors), ^{T} denotes the matrix transpose, and *oⱼ* denotes *fⱼ*(*Wⱼo*_{*j*-1} + *bⱼ*), with *o*₀ *= x.* Here, the learning rate *η* is chosen with respect to machine learning considerations. Below, *η* is related to the neural Hebbian learning mechanism used in the neural implementation. Note that the synapses *W* and *b* can be combined into one large synaptic matrix, where it is assumed that the input vector has appended ones, and extra columns representing the *b* synapses are subsumed to *W*.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the invention. Once trained on the training data, the AI/ML model may be tested on a set of evaluation data that the AI/ML model has not encountered before. This helps to ensure that the AI/ML model is not "over fit" such that it performs well on the training data but does not perform well on other data.

In some embodiments, it may not be known what accuracy level is possible for the AI/ML model to achieve. Accordingly, if the accuracy of the Al/ML model is starting to drop when analyzing the evaluation data (i.e., the model is performing well on the training data, but is starting to perform less well on the evaluation data), the Al/ML model may go through more epochs of training on the training data (and/or new training data). In some embodiments, the AI/ML model is only deployed if the accuracy reaches a certain level or if the accuracy of the trained AI/ML model is superior to an existing deployed Al/ML model. In certain embodiments, a collection of trained Al/ML models may be used to accomplish a task. For example, one Al/ML model may be trained to recognize images, another may recognize text, yet another may recognize semantic and/or ontological associations, etc.

It should be noted that in addition to or in lieu of neural networks, some embodiments may use transformer networks such as SentenceTransformers^{™}, which is a Python^{™} framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

NLP models such as word2vec, BERT, GPT-3, ChatGPT, other LLMs, etc. may be used in some embodiments to facilitate semantic understanding and provide more accurate and human-like answers, per the above. Other techniques, such as clustering algorithms, may be used to find similarities between groups of elements. Clustering algorithms may include, but are not limited to, density-based algorithms, distribution-based algorithms, centroid-based algorithms, hierarchy-based algorithms. K-means clustering algorithms, the DBSCAN clustering algorithm, the Gaussian mixture model (GMM) algorithms, the balance iterative reducing and clustering using hierarchies (BIRCH) algorithm, etc. Such techniques may also assist with categorization.

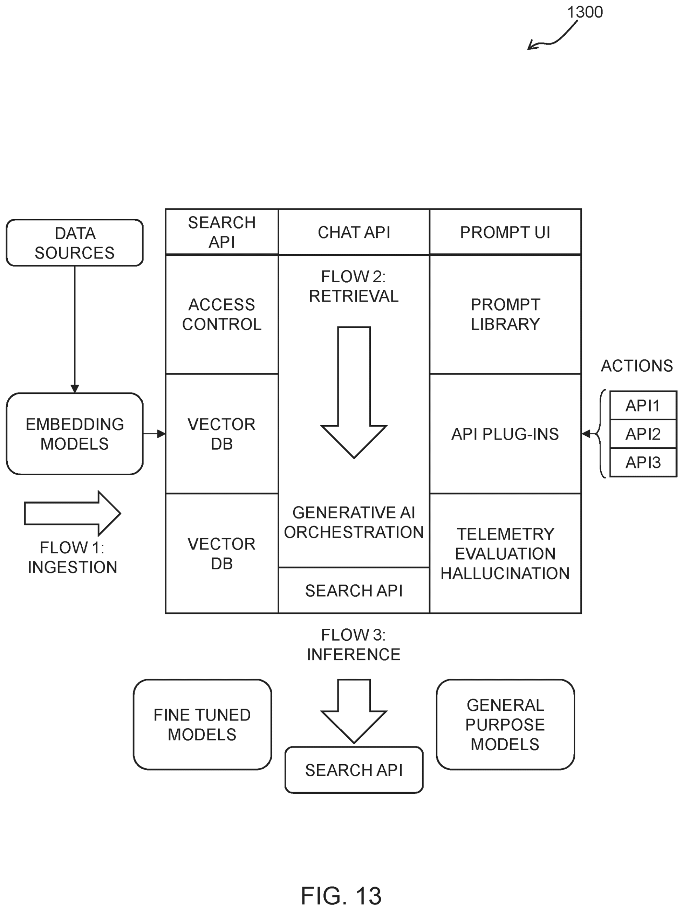

FIG. 13 is an architectural diagram illustrating a reference architecture 1300 for a generative Al model, according to one or more embodiments. The architecture consists of several layers: API plug-ins, a prompt library, vector data source ingestion, access processing control, a model-training pipeline, an assessment layer to assess hallucination/telemetry/evaluations, a BYOM embedding layer, and an LLM orchestration layer. There are also retrieval plug-ins, access control plug-ins, and API plug-ins that integrate into enterprise systems.

There are three main flows in the reference architecture 1300.

Flow 1: Ingestion can include a data ingestion and training flow. For example, data is read from multiple data stores, preprocessed, chunked, and trained through an embedding model (e.g., RAG and a training pipeline (i.e., fine-tuning). The vector database stores the chunked document embeddings (e.g., vector embeddings) that allow for better semantic, similarity-based data retrievals.

Flow 2: Retrieval can include prompt augmentation using data retrieval flow. For example, once a user query arrives at the API layer, the prompt is selected, followed by data retrievals through the vector database or API plug-ins to get the right contextual data before the prompt is passed to the LLM layer.

Flow 3: Inference can include LLM inference flow. For example, this is where there is a choice to use general purpose foundation models from or a self-hosted foundation model. Fine-tuned models may be used when tuned for a specific task or use case. The response is evaluated for accuracy and other metrics, including hallucinations.

It should be noted that in some embodiments, a generative Al model with multiple "heads" may be used. Heads refer to output layers of the generative Al model. Generative Al models, such as generative AI models 172 in FIG. 1, typically have a sequence of layers, and each head will often share the first few layers of the model before diverging into their own distinct layers.

FIG. 14 is a flowchart illustrating a process 1400 for training Al/ML model(s), according to one or more embodiments. In some embodiments, the Al/ML model(s) may be generative Al models, per the above. In the case of neural networks, the architecture typically includes multiple layers of neurons, including input, output, and hidden layers. See FIGS. 12A and 12B, for example. The hidden layers in between process the input data and generate intermediate representations of the input that are used to generate the output. These hidden layers can include various types of neurons, such as convolutional neurons, recurrent neurons, and/or transformer neurons. Generative Al models may also have various layers.

The process 1400 performed in FIG. 14 may be performed by an automation as described herein implemented in a computer program in accordance with one or more embodiments. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., see FIG. 11) to implement all or part of the process 1400 described in FIG. 14, which may also be stored on the computer-readable medium.

The training process in some embodiments begins with providing data of diverse industries and applications, unique industry terminology, complex document structures, and enterprise-specific information with pretrained knowledge, etc., whether labeled or unlabeled, at block 1410. In the case of generative AI models, which are often generally trained, the training process may be skipped unless fine-tuned models are desired, as discussed in more detail below. The AI/ML model is then trained over multiple epochs at block 1420 and results are reviewed at block 1430. While various types of Al/ML models may be used, LLMs and other generative AI models are typically trained (fine-tuned) using a process called "supervised learning", which is also discussed above. Supervised learning involves providing the model with a large dataset, which the model uses to learn the relationships between the inputs and outputs. During the training process, the model adjusts the weights and biases of the neurons in the neural network to minimize the difference between the predicted outputs and the actual outputs in the training dataset.

One aspect of the models in some embodiments is the use of transfer learning. For instance, transfer learning may take advantage of a pretrained model, such as ChatGPT, which is fine-tuned on a specific task or domain at block 1420. This allows the model to leverage the knowledge already learned from the pretraining phase and adapt it to a specific application via the training phase of block 1420.

The pretraining phase involves training the model on an initial set of training data that may be more general. During this phase, the model learns relationships in the data. In the fine-tuning phase (e.g., performed during block 1420 in addition to or in lieu of the initial training phase in some embodiments if a pretrained model is used as the initial basis for the final model), the pretrained model is adapted to a specific task or domain by training the model on a smaller dataset that is specific to the task. For instance, in some embodiments, the model may be focused on certain types(s) of data sources. This may help the model to more accurately identify data elements therein than a generative Al model that is pretrained alone. Fine-tuning allows the model to learn the nuances of the source, such as the specific vocabulary and syntax, certain graphical characteristics, certain data formats, etc., without requiring as much data as would be necessary to train the model from scratch. By leveraging the knowledge learned in the pretraining phase, the fine-tuned model can achieve state-of-the-art performance on specific tasks with relatively little additional training data.

If the AI/ML model fails to meet a desired confidence threshold at decision block 1440 in some embodiments, the process 1400 proceeds to block 1450 (as shown by the NO arrow). The training data is supplemented and/or the reward function is modified to help the AI/ML model achieve its objectives better at block 1450 and the process 1400 returns to block 1420.

If the AI/ML model meets the confidence threshold at decision block 1440, the process 1400 proceeds to block 1460 (as shown by the YES arrow). The AI/ML model is tested on evaluation data at block 1460 to ensure that the Al/ML model generalizes well and that the AI/ML model is not over fit with respect to the training data. The evaluation data includes information that the AI/ML model has not processed before.

If the confidence threshold is met at decision block 1470 for the evaluation data, the process 1400 proceeds to block 1480 (as shown by the YES arrow). The Al/ML model is deployed at 1480. If not, the process 1400 returns to block 1450 (as shown by the NO arrow) and the AI/ML model is trained further.

In software engineering, an audit trace is a detailed, chronological record of events or operations performed within a system. It provides a transparent history of activities, which is essential for security, compliance, debugging, and performance monitoring. Audit traces maintain a sequential log of events, ensuring that every action is recorded in the exact order it occurred. Each entry in an audit trace typically includes metadata such as timestamps, user identities, event types, affected components, and the source of the action. These logs are often designed to be immutable, meaning once an entry is recorded, it cannot be modified or deleted, ensuring data integrity.

Audit traces are crucial for various use cases across software systems. In terms of security and compliance, they help organizations detect unauthorized access or suspicious activities, ensuring adherence to regulatory requirements such as GDPR, HIPAA, and SOX. They also serve as valuable tools for debugging and troubleshooting by providing a historical record of system behavior, making it easier for engineers to diagnose and resolve issues. Additionally, audit traces assist in system performance analysis, allowing teams to monitor performance trends and optimize bottlenecks. In cases of security breaches or system failures, they play a key role in forensic investigations, helping reconstruct the sequence of events leading to the incident.

Given their significance, audit traces are widely implemented in critical systems such as financial platforms, healthcare applications, and enterprise software. They ensure accountability, enhance reliability, and provide organizations with the necessary insights to maintain secure and efficient software operations. By maintaining a well-structured audit trace, businesses can improve transparency, strengthen security, and enhance overall system management.

In software engineering, trace data and log data both serve the purpose of observability but differ in scope, structure, and use cases. Trace data is primarily used for distributed tracing, which tracks how requests propagate through multiple services in a distributed system. It captures end-to-end request flows across microservices, providing a detailed picture of how a transaction or process moves through different components. Trace data typically consists of spans, where each span represents an individual operation within the request. These spans contain metadata such as timestamps, service names, latency, dependencies, and context propagation information. Tracing is essential for identifying performance bottlenecks, tracking request failures, and understanding dependencies between different services in cloud-native applications.

Log data, on the other hand, is a more general form of event-based recording that captures system activities, errors, and operational messages at specific points in time. Logs are usually unstructured or semi-structured text-based records that describe individual system events, such as error messages, system warnings, or informational messages. Unlike trace data, logs do not inherently provide a connected view of a request moving through multiple services. Instead, they record independent system activities, making them useful for debugging, security monitoring, and audit trails.

A key difference between the two is that trace data provides a correlated sequence of operations spanning multiple services, while log data captures isolated system events at specific moments. Trace data is essential for performance optimization and root cause analysis in distributed systems, whereas log data is more suited for historical event tracking, debugging, and compliance auditing. While both trace and log data contribute to observability, they are often used together in modern observability platforms to provide a comprehensive view of system behavior.

OpenTelemetry is an open-source observability framework designed to standardize the collection, processing, and export of telemetry data, including traces, metrics, and logs, from software applications. It provides a unified set of APIs, libraries, agents, and instrumentation to help developers monitor and diagnose distributed systems effectively. Originally a merger of two projects, OpenTracing and OpenCensus, OpenTelemetry is now an incubating project under the Cloud Native Computing Foundation (CNCF) and has gained widespread adoption for monitoring cloud-native and microservices-based architectures.

One of the key capabilities of OpenTelemetry is distributed tracing, which captures requests as they propagate across different services, allowing developers to visualize dependencies and identify performance bottlenecks. It also enables metrics collection, gathering important performance-related data such as response times, CPU usage, memory consumption, and error rates to provide insights into system health. Additionally, OpenTelemetry integrates logging, offering a standardized approach to collecting and correlating logs with traces and metrics for comprehensive observability.

Distributed tracing is a method used to monitor and analyze requests as they travel through complex, distributed systems, such as microservices architectures, cloud-based applications, and serverless environments. It provides end-to-end visibility into how requests propagate across different services, helping developers and operations teams identify bottlenecks, latency issues, and failures.

In traditional monolithic applications, tracking a request is relatively straightforward because all processing happens within a single system. However, in distributed systems, a single request might pass through multiple microservices, databases, third-party APIs, and message queues before completing. This complexity makes it difficult to diagnose issues using traditional logging and monitoring tools alone. Distributed tracing addresses this challenge by assigning a unique trace ID to each request and tracking its journey across different services.

When a request is initiated-such as a user clicking a button on a web application-a unique trace ID is generated and attached to that request. As the request moves through various components, each service logs its interaction with a unique span ID, which represents an individual operation within the request. These spans are connected to form a complete trace, allowing developers to see the entire execution path of a request.

For example, consider an e-commerce application where a customer places an order. The request might pass through multiple services, such as user authentication, inventory management, payment processing, and shipping logistics. Distributed tracing would capture each service's processing time, any errors encountered, and dependencies between services, helping engineers pinpoint delays or failures.

Correlating trace data and log data for Al agents presents several challenges due to the complexity of AI workflows, the non-deterministic nature of Al decision-making, and the high volume of generated data. Unlike traditional software systems where logs and traces follow relatively predictable patterns, AI agents introduce additional layers of variability, dynamic execution paths, and opaque model behavior that make correlation more difficult.

One significant challenge is the lack of a direct mapping between logs and traces in Al-driven systems. While traditional applications generate logs at predefined checkpoints, Al agents dynamically decide which paths to take based on real-time inputs, model predictions, and reinforcement learning adjustments. This means that Al logs may not always align neatly with trace spans, making it difficult to track how a particular model inference contributes to an end-to-end transaction. Since trace data captures sequential service interactions while log data records independent system events, the absence of standardized correlation identifiers often makes it challenging to link an Al agent's logs to the relevant spans in a distributed trace.

Another challenge arises from the sheer volume and diversity of data in AI systems. AI agents process vast amounts of data, generating high-frequency logs for model inference, feature extraction, data preprocessing, and decision-making steps. This results in an overwhelming amount of fine-grained logs and traces, which increases the complexity of correlating the relevant portions. Unlike traditional microservices, which operate with structured request-response patterns, AI agents may asynchronously execute multiple processes, leading to misaligned timestamps and incomplete trace-to-log mappings.

The opacity of Al models further complicates correlation efforts. Many AI models function as "black boxes," making it difficult to determine which specific inputs and internal computations led to a particular output. Even if trace data provides an end-to-end view of an Al agent's decisions, the corresponding logs may not reveal why a particular inference was made. This lack of interpretability makes troubleshooting and debugging Al-driven decisions difficult, as engineers cannot easily reconstruct how a specific trace relates to logged model outputs or input transformations.

Another issue is the heterogeneous nature of Al logs and traces. AI pipelines consist of multiple components, including data ingestion services, model training jobs, inference servers, and external API calls. Each component may log data in different formats, using different logging libraries, frameworks, or storage systems. This lack of standardized logging and tracing formats makes it difficult to synchronize, normalize, and analyze AI observability data cohesively. Additionally, logs and traces may be distributed across multiple cloud environments, edge devices, and on-premise systems, introducing further fragmentation.

Applying distributed tracing to AI agents presents unique challenges due to their autonomous decision-making, dynamic workflows, and non-deterministic behavior. Unlike traditional software systems where requests follow a predictable path, Al agents adapt their actions based on real-time inputs, learned behaviors, and external data sources. This unpredictability makes it difficult to define consistent spans in a distributed trace, as the same input may not always result in the same sequence of events.

Al agents often operate within complex multi-stage workflows that include data preprocessing, model inference, post-processing, and external API calls. These processes may run asynchronously, span different computational resources, or be distributed across cloud and edge environments. Tracing such workflows requires advanced correlation mechanisms to piece together events that do not occur in a linear fashion. Traditional tracing tools struggle to handle these scenarios effectively, especially when Al agents use event-driven or streaming architectures.

The volume of data generated by Al workloads is another significant challenge. AI models rely on large datasets, feature transformations, and inference outputs, all of which contribute to a high volume of trace data. Capturing and storing every detail of an AI agent's decision-making process can create significant overhead, increasing both latency and storage costs. Efficient sampling techniques and selective data collection strategies are necessary to balance observability with performance.

Instrumentation for Al pipelines is not yet standardized, making it difficult to integrate distributed tracing seamlessly. AI agents run in diverse environments using frameworks such as TensorFlow, PyTorch, and Hugging Face, with each framework having different logging and monitoring capabilities. Unlike traditional microservices, which benefit from well-defined tracing libraries like OpenTelemetry, Al models require custom instrumentation to capture relevant insights into model performance, feature processing, and inference accuracy.

Privacy and compliance concerns also complicate tracing in Al systems. Many AI agents handle sensitive user data, proprietary business logic, or confidential inputs that cannot be freely logged. Storing full trace data, including input parameters and model decisions, poses regulatory risks under laws such as GDPR, HIPAA, and CCPA. To ensure compliance, organizations may implement data redaction, encryption, and strict access controls for Al-related traces while maintaining sufficient visibility into the system.

Tracing AI agent decisions go beyond detecting latency and failures to providing insights into the quality and correctness of their decisions. If an Al chatbot provides an inaccurate response or an AI-driven recommendation system suggests irrelevant products, tracing may link model predictions with user feedback and retraining steps. Traditional tracing frameworks are not designed to track Al decision quality, requiring custom observability solutions that correlate model behavior with business outcomes.

The deployment of AI agents across hybrid and multi-cloud environments further complicates distributed tracing. Many Al models run in edge devices for low-latency inference while syncing with cloud databases and on-premise monitoring systems. Tracing requests across such a diverse infrastructure requires sophisticated trace propagation techniques that account for network latency, asynchronous processing, and security constraints.

Applying distributed tracing to AI agents is significantly more complex than tracing traditional microservices. Al-driven systems introduce challenges related to non-deterministic execution paths, large-scale data processing, privacy compliance, and multi-stage workflows. Overcoming these challenges requires adaptive tracing strategies, specialized AI observability tools, and deeper integration of distributed tracing frameworks.

Applying distributed tracing to AI agents while addressing privacy and compliance concerns requires a careful balance between observability and data protection. AI agents often process sensitive user data, proprietary business logic, and confidential transactions, making it essential to ensure that trace logs do not expose personally identifiable information (PII) or violate regulatory requirements such as GDPR, HIPAA, or CCPA. To achieve this, organizations can implement several strategies that allow effective tracing while maintaining privacy and compliance.

One approach is data redaction and anonymization before storing or exporting traces. Instead of logging full user data, Al tracing frameworks can replace sensitive values with pseudonyms or masked identifiers. For example, if an Al agent handles medical records, the trace log should avoid storing patient names, social security numbers, or detailed health conditions. Instead, unique hash-based identifiers can be used to maintain traceability while preventing unauthorized access to sensitive information.

Implementing data redaction and anonymization in distributed tracing requires pre-processing logs before they are stored or exported. This can be achieved by configuring tracing middleware or log processing pipelines to automatically detect and sanitize sensitive data. AI tracing frameworks may integrate data masking, hashing, and tokenization techniques to ensure that personally identifiable information (Pll) or sensitive attributes never get exposed in the trace logs.

To prevent the storage of full user data, tracing systems can replace sensitive values with pseudonyms or masked identifiers at the time of logging. This is typically done using regular expressions (regex) and pattern-matching algorithms to identify fields such as names, social security numbers, and health conditions. Once detected, these fields are replaced with generic placeholders or tokenized values, ensuring that logs remain useful for debugging and analytics while eliminating privacy risks. For instance, an Al-powered healthcare assistant that processes patient records would avoid logging real patient names, diagnosis details, or prescription data. Instead, the system would generate a unique, random identifier that maps back to the original record within a secure, access-controlled database.

A more secure approach involves hashing sensitive identifiers before logging them. Instead of storing raw data, a one-way cryptographic hash function, such as SHA-256 or HMAC, can transform personally identifiable values into fixed-length hash strings. This ensures that even if a trace log is compromised, the actual data remains protected since hashed values cannot be reversed without the original input and hashing key. For example, a patient's name, "John Doe," could be hashed into "f4c3b47a9d...e2193a1", maintaining data integrity while ensuring anonymity.

To enhance security further, tokenization can be implemented to substitute sensitive information with system-generated tokens. Unlike hashing, tokenization allows controlled re-identification when necessary, using a secure lookup table that maps tokens back to original values. This is particularly useful when trace logs need to be correlated across multiple Al components without exposing confidential data. For instance, an Al system managing electronic health records (EHRs) could tokenize a patient's ID as "TOKEN_7483", allowing Al agents to track patient interactions while ensuring that only authorized systems can decode the token.

The Al tracing pipeline can also integrate role-based access control (RBAC) to enforce data visibility restrictions. Developers debugging an Al system would only see masked or anonymized logs, whereas compliance officers with proper authorization could decrypt certain fields for auditing purposes. Additionally, trace data retention policies may be enforced to automatically delete or archive sensitive logs after a predefined period, reducing the risk of data breaches and ensuring compliance with GDPR, HIPAA, and CCPA regulations.

By combining automated data sanitization, cryptographic hashing, tokenization, and access control, organizations can implement privacy-first distributed tracing in AI-driven applications. This approach ensures that trace logs provide meaningful insights into system behavior while protecting sensitive information from unauthorized access.

Another method of addressing the privacy and compliance concerns of applying distributed tracing to Al agents is role-based access control (RBAC) and encryption for trace logs. Not all personnel need full access to raw trace data, especially when dealing with regulated industries like finance or healthcare. Implementing fine-grained access controls ensures that only authorized users can view detailed logs, while encryption secures traces both in transit and at rest. Using zero-trust architectures and audit logs with access tracking can further enhance security and prevent unauthorized data exposure.

Implementing RBAC and encryption for distributed tracing in Al agents involves designing a secure access management framework that restricts log visibility based on user roles while ensuring that trace data remains encrypted both in transit and at rest. The first step is to define user roles and permission levels within the tracing system. Administrators may determine which personnel require access to full trace data, which users should only see anonymized or masked logs, and who should be restricted from accessing logs altogether. For example, Al developers may need access to logs for debugging but should not see personally identifiable information (PII), whereas compliance officers may require detailed logs to verify adherence to regulations like HIPAA and GDPR.

To enforce these access restrictions, fine-grained authorization policies may be implemented within the tracing infrastructure. Modern distributed tracing tools, such as OpenTelemetry or Jaeger, allow integration with identity and access management (IAM) systems like OAuth, LDAP, or Active Directory. By configuring access policies, the system ensures that sensitive traces are only visible to authorized users based on predefined rules. These policies can be applied at multiple levels, including log entry fields, specific AI workflows, and entire trace sessions, preventing unauthorized exposure of sensitive data.

Encryption may play a crucial role in securing trace logs. To prevent unauthorized access during transmission, end-to-end encryption using protocols like TLS (Transport Layer Security) ensures that trace data cannot be intercepted by attackers while traveling between Al services, tracing backends, and storage systems. For protecting trace logs at rest, AES-256 encryption can be used to encrypt stored logs in databases or cloud storage. This ensures that even if a system is compromised, the encrypted trace data remains unreadable without proper decryption keys.

To further enhance security, zero-trust architectures may be adopted, requiring continuous authentication and validation before granting access to trace logs. In a zero-trust model, every request to view trace logs may be authenticated and verified, regardless of whether it originates from within an organization's network or externally. This prevents lateral movement by malicious actors who may have gained partial system access. Additionally, multi-factor authentication (MFA) can be enforced for users accessing sensitive trace logs, ensuring that access requires more than just a username and password.

Audit logs with access tracking provide an additional layer of security by recording all interactions with trace logs. Every access request, data retrieval, and modification attempt may need to be logged, including user identity, timestamp, IP address, and accessed trace segments. This ensures that any unauthorized or suspicious activity can be quickly identified and mitigated. Automated anomaly detection systems can be integrated to flag irregular access patterns, such as an engineer accessing sensitive logs they do not typically review.

By combining RBAC, encryption, zero-trust principles, and audit logging, organizations can implement a privacy-compliant distributed tracing framework for AI agents. This ensures that sensitive trace data remains accessible only to authorized personnel, encrypted against external threats, and continuously monitored for security violations, maintaining both regulatory compliance and operational transparency.

To minimize compliance risks, selective sampling and privacy-aware logging techniques can help reduce unnecessary data collection. Instead of tracing every request in detail, AI observability tools can sample only high-risk transactions, anomalous AI behaviors, or debugging-relevant interactions. Additionally, logging only aggregated performance metrics rather than individual user-level interactions can provide valuable insights without exposing private data.

To further align distributed tracing with privacy laws, regulatory audit logs can be created separately from standard Al traces. These compliance-specific logs can track Al agent decisions, data access events, and system modifications without exposing sensitive user inputs. Organizations can also conduct regular compliance audits to ensure that traces are collected and stored in accordance with applicable regulations.

Implementing regulatory audit logs separately from standard Al traces requires designing a dual-logging system that distinguishes between operational observability and compliance tracking. To achieve this, tracing architectures may be configured to generate two parallel sets of logs: one for technical debugging and performance monitoring, and another dedicated to regulatory oversight and legal compliance. This ensures that Al agent activities can be monitored for system integrity while preventing exposure of sensitive user inputs.

To separate these logs effectively, tracing frameworks like OpenTelemetry, Jaeger, or Zipkin may be configured to filter and direct different types of trace data to distinct storage locations. Standard Al traces can log request flows, model execution times, and performance metrics in a central observability system, while compliance-specific logs should capture high-level Al decision events, data access records, and system modifications without storing user-specific data. This separation ensures that compliance logs contain essential audit information while remaining privacy-compliant.

To prevent sensitive data from being included in regulatory audit logs, automated data sanitization and classification mechanisms may be integrated. These mechanisms use rule-based filtering or machine learning models to identify and remove personally identifiable information (PII) before logs are written. For example, instead of logging full input data from a medical chatbot, the compliance log would record the fact that the chatbot accessed a patient records database at a specific time without detailing the actual patient information.

To ensure compliance logs remain immutable and legally admissible, organizations can integrate tamper-proof storage mechanisms such as blockchain-based logging, cryptographic hashing, or write-once-read-many (WORM) storage. These technologies guarantee that once an AI decision or data access event is logged, it cannot be altered retroactively. Secure audit logs can also be digitally signed to prove their authenticity in the event of legal or regulatory reviews.

By implementing separate regulatory audit logs, automated data sanitization, regular compliance audits, and immutable storage mechanisms, organizations can align distributed tracing with privacy laws while maintaining full transparency into Al agent behavior. This structured approach ensures that Al-driven systems remain accountable, legally compliant, and resilient against unauthorized data exposure.

In addition to regulatory compliance with frameworks such as GDPR, HIPAA, and CCPA, the observability and distributed tracing system disclosed herein is further adaptable to support internal security controls and contractual obligations imposed by enterprise policies and third-party agreements. In one or more embodiments, the system integrates an adaptive compliance enforcement layer that applies organizational security baselines, industry certifications (e.g., ISO/IEC 27001, NIST 800-53, SOC 2), and contractual data protection agreements (DPAs) directly into the observability pipeline.

For internal security governance, the system may enforce policy-driven trace segmentation rules tailored to an organization's internal data protection policies. For example, trace segmentation may be configured to restrict sensitive trace logs associated with R&D operations or critical infrastructure AI workflows to on-premise or isolated network enclaves, preventing trace propagation beyond predefined security zones, even when regulatory frameworks do not require such restrictions. The system's federated storage infrastructure supports dynamic trace routing based on internal network boundaries, project classifications, or business unit-specific data governance policies.

Additionally, the system supports multi-tiered role-based access control (RBAC) that aligns with internal identity and access management frameworks. Internal security policies may require trace access tiers beyond standard regulatory roles. The system may implement layered RBAC matrices, where stakeholders such as Al engineers, security operations center (SOC) analysts, Al ethics committees, and risk officers are each assigned distinct access profiles. This enables granular enforcement of internal trace visibility policies, where certain roles may access anonymized observability data, while others can view decrypted compliance-relevant trace logs under heightened audit scrutiny.

The system may further provide internal-facing security dashboards and reporting tools, enabling enterprise security teams to monitor compliance with internal observability policies and generate artifacts for internal audits and ISO/IEC 27001 certifications. These dashboards may include metrics such as trace redaction success rates, trace segmentation boundary enforcement, trace access anomaly reports, and observability incident response logs.

In one or more embodiments, the system is also adaptable to enforce contractual data protection obligations derived from client agreements, master service agreements (MSAs), or bespoke data protection addenda (DPAs). For example, when servicing multiple customers with distinct contractual obligations, the system may dynamically segment and isolate trace data based on customer-specific agreements. Customer-specific trace enclaves may be instantiated to ensure that observability data generated for one client's Al workflow remains segregated from other clients' data, even when operating within shared infrastructure.

The system may enforce contract-bound trace retention policies, whereby observability data linked to a specific customer's Al systems is automatically purged, archived, or anonymized based on contractual requirements. For instance, a financial institution may require that Al trace logs are automatically deleted after 14 days, while another client may require a 90-day retention window. The trace lifecycle management engine may enforce these terms across federated storage locations, ensuring contractually defined retention periods are honored at the system level.

In cases where contractual obligations require third-party audit access, the system may issue delegated access tokens or scoped credentials that allow authorized third parties, such as external auditors or ethics review boards, to access specific trace segments while preserving trace segmentation and masking policies for unrelated datasets. Access tokens may be time-limited, customer-specific, and bound by contractual restrictions to prevent unauthorized data exposure.

Additionally, the system may automatically generate contract-specific observability reports that demonstrate compliance with obligations such as traceability of Al decisions, data minimization practices, or Al explainability. These reports may include granular audit trails, model-specific inference logs, and summaries of applied privacy-preserving techniques, formatted to meet both legal and contractual reporting requirements.

To enforce combined internal, regulatory, and contractual policies, the system may integrate a policy orchestration engine. This engine ingests regulatory mandates, internal information security policies, and contract-specific data protection clauses to generate composite trace segmentation rules, access controls, and audit workflows. For example, the system may simultaneously enforce GDPR data localization, internal encryption-at-rest policies aligned with NIST FIPS 140-2, and client-specific trace purge obligations within a unified observability workflow.

By integrating these multi-layered compliance and security features, the observability and distributed tracing system provides a comprehensive framework for addressing regulatory, internal, and contractual obligations across distributed, multi-tenant, and federated AI environments. The system ensures that Al observability data is securely segmented, access-controlled, privacy-preserved, and auditable according to both external regulations and organization-specific policies.

Applying federated tracing is another technique for Al privacy protection. Instead of storing full traces in a centralized database, federated approaches distribute trace data across multiple locations, with privacy-preserving mechanisms like homomorphic encryption or differential privacy. This ensures that even if traces are intercepted, individual data points remain protected.

Implementing federated tracing for AI privacy protection involves distributing trace data across multiple locations instead of relying on a centralized database. This approach enhances privacy by ensuring that no single entity has access to a complete record of an Al agent's interactions, reducing the risk of data exposure in case of security breaches. Federated tracing can be achieved by designing a decentralized architecture where AI traces are collected and stored in multiple regional or domain-specific repositories, preventing sensitive data from being concentrated in one place.

To enable secure data distribution, federated tracing systems may establish trace segmentation rules that determine how and where different parts of a trace are stored. For instance, an AI model operating in a global enterprise may have its trace data fragmented across servers in different jurisdictions, ensuring compliance with regional privacy laws such as GDPR in Europe or CCPA in California. AI traces from financial transactions, healthcare records, or government-related AI systems can be stored separately based on privacy requirements while still allowing authorized parties to reconstruct relevant insights when necessary.

Trace segmentation rules in federated tracing requires designing a structured policy framework that dictates how trace data is divided, categorized, and stored across different locations while maintaining security and compliance. The key objective is to ensure that no single repository contains a complete trace, thereby minimizing the risk of data breaches and unauthorized access. This is particularly important for Al agents operating in multi-region, multi-cloud, and privacy-sensitive environments, such as healthcare, finance, and government systems.

To implement trace segmentation rules effectively, organizations may first define segmentation criteria based on regulatory, security, and operational requirements. These rules determine how AI-generated trace logs are split based on parameters such as geographical location, data sensitivity, user identity, or system function. For example, a multinational AI-powered financial platform may segment its traces so that transactions originating in the European Union remain within EU-based servers to comply with GDPR, while US-based transactions are stored separately to align with CCPA regulations. Similarly, healthcare AI systems may ensure that patient-identifiable traces are stored in HIPAA-compliant databases while anonymized performance metrics can be shared more broadly for system monitoring.

Al can be leveraged to dynamically generate, optimize, and enforce trace segmentation rules in AI observability systems by analyzing real-time system behavior, regulatory constraints, and workload characteristics. Traditional trace segmentation relies on static rule-based configurations that categorize trace logs based on predefined parameters such as geographical location, user roles, or system components. However, AI-driven segmentation introduces adaptability by allowing machine learning models to automatically classify, prioritize, and distribute trace data based on real-time insights. This ensures optimal system performance, compliance with data regulations, and enhanced Al observability.

To create AI-driven trace segmentation rules, the system can integrate supervised and unsupervised learning models that analyze historical trace patterns, classify trace types, and predict segmentation criteria based on contextual Al workflows. Unsupervised clustering algorithms, such as k-means or hierarchical clustering, can group Al-generated traces based on semantic similarities, processing patterns, and workload dependencies. For example, in a multi-cloud AI system, clustering models can segment trace logs according to infrastructure performance metrics, network latency, and data jurisdiction constraints, ensuring that logs are dynamically stored and processed in the most suitable cloud region.

Reinforcement learning (RL) can further enhance trace segmentation by continuously adjusting data distribution policies based on changing conditions. A reinforcement learning agent can be trained to optimize trace storage and retrieval efficiency by learning which trace logs are most frequently accessed, which require stricter compliance, and which can be archived or summarized. By rewarding efficient segmentation decisions-such as reducing cross-border data transfers or minimizing storage overhead-the AI agent can evolve optimal trace management strategies over time.

Natural language processing (NLP) models can also play a role in automatically categorizing unstructured trace logs and assigning appropriate segmentation rules. AI models trained on domain-specific observability datasets can extract key attributes from raw log messages, such as error codes, user activity descriptions, or Al model decision summaries, and classify them according to privacy sensitivity, security risk, or compliance requirements. For instance, an Al-powered financial fraud detection system may use NLP models to analyze transaction trace logs and automatically assign segmentation labels such as "high-risk transaction," "compliance-sensitive data," or "low-priority background process."

Al-driven anomaly detection can further dynamically adjust trace segmentation policies by identifying irregular system behaviors that require higher-priority monitoring. If an Al observability platform detects a spike in inference failures, latency issues, or security threats, it can automatically modify segmentation rules to increase trace granularity for affected workflows while reducing logging intensity for normal system operations. This ensures that critical traces are captured in full detail, while redundant trace data is filtered or summarized, optimizing storage and analysis efficiency.

To maintain regulatory compliance, AI models can be trained to map jurisdictional data privacy laws to trace segmentation policies. By using knowledge graphs and rule-based inference engines, Al systems can interpret regulatory requirements such as GDPR, HIPAA, or CCPA, and automatically enforce segmentation rules that prevent unauthorized cross-border data transfers. For example, an Al-powered legal compliance engine can analyze trace metadata, detect personally identifiable information (PII) within logs, and assign segmentation rules that restrict storage to designated geographic regions. Additionally, differential privacy mechanisms can be integrated to apply mathematical noise to trace metadata, further safeguarding sensitive information while preserving observability insights.

The Al-driven trace segmentation process can also be augmented with federated learning, allowing distributed Al models to collaboratively refine segmentation strategies while ensuring trace privacy across decentralized Al deployments. Instead of centralizing segmentation rule updates, federated learning enables Al models deployed in different locations to locally adjust segmentation rules based on region-specific constraints, system workload variations, and compliance obligations. This ensures that trace logs are optimally segmented without exposing raw AI observability data to centralized governance risks.

By incorporating machine learning clustering models, reinforcement learning optimizations, NLP-based log classification, Al-driven anomaly detection, and federated learning, the system can dynamically generate adaptive trace segmentation rules that optimize observability, compliance, and storage efficiency. This Al-powered approach ensures that trace logs are intelligently categorized, securely stored, and contextually analyzed, providing a scalable and privacy-compliant Al observability framework.

Once segmentation rules are defined, automated data routing mechanisms may be integrated within the tracing pipeline. AI tracing frameworks such as OpenTelemetry can be configured with custom data tagging policies that label traces upon generation. These tags act as metadata identifiers that instruct the system on where and how to store each portion of the trace. For example, a trace log generated from an Al chatbot interaction may include metadata labels indicating "sensitive PII," "medical inquiry," or "cross-border transaction." Based on these labels, the system can automatically route different parts of the trace to separate encrypted storage locations, ensuring compliance with segmentation policies.

To ensure trace integrity and cross-location traceability, federated tracing systems may implement cryptographic identifiers and partial trace linking. Instead of storing full trace logs in a single database, each segment of a trace is assigned a unique cryptographic hash that can be referenced across distributed storage systems without exposing the original data. If an Al agent's decision-making process spans multiple jurisdictions or involves multiple microservices, the segmented traces can be reassembled dynamically by authorized systems using these hashed identifiers while preventing unauthorized users from reconstructing sensitive information.

Security mechanisms such as RBAC and key management encryption further enforce trace segmentation rules by ensuring that only specific personnel, departments, or Al systems can access certain trace segments. For example, compliance officers may be granted decryption rights to regulatory audit logs, while Al developers only have access to performance logs with anonymized data. Additionally, time-based segmentation policies can be enforced, where traces are stored in one location for active monitoring but later archived in separate encrypted repositories after a certain period to limit exposure.

Privacy-preserving techniques such as homomorphic encryption and differential privacy may be incorporated to protect trace data while enabling useful analytics. Homomorphic encryption allows computations to be performed on encrypted traces without decrypting them, ensuring that privacy is maintained even when processing or analyzing logs. This is particularly useful for Al auditing, where organizations may need to verify Al decision-making patterns without exposing sensitive underlying data. Differential privacy techniques can further strengthen protection by adding mathematical noise to trace data, preventing individual users or sensitive transactions from being identified. This ensures that even if a portion of trace data is accessed by unauthorized entities, it remains statistically anonymized and useless for re-identification.

To facilitate trace correlation across distributed storage locations while maintaining privacy, cryptographic hashing can be used to create privacy-safe identifiers. Instead of storing direct references to sensitive users or transactions, Al trace logs can include hashed values that allow trace linking without revealing actual data. Additionally, federated tracing systems can implement zero-knowledge proofs to verify the integrity of AI decision traces without exposing specific AI model inputs or outputs, further ensuring compliance with strict privacy regulations.

Implementing context-aware correlation mechanisms for Al observability can be approached by ensuring that trace data and log data remain linked throughout an AI system's lifecycle. One effective way to achieve this is by propagating consistent trace IDs across Al logs and traces. By integrating tracing libraries like OpenTelemetry into AI frameworks, it becomes possible to attach a unique trace ID to every request, model inference, or data pipeline operation. When an Al agent processes an input through multiple stages, this trace ID can be included in every log entry, allowing engineers to track AI decision flows across distributed systems and correlate model behavior with service interactions.

Structured metadata tagging offers another way to strengthen observability. Logs and traces can be enriched with contextual metadata, such as model versions, hyperparameters, inference confidence scores, dataset identifiers, and execution timestamps. With these tags in place, logs can be grouped and analyzed based on Al-specific attributes, making it easier to investigate decision anomalies and optimize model accuracy. For instance, in an AI-driven fraud detection system, logs may be tagged with risk scores and model weights, providing deeper insights into why certain transactions are flagged. This type of structured metadata allows observability tools to classify logs based on model performance metrics, offering a more intuitive way to analyze Al behavior.

Another valuable approach involves Al-specific telemetry instrumentation to capture real-time monitoring signals unique to Al models. Al systems operate with data preprocessing, feature engineering, and probabilistic decision-making, so extending existing telemetry pipelines to include model input distributions, inference latency, feature importance scores, and drift detection signals can be useful. For example, when deploying an Al chatbot, logging query embeddings, response generation times, and sentiment analysis scores can help identify issues such as bias, hallucinations, or latency bottlenecks. With proper instrumentation, Al engineers gain deeper insights into model behavior, facilitating more effective debugging and performance optimization.

Where direct trace-to-log correlations are unavailable, machine learning-based log analysis can be used to detect hidden patterns between logs and traces. AI observability platforms can apply unsupervised learning techniques, anomaly detection models, and sequence alignment algorithms to infer relationships between logs and traces, even in the absence of explicit trace IDs. Clustering algorithms may help identify log sequences that frequently co-occur with specific trace spans, offering insights into root causes of performance degradation or unexpected Al outputs. Additionally, log embedding techniques using natural language processing (NLP) can extract meaning from unstructured logs and automatically link them to corresponding Al events.

The Al observability system can be enhanced to support playback functionality, enabling users to reconstruct and replay AI decision-making processes for debugging, compliance verification, and forensic analysis. This capability allows for a step-by-step recreation of AI-generated inferences, model decisions, and input transformations, ensuring greater transparency and improving troubleshooting.

To implement playback functionality, the system must extend its traceability, logging, and storage mechanisms. First, it must enhance structured metadata logging by capturing every step of the AI decision process, including input data snapshots, feature transformations, model execution details, and system environment states. These logs must be time-stamped and indexed to ensure accurate sequencing during playback. Additionally, the system must incorporate federated storage for Al checkpoints, ensuring that AI state data is distributed across multiple locations while maintaining compliance with jurisdictional regulations such as GDPR and HIPAA. A cross-location trace linking mechanism, supported by cryptographic identifiers, will enable seamless reconstruction of Al workflows across distributed environments.

The playback functionality must support both deterministic and non-deterministic Al workflows. For deterministic models, such as rule-based engines or traditional machine learning models, playback can be achieved by replaying logs in chronological order, reconstructing the Al's decision-making process using stored inputs, transformations, and inference results. In contrast, non-deterministic models, such as deep learning systems, reinforcement learning agents, or probabilistic Al models, require additional mechanisms to support replay. Since identical inputs may yield different outputs based on stochastic elements, the system must store random seeds, model weights, and execution environments to replicate past AI decisions accurately. During playback, these elements allow the system to reconstruct prior decision paths, detect model drift, and compare historical versus current AI outputs.

To ensure security and compliance, playback functionality must incorporate role-based access control (RBAC) and authentication policies. Different stakeholders will require varying levels of access: developers and engineers may replay anonymized AI logs for debugging, compliance officers may retrieve decrypted audit trails for regulatory investigations, and Al model auditors may analyze replayed decisions against ethical AI guidelines. Access to playback data should be cryptographically signed, ensuring an immutable chain of custody for AI decision events. Furthermore, blockchain-based trace audit logs can enhance security by preventing tampering, maintaining a verifiable record of all playback attempts, and ensuring that Al observability data remains forensic-ready.

A real-world example of Al playback functionality can be observed in an Al-driven fraud detection system used in financial institutions. When a user initiates a transaction, the Al model assigns a unique trace identifier and logs various attributes such as transaction amount, user behavior patterns, geolocation, and extracted risk assessment features. The model then processes this data to generate a fraud probability score. If a legitimate transaction is mistakenly flagged as fraudulent, engineers can replay the Al's decision path by loading the stored transaction logs and re-running them through the Al fraud model. This replay allows them to verify whether the model would reach the same decision under identical conditions, thereby identifying potential errors in feature extraction, decision thresholds, or training data. Similarly, if a customer disputes a declined transaction, compliance officers can retrieve the Al's original inference logs, replay the fraud detection process, and justify the AI's decision to auditors using an immutable trace history.

Playback functionality offers several advantages in Al observability. From a debugging and performance optimization standpoint, engineers can analyze Al inference paths to fine-tune feature selection, model hyperparameters, and input normalization techniques. In high-risk applications such as financial fraud detection, healthcare diagnostics, and autonomous decision-making, playback enhances Al explainability and trust by allowing organizations to demonstrate the transparency of Al decisions to regulators and end-users. Additionally, forensic and compliance auditing benefits from playback functionality, as organizations can verify Al-driven outcomes, ensuring accountability and mitigating regulatory risks.

By integrating structured trace logging, federated storage, role-based replay access, and blockchain-backed audit trails, the Al observability system can support secure, transparent, and privacy-compliant playback. This adaptation strengthens debugging capabilities, enables compliance verification, and facilitates Al decision validation, making the system highly valuable for regulated industries and mission-critical Al applications.

The invention can be adapted to handle unstructured trace data by incorporating Al-driven log parsing, natural language processing (NLP)-based trace extraction, and schema-flexible storage architectures. Traditional observability systems primarily deal with structured logs, which follow predefined formats that facilitate easy correlation between AI-generated events. However, AI-driven workflows often produce unstructured data, such as free-text logs, image-based trace information, and loosely formatted system outputs. To ensure effective traceability and observability in such environments, the system must introduce intelligent trace structuring, dynamic metadata tagging, and flexible storage solutions.

To begin with, the system can integrate AI-powered log parsing techniques to extract meaningful information from unstructured traces. Machine learning models, including deep learning-based sequence models and transformer-based NLP techniques, can be used to analyze free-text logs and identify relevant trace identifiers, timestamps, and decision parameters. For instance, when dealing with log messages from an Al-powered chatbot, NLP algorithms can extract user intent, contextual references, and system responses, associating them with structured trace metadata. Similarly, computer vision-based log processors can interpret image-based trace logs from Al models involved in facial recognition or object detection, extracting key visual features and embedding them into structured trace logs.

The system may also implement dynamic metadata tagging, ensuring that unstructured traces are annotated with structured identifiers that facilitate correlation with Al observability data. Unlike traditional observability systems, which rely on predefined log schemas, the invention can leverage adaptive schema generation techniques that evolve based on the AI model's context. This means that trace logs generated by an Al-powered medical diagnostic system will have metadata fields such as "radiology scan analysis" or "patient health risk score," while an Al-based recommendation engine will include attributes like "user behavior embedding" and "recommendation confidence score." By implementing schema-flexible metadata tagging, the system can accommodate unstructured trace logs while maintaining cross-system interoperability.

To store and process unstructured trace data efficiently, the system must adopt a schema-flexible storage architecture capable of handling diverse Al trace formats. Instead of relying solely on traditional relational databases that require predefined schemas, the system can integrate NoSQL document stores, graph-based trace repositories, and distributed data lakes. A NoSQL-based storage approach allows each Al trace record to store variable-length attributes, supporting diverse trace types without rigid formatting constraints. Additionally, graph-based trace storage enables linking loosely structured AI trace events, particularly useful in AI systems where decision-making spans multiple independent components. For example, in an Al-powered cybersecurity system, anomaly detection logs, network activity traces, and behavioral threat intelligence data can be linked within a graph-based trace structure, facilitating deep forensic analysis.

For improved real-time correlation of unstructured trace logs, the system can employ vector-based similarity search techniques. By embedding Al-generated unstructured traces into high-dimensional vector spaces using techniques like word embeddings (e.g., BERT, Word2Vec) or feature vectorization (e.g., FAISS, Milvus), the system can match and retrieve similar trace events based on contextual relationships rather than exact keyword matches. This capability is particularly useful for Al observability in applications such as autonomous vehicles, real-time speech recognition, and fraud detection systems, where trace logs do not follow a consistent format.

In addition to improving storage and processing, the system can introduce Al-driven anomaly detection models that analyze unstructured trace logs in real time. By training deep learning models on historical AI trace patterns, the system can detect inconsistencies, missing trace data, or anomalous sequences, even when logs are loosely structured. For instance, if an AI-driven trading algorithm generates unstructured logs describing market fluctuations and trade execution decisions, an anomaly detection model can identify trace gaps or irregular decision paths, signaling potential system faults or adversarial manipulation.

To ensure privacy and security when handling unstructured trace logs, the system can apply homomorphic encryption, differential privacy, and access-controlled logging techniques. Unlike structured logs, which allow fine-grained data masking, unstructured logs often contain implicit sensitive information embedded in free-text formats. Using context-aware redaction algorithms, the system can automatically identify and obfuscate personally identifiable information (PII) within unstructured traces before storage. Additionally, role-based access control (RBAC) for unstructured traces ensures that compliance officers, engineers, and external auditors can retrieve and analyze relevant logs without exposing unnecessary sensitive data.

By integrating AI-powered log parsing, schema-flexible metadata tagging, dynamic storage architectures, vector-based trace search, and anomaly detection models, the system can effectively manage unstructured trace data. This adaptation ensures that Al-generated logs, whether structured or unstructured, are traceable, interpretable, and compliant with regulatory requirements while maintaining the integrity of AI-driven observability processes.

A computer system designed to support AI observability with distributed tracing, privacy protection, and compliance monitoring may function within a cloud-based, hybrid, or edge-computing environment. This system could facilitate Al inference, logging, and trace correlation, ensuring secure and efficient processing of Al observability data. The architecture may include specialized hardware and software components that enable Al agent execution, observability data collection, encryption, and compliance auditing. With federated AI tracing, trace data may be securely stored and processed across multiple cloud and edge locations while maintaining privacy and regulatory compliance.

The system may utilize AI-optimized processing units such as NVIDIA Tensor Core GPUs, Google TPUs, or AMD EPYC CPUs to support real-time execution of Al models and observability processes. Specialized hardware accelerators, such as FPGAs or ASICs, could enhance cryptographic operations, ensuring secure tracing and logging. High-speed RAM and distributed storage solutions, including cloud-based storage and on-premise secure databases, may provide a scalable environment for Al logs and traces. Secure networking infrastructure with high-speed interconnects, VPN encryption, and TLS protocols may help protect data as it moves across different components.

On the software side, AI models may run in containerized environments managed by Kubernetes or Docker, with orchestration tools such as Kubeflow or Apache Airflow optimizing execution. A distributed tracing framework based on OpenTelemetry may collect trace spans and propagate trace context across multiple Al services. Al-specific log aggregation and processing engines, using platforms like ElasticSearch or OpenSearch, could index observability data, while event-driven pipelines with Apache Kafka or AWS Kinesis may process and route log data in real time.

To enhance privacy and security, the system may implement federated tracing storage, ensuring sensitive traces remain within their respective jurisdictions. Data segmentation policies could be enforced to maintain compliance with GDPR, HIPAA, and CCPA regulations by restricting the movement of personally identifiable information. Homomorphic encryption techniques may allow computations to be performed on encrypted traces without revealing underlying data, while differential privacy algorithms could introduce controlled noise to prevent the identification of individual users. These privacy-preserving mechanisms may help ensure that AI observability logs remain secure and legally compliant.

Regulatory compliance may be further supported through role-based access control (RBAC) mechanisms, where AI trace logs are accessible only to authorized personnel. Developers may work with anonymized logs, while compliance officers could have permission-based decryption capabilities. The system may also incorporate immutable audit logs using blockchain-based storage, ensuring that Al decision traces remain tamper-proof and legally admissible. Write Once Read Many (WORM) storage could be used to prevent unauthorized modifications to compliance records, creating a robust and transparent audit trail.

An example implementation of this system may involve a fraud detection Al used by a financial institution. When a customer initiates a transaction, the Al fraud detection model could process the request and assign a risk score. The Al observability system may generate a unique trace ID for the transaction, allowing the trace to be monitored as it moves through different financial services, including user authentication, risk assessment, and compliance verification. Each step of the process may be logged with encrypted metadata, ensuring privacy while maintaining full traceability. If an auditor needed to review a flagged transaction, the system could decrypt only the relevant metadata, allowing investigation without exposing confidential financial data. Homomorphic encryption may allow fraud pattern analysis without revealing specific transaction details, and compliance audit logs could be stored immutably to ensure regulatory integrity.

In accordance with one or more embodiments, an observability and distributed tracing system is provided that incorporates context grounding to enhance the relevance and accuracy of Al-driven monitoring, anomaly detection, and compliance auditing within distributed AI workflows.

In one or more embodiments, the system includes an agentic extraction module implemented by one or more AI agents to perform advanced extraction and semantic contextualization of trace data. The agentic extraction module operates on logs, traces, and telemetry collected from distributed Al components. It performs multistage processing of raw trace data, including natural language processing (NLP), optical character recognition (OCR) for embedded documents, and hierarchical chunking of logs into semantically meaningful segments.

The system may further includes an agentic memory configured to cache context embeddings generated from trace data. These embeddings are structured representations of enterprise-specific context, including but not limited to domain-specific terminology, system configurations, user interactions, business rules, or compliance metadata (e.g., GDPR or HIPAA policies).

When a trace or set of traces is forwarded to an Al model for further processing (e.g., anomaly detection, federated trace playback, compliance validation), the agentic searching module is activated. This module queries the agentic memory using semantic search techniques, including vector similarity search, hybrid keyword and embedding-based search, and retrieval-augmented generation (RAG).

The search results provide grounded context, which is automatically injected into the Al model's input pipeline alongside the trace data. This grounding information constrains and guides the AI model, enabling context-aware insights that reduce noise and enhance accuracy.

For example, in one embodiment, the system receives a distributed trace from a federated storage node, detects anomalous behavior via Al-assisted root cause analysis, and queries the agentic memory to retrieve historical context relating to similar past incidents within the same business domain. The grounded context is fed into the Al model to generate tailored explanations and compliance reports.

Additionally, the system continuously evolves by feeding successful trace analyses, compliance resolutions, and human-in-the-loop feedback into the agentic memory, enabling improved context grounding for future observability workflows.

By incorporating context grounding into the observability and tracing pipeline, the system delivers several technical advantages. It enables more accurate and context-aware anomaly detection by tethering trace analysis to business-specific information and reducing reliance on generic models. The use of domain-relevant embeddings minimizes model drift and filters out irrelevant trace data, resulting in more focused and efficient trace analysis. Additionally, the system enhances compliance auditing by providing precise and explainable annotations grounded in enterprise context, improving both the quality and reliability of audit reports. Furthermore, by leveraging agentic memory to store and recall insights from previous trace investigations and resolutions, the system evolves over time, supporting an adaptive observability framework that continually improves as it learns from historical data.

The context grounding module may be implemented as part of the observability agent cluster, as a distributed microservice alongside federated trace storage, or as a cloud-native API accessible by AI models performing monitoring or analysis tasks.

Embodiments of the invention further provide enhanced technical advantages by incorporating token- and key-level traceability into Al observability and distributed tracing workflows. By capturing detailed token-level data-including token counts, token positions, and token-type classifications-the system enables more granular anomaly detection and deep model introspection, particularly in natural language processing and generative AI environments. Additionally, by tracing API key usage and session key exchanges across AI pipelines, the system ensures secure, auditable operations in compliance-sensitive deployments. This dual-layer traceability strengthens the system's ability to detect token-based anomalies (e.g., unexpected token entropy shifts or bias indicators) and to enforce key management policies (e.g., unauthorized API key usage or improper key rotations). As a result, the system offers a robust and security-conscious approach to Al observability, enabling organizations to achieve both operational transparency and regulatory compliance in complex, distributed Al environments.

In one or more embodiments, the observability and distributed tracing system is configured to capture and utilize diverse categories of trace data, including trace data uniquely associated with artificial intelligence (AI) workloads, and enhanced with metadata relating to tokens and cryptographic keys. The system is specifically designed to address the opacity and non-determinism common to AI-based systems by providing deep, contextually grounded observability capabilities.

The system collects Al model execution traces, which include metadata related to Al model operations, such as inference and training cycles, resource utilization (e.g., GPU/TPU metrics), and latency measurements. These traces may further include token-level information, such as token counts, token position within sequences, and token type identifiers (e.g., special tokens, separator tokens, or masked tokens) generated during model tokenization processes, particularly when processing text or sequential input data. Intermediate model outputs-such as attention distributions over tokens, layer activations, or transformer block outputs-may also be logged to support deeper trace analysis and debugging.

For example, in one or more embodiments, the system captures model input and output payload traces, which include tokenized representations of input data such as wordpiece tokens, byte-pair encodings (BPE), or sentence pieces commonly utilized in large language models (LLMs) and other natural language processing (NLP) pipelines. Corresponding model outputs, including generated token sequences, embeddings, logits, or structured predictions (e.g., JSON-formatted outputs), may also be traced and archived. Where applicable, the system redacts or anonymizes sensitive token-level content to comply with data protection policies.

IN some implementations, the system further records hyperparameter and configuration traces along with API key usage logs and session key traces. Hyperparameter traces may include model-specific parameters such as learning rates, dropout rates, batch sizes, and optimizer configurations. Simultaneously, API key traces capture the invocation of external or internal Al services, including logs of API keys used to authenticate requests to Al model endpoints, RPA services, or federated trace stores. Session key traces may capture ephemeral cryptographic keys used in secure communications between distributed Al components, such as secure inference APIs or encrypted data pipelines.

Additionally, in some implementations the system captures Al pipeline and workflow traces, documenting the orchestration and execution of complex Al workflows. These traces include the transfer of tokenized inputs and outputs across pipeline stages, Al agent orchestration decisions, and records of task handoffs between Al models, RPA robots, and federated observability nodes. Tokens are traced at each workflow step to maintain input-output lineage, while API key usage is monitored when Al agents invoke secured services (e.g., external inference APIs, private data lakes).

The system may also collect contextual and embedding traces, comprising vector embeddings derived from tokenized input sequences or contextual grounding modules. These may include semantic search vectors, query embeddings, or document embeddings produced by Al models such as BERT, GPT, or custom-trained encoders. The embeddings are tagged with identifiers linking them back to specific tokenized inputs and key-authenticated service requests.

To monitor Al system robustness, the system may further collect Al drift and bias indicators, including token distribution statistics, drift metrics (e.g., input token entropy shifts), and explainability artifacts such as token-level attribution scores (e.g., SHAP values per token). These indicators may be used to identify anomalous shifts in token patterns or bias across model predictions. Drift and explainability traces are securely stored, with access governed by key-based role permissions.

Human-in-the-loop and feedback traces may also collected, documenting user interactions and interventions within AI-driven workflows. These traces may include annotations linked to specific tokenized model outputs or user-corrected tokens within generated sequences. The system associates such feedback with token-level trace identifiers, facilitating model refinement and agentic memory updates.

Finally, the system may also log security and privacy-related trace data, including the capture of encryption keys used to secure trace data at rest or in transit, as well as API keys used to authenticate to compliance monitoring services or cryptographically gated AI trace playback features. Secure tokenization pipelines and key management events are also traced to ensure end-to-end compliance with security policies such as GDPR, HIPAA, and CCPA.

By capturing this comprehensive set of AI-specific trace data-including token and key-level information-the system provides deep observability into Al operations, enabling advanced anomaly detection, precise context grounding, and enhanced compliance auditing within distributed AI ecosystems.

FIG. 15 illustrates method 1500, which defines a structured approach for Al observability and privacy-preserving distributed tracing. The method provides a framework for capturing, analyzing, and securing Al-generated requests while ensuring traceability, security, and compliance monitoring. The process begins with step 1502, where each AI-generated request is assigned a unique trace identifier (Trace ID). This identifier propagates across multiple system components, including machine learning inference pipelines, data preprocessing modules, feature extraction services, decision engines, and external API interactions. By embedding the Trace ID within distributed tracing headers, the system enables seamless tracking of Al operations, allowing downstream services to reconstruct AI execution flows across hybrid, multi-cloud, and edge computing environments. This ensures full traceability of AI-driven decision-making processes.

At step 1504, Al-generated logs are enriched with structured metadata to facilitate deeper observability and improve trace-to-log correlation. The metadata includes model execution parameters, inference confidence levels, feature extraction details, and precise timestamps. These structured data points allow observability tools to analyze Al behavior, detect deviations in decision pathways, and identify anomalies within Al-generated logs. Following this, step 1506 applies trace segmentation policies to distribute Al trace logs across multiple storage locations while ensuring compliance with jurisdictional data protection laws such as GDPR, HIPAA, and CCPA. By dynamically enforcing storage policies, the system ensures that trace records containing sensitive identifiers, such as patient data or financial transactions, remain within legally designated jurisdictions, preventing unauthorized cross-border data movement and mitigating privacy risks.

To further enhance privacy and security, step 1508 applies privacy-preserving transformations before storing Al trace logs. The system employs multiple cryptographic and anonymization techniques, including data redaction, which removes personally identifiable information (PII) such as usernames, IP addresses, and transaction details. Tokenization replaces sensitive data fields with randomly generated placeholders, ensuring that confidential information cannot be linked back to an individual without proper access credentials. Homomorphic encryption allows computations to be performed directly on encrypted Al trace logs, enabling compliance audits and Al debugging without exposing raw user data. Differential privacy techniques introduce statistical noise into observability logs, preventing re-identification attacks while maintaining the integrity of Al monitoring metrics. By integrating these privacy-preserving transformations, the system ensures that Al observability data remains secure, compliant, and resistant to unauthorized access.

At step 1510, role-based access control (RBAC) and authentication policies are implemented to restrict trace data retrieval based on user roles, security clearances, and organizational policies. The system ensures that access to observability logs is tailored based on necessity, with developers having access only to anonymized logs for debugging purposes, while compliance officers and auditors can retrieve decrypted logs with audit trails for regulatory review. This fine-grained access control mechanism aligns with zero-trust security principles, where every request for Al trace logs is authenticated, verified, and cryptographically signed. By enforcing RBAC, the system reduces the risk of unauthorized exposure of AI inference records while maintaining a structured and secure Al observability framework.

To support regulatory compliance and governance, step 1512 generates a separate compliance audit log that operates independently from Al's standard trace logs. The compliance audit log records key Al decision-making events, including input-to-output mappings, system modifications, and trace access history. Additionally, it captures regulatory reporting metrics necessary for demonstrating compliance with legal frameworks such as GDPR, HIPAA, and CCPA. The system ensures that audit logs are immutable by leveraging cryptographic hashing techniques such as SHA-256 or HMAC, as well as blockchain-based distributed ledgers, preventing tampering and ensuring audit trail authenticity. By maintaining a verifiable and tamper-proof compliance log, the system enables organizations to demonstrate AI transparency, regulatory adherence, and accountability.

Finally, at step 1514, machine learning-based analysis is integrated into the observability system to enhance Al trace-to-log correlation. The system employs advanced anomaly detection models, unsupervised learning techniques, and natural language processing (NLP)-based log embeddings to infer relationships between Al observability records. These machine learning models identify hidden patterns in logs and traces, even in scenarios where explicit trace identifiers are missing. By automatically clustering anomalous AI behaviors, the system facilitates early detection of issues such as model drift, bias, or unexpected inference results. Through AI-driven debugging and automated correlation analysis, the system enhances the efficiency of Al monitoring and ensures that Al-generated decisions remain interpretable, explainable, and accountable.

Overall, FIG. 15 represents a comprehensive Al observability framework that integrates traceability, privacy protections, regulatory compliance, and machine learning-driven monitoring. The workflow ensures that AI-generated requests are securely traced, privacy-protected, access-controlled, and analyzed using Al-based observability techniques. By leveraging federated tracing, cryptographic access controls, automated compliance logging, and AI-driven debugging, the system provides a scalable and secure observability solution for monitoring AI-driven decision-making across distributed, multi-cloud, and edge computing environments.

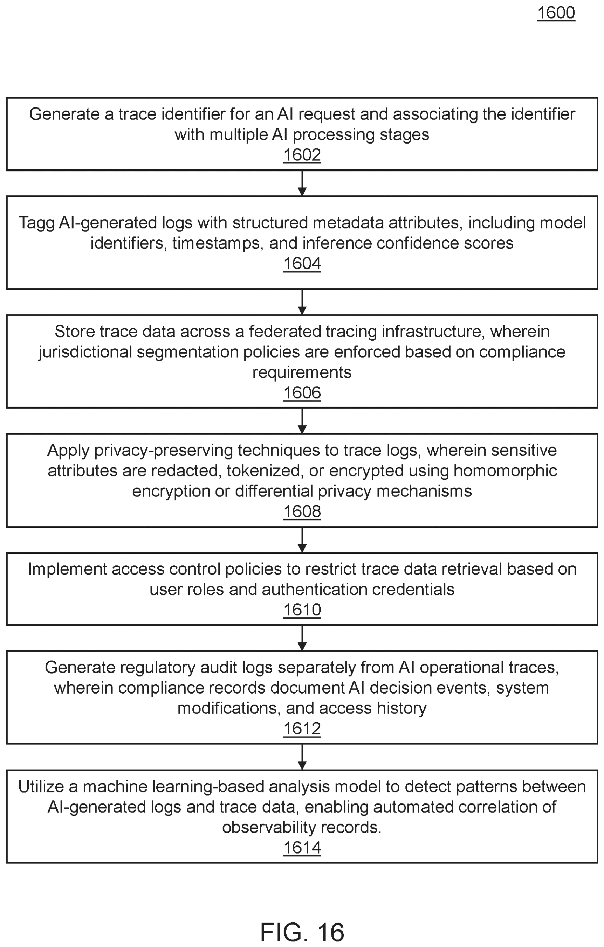

FIG. 16 illustrates a structured method 1600 for Al observability, distributed tracing, and compliance monitoring, beginning with the generation of a unique trace identifier for each AI-generated request at step 1602. This trace identifier is propagated across multiple AI processing stages, enabling end-to-end tracking of Al workflows and decision-making processes. The identifier ensures that each Al inference or data transformation step is linked, allowing system components to correlate individual operations with the broader AI execution pipeline.

At step 1604, Al-generated logs are enriched with structured metadata attributes, including model identifiers, timestamps, and inference confidence scores. This metadata provides essential observability insights, enabling organizations to analyze Al behavior, monitor system performance, and debug errors more effectively. The structured metadata enhances traceability by linking logs to specific Al models, ensuring that system operators can reconstruct the conditions under which Al-generated outputs were produced.

Following this, step 1606 focuses on storing trace data within a federated tracing infrastructure. This infrastructure ensures that AI trace logs are distributed across multiple cloud and edge locations while enforcing jurisdictional segmentation policies in accordance with compliance requirements. By preventing centralized trace storage, the system ensures compliance with regulations such as GDPR, HIPAA, and CCPA, restricting unauthorized cross-border data transfers and reducing security vulnerabilities associated with centralized log repositories.

To maintain privacy, step 1608 applies privacy-preserving techniques to trace logs. These techniques include data redaction, which removes personally identifiable information (PII) from logs before storage, tokenization, which replaces sensitive data fields with anonymized placeholders, and homomorphic encryption, which allows computations on encrypted trace data without exposing raw values. Additionally, differential privacy mechanisms introduce controlled noise into observability records to prevent trace re-identification attacks. These measures ensure that AI-generated observability logs remain compliant with data protection regulations while retaining the ability to monitor and analyze system behavior.

At step 1610, role-based access control (RBAC) policies and authentication mechanisms are implemented to restrict trace data retrieval. Access to Al observability logs is controlled based on user roles and authentication credentials, ensuring that only authorized personnel can retrieve, modify, or analyze specific trace records. Compliance officers, for example, may be granted access to decrypted logs for regulatory review, while developers are limited to anonymized or masked logs for debugging purposes. This fine-grained access control model prevents unauthorized exposure of Al trace logs while enabling necessary system monitoring.

To enhance regulatory compliance, step 1612 generates separate regulatory audit logs distinct from AI operational traces. These audit logs document Al decision events, system modifications, and access history, ensuring that Al observability aligns with industry standards and legal requirements. By maintaining a separate compliance log, organizations can demonstrate AI system accountability and facilitate regulatory reporting.

Finally, at step 1614, a machine learning-based analysis model is employed to detect patterns within Al-generated logs and trace data. This model enables automated correlation of observability records, allowing organizations to identify hidden relationships between logs and traces, detect anomalies in AI workflows, and enhance system debugging capabilities. By leveraging AI-driven log correlation, the system improves transparency, ensures Al accountability, and optimizes performance monitoring.

Overall, FIG. 16 presents a comprehensive Al observability framework that integrates distributed tracing, privacy preservation, access control, and compliance auditing. By leveraging a federated storage infrastructure, cryptographic security measures, and Al-driven analytics, the system ensures that AI-generated observability data remains secure, privacy-compliant, and accessible only to authorized stakeholders.

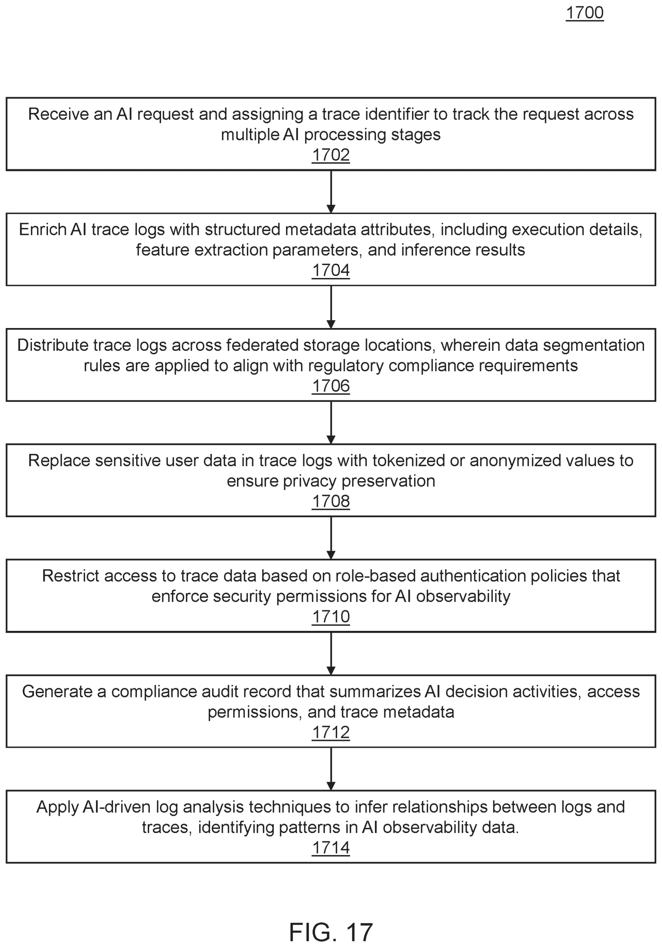

FIG. 17 illustrates a structured method 1700 for Al observability, privacy-preserving distributed tracing, and compliance monitoring by detailing the flow of AI-generated requests through a traceable and privacy-secured system. The process begins at step 1702, where an AI request is received, and a unique trace identifier is assigned to track the request across multiple AI processing stages. This ensures that all subsequent computations, transformations, and interactions related to the request are systematically logged and correlated.

At step 1704, the system enriches Al trace logs by embedding structured metadata attributes, including execution details, feature extraction parameters, and inference results. These metadata attributes enhance traceability, enabling observability tools to correlate specific AI decisions with the input data, feature transformations, and model outputs that led to them. The enriched logs help engineers, compliance officers, and auditors reconstruct AI workflows and analyze system behavior in a structured and interpretable manner.

Following this, step 1706 involves the distribution of trace logs across federated storage locations to align with regulatory compliance requirements. The system applies data segmentation rules, ensuring that sensitive Al trace data is stored according to jurisdictional regulations such as GDPR, HIPAA, and CCPA. This federated approach prevents unauthorized data movement across restricted boundaries while maintaining accessibility for authorized audits and debugging processes.

To enhance privacy, step 1708 implements sensitive data protection techniques by replacing user-specific information within trace logs with tokenized or anonymized values. This prevents direct exposure of personally identifiable information (PII) while still allowing Al observability systems to function effectively. Techniques such as pseudonymization, cryptographic hashing, and differential privacy ensure that sensitive attributes cannot be reverse-engineered while retaining trace data utility.

At step 1710, the system enforces role-based authentication policies that restrict access to Al trace data. These policies define granular security permissions, ensuring that different stakeholders-such as developers, compliance officers, and security personnel-can only access logs appropriate to their roles. For instance, engineers may be granted access to anonymized debugging logs, while compliance officers may require access to audit trails with regulatory-relevant details. This structured role-based access control (RBAC) mechanism aligns with zero-trust security principles, reducing the risk of unauthorized data exposure.

To support regulatory governance, step 1712 generates a compliance audit record summarizing AI decision activities, access permissions, and trace metadata. This immutable audit log serves as a regulatory record that documents AI decisions and access history, ensuring that Al observability practices align with legal and industry standards. By maintaining an encrypted and tamper-proof compliance log, the system enhances AI accountability and regulatory transparency.

Finally, at step 1714, AI-driven log analysis techniques are applied to infer relationships between logs and traces. The system utilizes machine learning models to detect hidden patterns, correlate decision pathways, and flag anomalies in Al observability data. This automated analysis enables proactive debugging, bias detection, and model performance optimization, ensuring that Al decisions remain explainable, transparent, and auditable.

Overall, FIG. 17 presents a comprehensive Al observability and compliance monitoring framework that integrates traceability, privacy preservation, role-based security, and Al-driven analysis. By leveraging federated storage, cryptographic protections, and automated compliance tracking, the system ensures that Al-generated decisions are securely logged, privacy-protected, and continuously monitored for compliance and performance improvements.

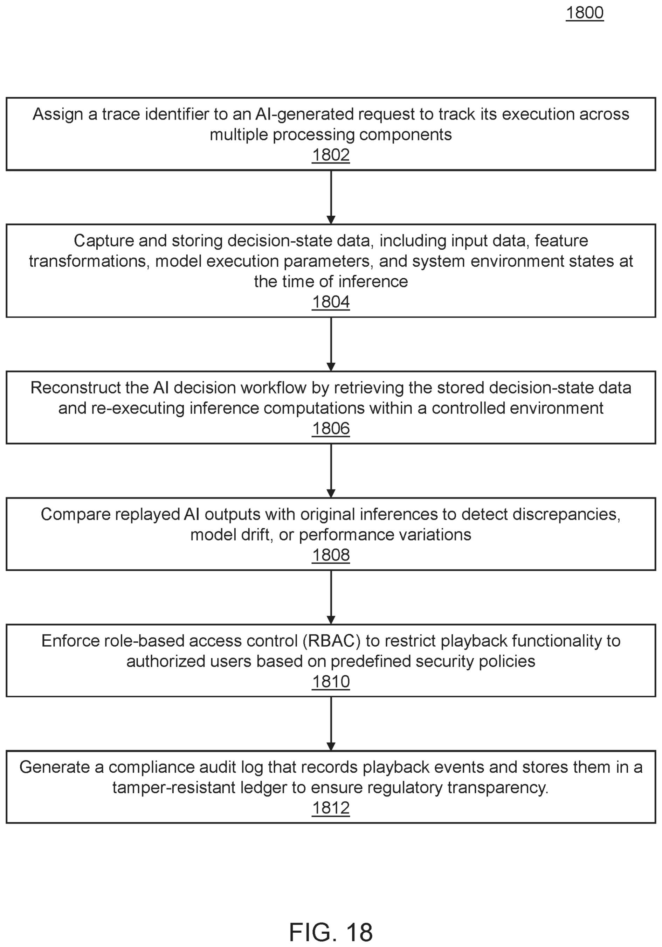

FIG. 18 illustrates method 1800 for Al trace playback and reproducibility, providing a structured approach for reconstructing and analyzing Al-generated decisions to facilitate debugging, compliance verification, and performance monitoring. This method enables an Al observability framework that ensures past Al decisions can be replayed and scrutinized under controlled conditions, allowing organizations to verify Al reliability, detect inconsistencies, and meet regulatory compliance standards.

The process begins at step 1802, where an Al-generated request is assigned a unique trace identifier to enable end-to-end tracking across multiple interconnected system components. This identifier propagates throughout the Al pipeline, linking all related execution steps, including data ingestion, feature extraction, model inference, and downstream processing events. By embedding trace identifiers within system logs, the observability framework enables automated correlation of Al inference events with corresponding logs, facilitating structured and comprehensive decision flow reconstruction.

At step 1804, the system captures and stores decision-state data, preserving the full computational context surrounding the Al decision. This includes raw input data, preprocessed feature representations, intermediate feature transformations, model execution parameters such as hyperparameter configurations and model weights, and system environment states, including resource availability, software versions, and concurrent AI task execution logs. By systematically storing this decision-state data, the system ensures that Al workflows can be fully reconstructed, preserving the exact conditions under which a given AI inference was made. This data acts as the foundation for Al trace replay, allowing forensic traceability and model behavior validation in both production and test environments.

Following this, at step 1806, the system reconstructs the Al decision workflow by retrieving the stored decision-state data and re-executing inference computations within a controlled, sandboxed execution environment. This controlled replay environment ensures that Al decision pathways remain consistent and reproducible, even when replayed under identical conditions. The system restores the same input feature vectors, model configurations, and execution states, ensuring that inference results are aligned with the original system behavior. Additionally, this re-execution process can simulate variations by allowing users to modify certain conditions-such as feature weights, system load, or training data-to test the AI model's robustness under different scenarios.

At step 1808, the system performs a comparative analysis between the replayed Al outputs and the original inferences, identifying potential discrepancies, model drift, or performance variations. If discrepancies are detected, the system analyzes potential contributing factors, such as changes in model parameters, outdated training data, feature degradation, or adversarial influences that may have affected inference consistency. Additionally, the system applies statistical and machine learning-based anomaly detection models to assess whether deviations exceed acceptable thresholds, triggering alerts for deeper investigation. This step plays a crucial role in bias detection, regulatory audits, and model validation, ensuring that Al systems remain consistent, explainable, and reliable over time.

To maintain security and compliance, at step 1810, the system enforces role-based access control (RBAC), restricting Al playback functionality to authorized personnel based on predefined security policies. Different stakeholders, including developers, compliance officers, auditors, and data scientists, receive tiered access permissions based on their respective roles. Developers may be granted access to anonymized debugging logs, while compliance officers have permission to retrieve fully decrypted audit trails for regulatory verification. Additionally, AI model auditors can leverage controlled replay functionality to compare historical and current inference behaviors for ethical Al assessment. The enforcement of RBAC mechanisms prevents unauthorized access to sensitive Al traces and ensures adherence to privacy laws such as GDPR, HIPAA, and CCPA.

At step 1812, the system generates a compliance audit log, which records each instance of AI trace playback, including who initiated the replay, what parameters were modified, and how the replayed output compared to the original inference. This audit log is stored in a tamper-resistant ledger, utilizing blockchain-based cryptographic hashing to ensure data integrity. By maintaining an immutable, timestamped record of Al trace replays, the system provides regulators and internal compliance teams with verifiable evidence of Al decision consistency and accountability. This feature is critical in highly regulated industries such as finance, healthcare, and autonomous systems, where Al decisions must be fully explainable and auditable.

Overall, FIG. 18 presents a comprehensive Al observability and traceability framework that integrates structured trace replay, controlled execution environments, security enforcement, and compliance monitoring. This method ensures that Al-generated decisions remain transparent, reproducible, and accountable, enabling organizations to investigate AI behavior, validate compliance with legal requirements, and optimize model performance. By leveraging Al playback capabilities, this system enhances the trustworthiness and reliability of AI models across diverse applications, providing a strong foundation for responsible AI deployment.

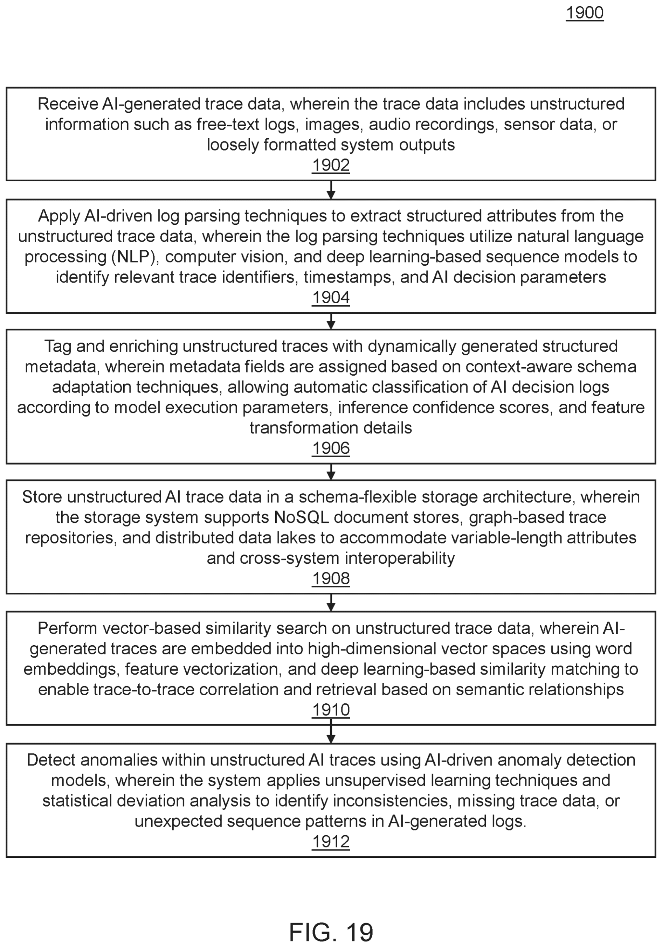

FIG. 19 illustrates the processing and analysis method 1900 for unstructured AI trace data within an observability system, demonstrating how unstructured logs, sensor data, images, and audio recordings are transformed into structured and actionable insights. The process begins at step 1902, where the system receives Al-generated trace data that lacks a predefined structure, such as free-text logs, image-based outputs, audio waveforms, and sensor telemetry. This initial step ensures that raw Al-generated information, regardless of format, is ingested into the observability system for further processing.

At step 1904, the system applies AI-driven log parsing techniques to extract meaningful structured attributes from the unstructured trace data. Using natural language processing (NLP), computer vision algorithms, and deep learning-based sequence models, the system analyzes and categorizes trace identifiers, timestamps, and Al decision parameters. NLP models help interpret textual logs, while image recognition techniques analyze Al-generated visual outputs, enabling automated trace metadata extraction.

Following this, at step 1906, the system tags and enriches unstructured traces with dynamically generated structured metadata. This metadata is assigned using context-aware schema adaptation techniques, allowing the system to classify Al logs according to model execution parameters, inference confidence levels, and feature transformation details. Unlike static logging systems, this dynamic metadata tagging ensures that Al-generated unstructured traces remain interoperable and queryable within the observability framework.

At step 1908, the system stores unstructured Al trace data in a schema-flexible storage architecture. This architecture incorporates NoSQL document stores, graph-based trace repositories, and distributed data lakes, allowing Al-generated logs to be stored in a format-independent manner. By supporting variable-length attributes and cross-system interoperability, the system ensures that diverse Al logs-ranging from structured text to multimodal data-can be retrieved, indexed, and analyzed efficiently.

In step 1910, the system enhances trace retrieval using vector-based similarity search techniques. AI-generated traces are embedded into high-dimensional vector spaces using methods such as word embeddings, feature vectorization, and deep learning-based similarity matching. This allows the system to perform semantic trace-to-trace correlation, enabling users to retrieve similar historical Al events based on content rather than rigid keyword-based searches. Such functionality is critical in applications where AI models evolve over time, making exact-matching techniques insufficient for effective trace retrieval.

Finally, at step 1912, the system detects anomalies within unstructured Al traces using Al-driven anomaly detection models. By applying unsupervised learning techniques and statistical deviation analysis, the system identifies irregularities, missing trace sequences, and unexpected AI-generated behavior. This allows for real-time error detection, bias identification, and compliance verification within unstructured Al observability logs. These insights are essential for organizations that need to ensure Al transparency, security, and reliability across complex, data-driven decision-making environments.

Overall, FIG. 19 presents a comprehensive Al-driven approach to processing unstructured trace data, integrating log parsing, structured metadata tagging, schema-flexible storage, vector-based similarity search, and Al-powered anomaly detection. This framework ensures that AI-generated traces-regardless of format-can be effectively structured, queried, and analyzed, enhancing the observability, security, and interpretability of Al decision-making processes.

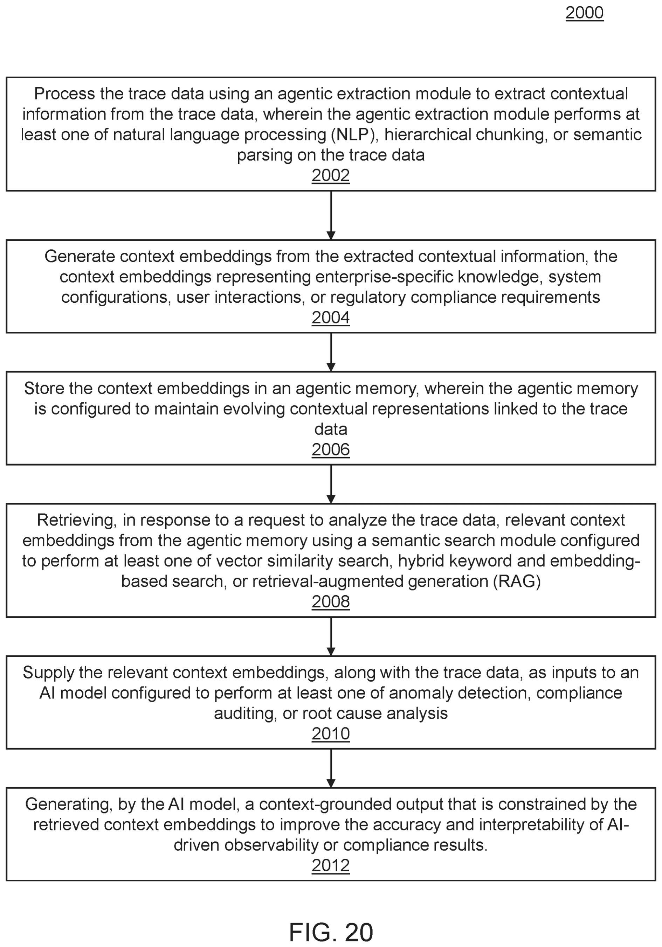

FIG. 20 illustrates a method 2000 for performing context grounding in an AI observability and distributed tracing system, wherein trace data is enriched with domain-specific context for improved AI-driven monitoring, anomaly detection, and compliance analysis.

At step 2002, the system processes trace data using an agentic extraction module, which operates as an Al-driven pipeline capable of multistage data extraction. The trace data may include structured telemetry (e.g., spans, logs), semi-structured artifacts (e.g., JSON-formatted logs), and unstructured records (e.g., free-text logs or document-based traces). The agentic extraction module employs a combination of pre-trained transformer-based NLP models (e.g., BERT, GPT encoders) to perform entity recognition, topic extraction, and dependency parsing on the trace data. Additionally, hierarchical chunking algorithms (e.g., dynamic windowing or sentence segmentation models) are applied to divide lengthy logs or trace payloads into semantically coherent segments. Where applicable, domain-specific parsers may extract compliance-relevant fields such as patient IDs, transaction codes, or API invocation patterns from the trace logs.

At step 2004, the system generates context embeddings from the extracted contextual information using vectorization models tailored to the operational domain. For example, sentence transformers or domain-adapted language models may encode extracted information into high-dimensional vectors that capture semantic and regulatory relevance. These embeddings may be enriched with additional metadata, such as trace identifiers, role-based access tags, or temporal information (e.g., sliding window context windows capturing historical trace activity). In some embodiments, the embeddings are post-processed using dimensionality reduction techniques (e.g., principal component analysis or t-SNE) to optimize storage and retrieval performance within the agentic memory.

At step 2006, the generated context embeddings are stored in an agentic memory, which may be implemented as a distributed vector database (e.g., FAISS, Pinecone, or Milvus) optimized for real-time embedding storage and search. The agentic memory may include an adaptive caching layer to retain frequently accessed embeddings and a graph-based metadata layer to track relationships between trace segments and contextual embeddings. This architecture allows the system to evolve dynamically over time, updating embeddings based on human feedback, Al-driven labeling, or updated business and compliance rules.

At step 2008, upon receiving a request to analyze trace data, the system activates a semantic search module to query the agentic memory. The semantic search module leverages approximate nearest neighbor (ANN) search algorithms to efficiently locate embeddings with high cosine similarity or Euclidean proximity to the current trace data. In some embodiments, the module supports hybrid retrieval, combining keyword-based filtering (e.g., regulatory terms or anomaly indicators) with embedding-based ranking, ensuring that the most relevant enterprise-specific and compliance-grounded context is surfaced. Additionally, retrieval-augmented generation (RAG) pipelines may be invoked, combining search outputs with generative models to synthesize context summaries tailored to the trace being analyzed.

At step 2010, the system supplies both the retrieved context embeddings and the original trace data as inputs to a downstream AI observability model, which may include supervised or unsupervised models configured for anomaly detection (e.g., autoencoders, isolation forests), compliance auditing (e.g., rule-based validators, NLP-based checkers), or root cause analysis (e.g., graph neural networks mapping causal trace links). The context embeddings act as a constraint and enrichment mechanism, guiding the Al model to prioritize enterprise-relevant and domain-specific trace features during analysis. For instance, when analyzing Al trace logs for healthcare workflows, embeddings related to medical codes, patient treatment patterns, or regulatory triggers (e.g., HIPAA violations) may bias the model's inference towards compliance-aware interpretations.

At step 2012, the AI model generates a context-grounded output, which may include detailed anomaly reports, compliance validation results, or prioritized root cause explanations. The output benefits from the integrated context embeddings, improving interpretability and reducing false positives by ensuring the analysis reflects enterprise-specific policies, historical trace patterns, and compliance requirements. In some embodiments, the context-grounded output is further annotated with confidence scores, actionable insights, and references to supporting contextual data retrieved from the agentic memory.

Throughout the process, the system may implement feedback loops where human reviewers, such as compliance officers or engineers, provide corrective input or accept/reject AI-generated recommendations. This feedback is ingested by the agentic memory to refine future contextual embeddings, enabling a self-learning observability system that continuously improves its contextual awareness and analysis accuracy.

Overall, FIG. 20 presents a highly modular and intelligent context grounding workflow integrated into an AI observability platform, enabling organizations to achieve domain-aware trace analysis, explainable Al observability, and regulatory-compliant monitoring across distributed, multi-cloud, and federated Al deployments.

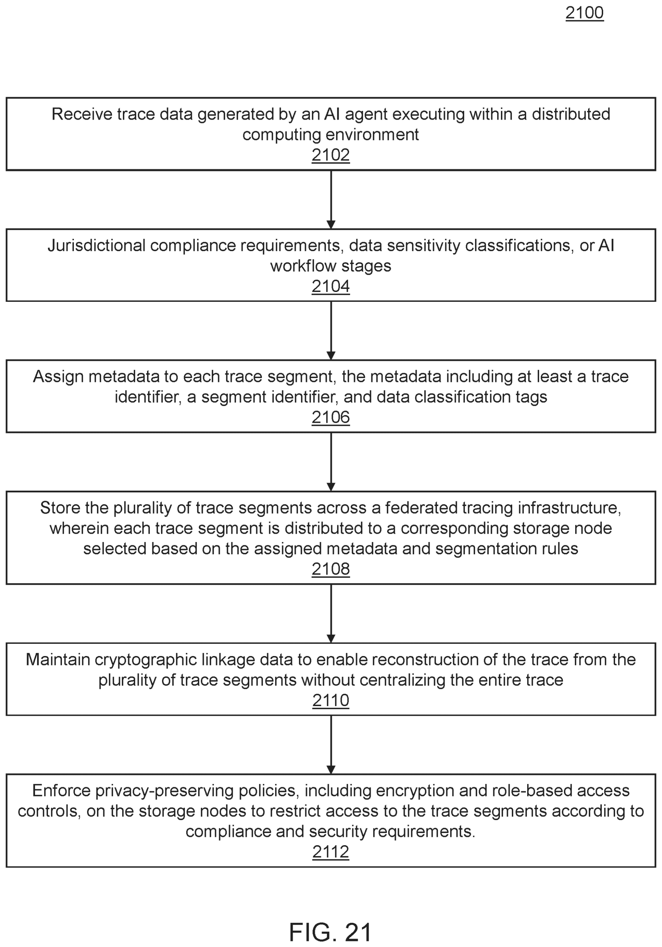

FIG. 21 illustrates a method 2100 for segmenting Al-generated trace data and securely storing the segmented traces in a federated tracing infrastructure.

At step 2102, the system receives trace data generated by an Al agent operating within a distributed computing environment. This trace data may originate from AI agents executing across hybrid cloud, multi-cloud, or edge-based infrastructures. The received trace data includes operational telemetry such as model input and output logs, inference timestamps, resource utilization metrics, and decision-making metadata associated with the Al agent's execution path.

In step 2104, the system applies one or more segmentation rules to partition the trace data into a plurality of trace segments. The segmentation rules may be dynamically determined based on jurisdictional compliance requirements (e.g., GDPR, HIPAA, or CCPA), data sensitivity classifications (e.g., confidential, restricted, or public), or AI workflow stages (e.g., data preprocessing, model inference, or post-processing). For example, trace segments containing personal health information may be segregated according to HIPAA-compliant storage boundaries, while trace segments containing model inference telemetry may be categorized by workflow stage.

At step 2106, metadata is assigned to each trace segment. The metadata includes at least a trace identifier (Trace ID) linking the segment to its parent trace, a segment identifier unique to the individual segment, and data classification tags reflecting sensitivity level, jurisdictional constraints, or AI workflow context. The metadata is formatted to facilitate downstream trace correlation and policy enforcement.

Step 2108 involves storing the segmented trace data across a federated tracing infrastructure comprising multiple storage nodes distributed across geographically or logically distinct environments. The system automatically selects the appropriate storage node for each trace segment based on the assigned metadata and segmentation rules. For instance, trace segments with European Union data may be routed to EU-based servers to comply with GDPR data residency requirements, while less sensitive segments may be distributed to cloud-based observability platforms for operational monitoring.

At step 2110, the system maintains cryptographic linkage data, such as hash chains or Merkle trees, that enable authorized systems to reconstruct the full trace from its distributed segments without centralizing the entire trace dataset. This ensures that while trace segments are physically stored across federated nodes, they remain logically linkable through secure and verifiable cryptographic references, supporting efficient Al trace playback, audit, and analysis.

Finally, at step 2112, privacy-preserving policies are enforced across the federated infrastructure. These policies include encrypting trace segments at rest and in transit using techniques such as AES-256 or homomorphic encryption. Role-based access controls (RBAC) are applied at each storage node, restricting trace segment access to authorized personnel based on organizational roles, security clearance, or compliance-driven access tiers. By embedding security and privacy mechanisms into the federated storage process, the system ensures that trace data remains protected against unauthorized access while supporting regulatory compliance and secure observability.

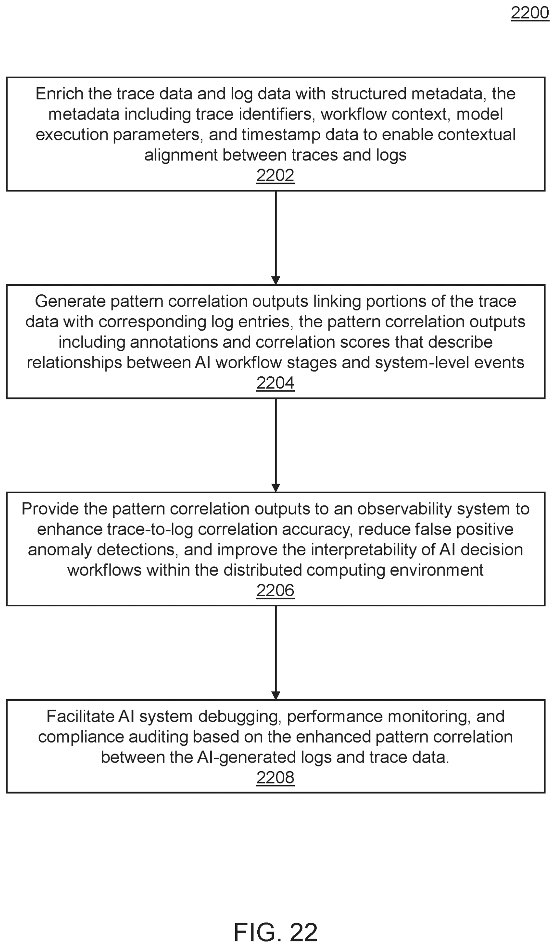

FIG. 22 illustrates a method 2200 for detecting patterns between Al-generated trace data and log data to enhance AI observability in distributed computing environments.

At step 2202, the system enriches both the trace data and the corresponding log data with structured metadata. The trace data may include spans representing distinct AI workflow stages, while the log data may comprise system-level events, such as model inputs, outputs, resource usage statistics, and exception logs. The metadata added to each trace and log record includes trace identifiers to link individual spans and logs to a common trace, workflow context to capture the operational environment of the Al agent, model execution parameters such as hyperparameters or configuration settings, and precise timestamp data to allow temporal alignment of the trace and log events. The enrichment process may be performed using an Al observability agent embedded within the Al pipeline, which extracts contextual information from the AI system in real-time and appends the metadata to the telemetry records.

At step 2204, the enriched trace data and log data are analyzed to generate pattern correlation outputs. This analysis may involve applying machine learning models, such as unsupervised clustering algorithms, semantic embedding models, or anomaly detection frameworks, to detect correlations and recurring patterns between the trace spans and corresponding log entries. For example, the system may identify that a specific model inference stage in the trace data consistently correlates with a pattern of system-level errors captured in the logs. The generated pattern correlation outputs include contextual annotations and correlation scores that describe the relationships between Al workflow stages (e.g., model decision points or agentic state transitions) and system-level events. These outputs may also include confidence levels to quantify the strength of the detected correlations.

In step 2206, the pattern correlation outputs are provided to an observability system, such as an AI observability dashboard or monitoring platform. The enriched outputs enhance the trace-to-log correlation accuracy by aligning Al workflow stages directly with relevant log events, thereby reducing false positives in anomaly detection processes. This enriched correlation further improves the interpretability of Al decision-making workflows by providing contextual insights into how AI agents interact with distributed system components.

Finally, at step 2208, the observability system leverages the pattern correlation outputs to facilitate Al system debugging, performance monitoring, and compliance auditing. For instance, engineers may use the enriched trace-log correlations to quickly identify the root causes of system anomalies or AI model performance degradations. Compliance auditors may rely on the enriched metadata and correlation outputs to verify that AI workflows comply with privacy and security requirements, such as GDPR, HIPAA, or internal data governance policies.

A computer system implementing method 1500, method 1600, method 1700, method 1800, method 1900, method 2000, method 2100, and/or method 2200 functions as a comprehensive AI observability and compliance monitoring platform. This system operates within a cloud-based, hybrid, or edge-computing environment, ensuring traceability, privacy protection, AI decision reproducibility, and unstructured data processing. The software and hardware components work together to capture, analyze, store, and retrieve AI-generated traces while enforcing security, compliance, and privacy-preserving techniques.

Overall, the computer system may implement methods 1500, 1600, 1700, 1800, 1900, 2000, 2100, and/or 2200 to create a scalable, secure, and privacy-compliant Al observability framework. By leveraging federated tracing, cryptographic security measures, Al-driven log correlation, and compliance-aware data storage, the system ensures that Al-generated decisions remain fully traceable, explainable, and auditable across distributed, multi-cloud, and hybrid computing environments.

The foregoing description provides a detailed explanation of various embodiments of the invention, illustrating how the system and methods can be implemented to enhance Al observability, privacy-preserving distributed tracing, and compliance monitoring. The disclosed embodiments demonstrate the ability to track Al-generated traces, ensure data security, facilitate regulatory compliance, and enable efficient Al trace replay and anomaly detection. While specific examples, architectures, and implementation details have been provided to illustrate the invention, those skilled in the art will recognize that various modifications, enhancements, and alternative implementations may be applied without departing from the scope of the invention.

It should be understood that the methods and systems described herein may be implemented in software, hardware, firmware, or a combination thereof. The described processes may be executed in a distributed computing environment, utilizing cloud-based infrastructures, edge processing, or hybrid deployments. Additionally, various AI models, privacy-preserving techniques, and security protocols may be integrated to adapt the system to different use cases, industry regulations, and technological advancements.

The terminology used herein is intended to describe specific embodiments and should not be construed as limiting. The scope of the invention is not restricted to the particular implementations disclosed but extends to all modifications, equivalents, and variations encompassed by the appended claims. The claims that follow define the metes and bounds of the invention, and all equivalents are intended to be covered within their scope.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A computer-implemented method for AI observability and privacy-preserving distributed tracing, the method comprising:
assigning a unique trace identifier to an Al-generated request and propagating the identifier across multiple processing components in a distributed system;
enriching Al-generated logs with structured metadata attributes, wherein the metadata includes model execution parameters, inference confidence levels, feature extraction details, and processing timestamps;
applying trace segmentation policies to distribute Al trace logs across multiple storage locations, wherein jurisdictional compliance rules are enforced to restrict trace data movement based on privacy laws;
utilizing privacy-preserving transformations, wherein personally identifiable information (PII) within Al traces is redacted, tokenized, or encrypted using homomorphic encryption or differential privacy techniques before storage;
implementing role-based access control (RBAC) and authentication policies, wherein trace data retrieval is restricted based on user roles, organizational policies, and access permissions;
generating a compliance audit log separately from operational Al traces, wherein compliance records document AI decision-making activities, trace access history, or regulatory reporting metrics;
analyzing Al logs and trace data using machine learning-based correlation models, wherein the model detects relationships between logs and traces even in cases where explicit trace identifiers are missing, facilitating automated debugging and Al observability improvements.

2. A computer-implemented method for AI observability and privacy-preserving distributed tracing, the method comprising:
generating a trace identifier for an AI request and associating the identifier with multiple Al processing stages;
tagging AI-generated logs with structured metadata attributes, including model identifiers, timestamps, and inference confidence scores;
storing trace data across a federated tracing infrastructure, wherein jurisdictional segmentation policies are enforced based on compliance requirements;
applying privacy-preserving techniques to trace logs, wherein sensitive attributes are redacted, tokenized, or encrypted using homomorphic encryption or differential privacy mechanisms;
implementing access control policies to restrict trace data retrieval based on user roles and authentication credentials;
generating regulatory audit logs separately from Al operational traces, wherein compliance records document AI decision events, system modifications, and access history; and
utilizing a machine learning-based analysis model to detect patterns between Al-generated logs and trace data, enabling automated correlation of observability records.

3. The method of claim 1, wherein the trace identifier is propagated across an OpenTelemetry-based distributed tracing framework for seamless correlation across microservices.

4. The method of claim 1, wherein AI-generated trace logs are encrypted before distribution using homomorphic encryption, allowing computations on encrypted data without decrypting it.

5. The method of claim 1, wherein differential privacy techniques introduce mathematical noise into trace records to prevent the re-identification of individual users.

6. The method of claim 1, wherein all trace access requests are recorded in an immutable, blockchain-based audit log to prevent tampering and ensure regulatory compliance.

7. The method of claim 1, wherein AI logs and trace data are analyzed using unsupervised machine learning algorithms to detect hidden patterns and anomalies in AI decision workflows.

8. The method of claim 1, wherein dynamic trace segmentation rules adjust data storage locations based on real-time system performance metrics, network load balancing, and compliance triggers.

9. The method of claim 1, wherein end-to-end encryption techniques secure Al trace data while it is transmitted between cloud-based, edge, and on-premise Al components.

10. The method of claim 1, wherein the compliance audit log automatically generates regulatory compliance reports summarizing Al decision transparency, model accountability, and trace access history.

11. The method of claim 1, wherein tokenized trace logs allow authorized compliance officers to selectively re-identify AI decisions without exposing full trace data.

12. The method of claim 1, wherein dynamic trace sampling policies optimize storage and observability efficiency by capturing only high-risk transactions and Al decision events.

13. The method of claim 1, wherein trace metadata tagging policies record Al model versions, training dataset identifiers, and inference quality metrics for improved debugging and monitoring.

14. The method of claim 1, wherein homomorphic encryption techniques enable secure computations on encrypted Al trace logs without exposing raw data.

15. The method of claim 1, wherein differential privacy techniques introduce randomized noise to Al observability metrics to ensure compliance with GDPR, HIPAA, and CCPA privacy regulations.
